# EUROPEAN PATENT APPLICATION

(11) **EP 4 595 749 A1**
(43) Date of publication of application: **06.08.2025**
(21) Application number: 24305191.9
(22) Date of filing: 02.02.2024
(51) Int. Cl.: A01N 25/18, A01N 37/02, A01N 49/00

(54) **METHOD OF RELEASING A SEMIOCHEMICAL IN THE ENVIRONEMENT BY PASSIVE DIFFUSION, SYSTEM AND MEANS, ESPECIALLY STICKS, TO THIS END, AND USES THEREOF**

(71) Applicant: Signs, 84400 Apt (FR)
(72) Inventor: KUENTZ, Vanessa, 84440 Apt (FR); RODRIGUEZ, Marion, 84440 Apt (FR); PAGEAT, Patrick, 84440 Apt (FR)
(74) Representative: Ernest Gutmann - Yves Plasseraud S.A.S.

(57) **Abstract**

The invention relates to a method of releasing a semiochemical in an environment by passive diffusion, wherein the method comprises contacting a stick presenting with an alveolar internal structure extending over its longitudinal section with a composition of semiochemical, where the composition of semiochemical comprises a solvent that is an alcohol or an ester, preferably an alcohol or an ester with a density inferior to 1, a kinematic viscosity inferior or equal to 15 mm2/s at 20°C and/or a dynamic viscosity inferior or equal to 14 mPa/s at 20°C, and which is volatile at room temperature, and enabling the stick to be filled by capillary action with the said composition of semiochemical and to release the said composition of semiochemical in the environment over time. The stick can be made of the stem of a palm tree of the *Calamus* genus. The invention also relates to a kit for passive diffusion of a semiochemical, wherein said kit comprises one or more sticks and a composition of semiochemical, optionally with a further container for holding the composition of semiochemical and the sticks while used. The invention also relates to a stick or a set or a kit comprising a plurality of sticks filled with a composition of semiochemical or the use of a kit, or of a filled stick, for releasing a semiochemical in the environment.

## Description

The present invention pertains to the field of semiochemicals, and concerns in particular a method for passively releasing a semiochemical in an environment wherein an animal, notably a mammal, may be present. The method of the invention operates by passive diffusion.

The invention relates to such a method, a system and means, such as sticks, to this end, and uses of these means in the field of semiochemical release/diffusion in an environment, said semiochemicals being therefore rendered available in the environment.

Semiochemicals according to the invention are multicompound mixtures, described for the first time notably by Silverstein, R.M.(1977) "Complexity, diversity and specificity of behavior-modifying chemicals; examples from Coleoptera and Hymenoptera," Chemical Control of Insect Behavior:Theory and Application. Editors H.H. Shorey & J.J.McKelvey pp.231-251 New York: Plenum Press). Semiochemicals are chemicals emitted by a plant or an animal that evokes a behavioral or physiological response in another organism. When the semiochemical affects an individual of the same species, it is called a pheromone (Pheromones are also termed "intraspecific" semiochemicals. (Wyatt T.D.(2003) "Pheromones and Animal Behavior. Communication by smell and taste,"pp.1-4 New York: Cambridge University Press). When the semiochemical affects an individual of a different species ("interspecies" semiochemicals), it is called an allelochemical. Within allelochemicals, an allomone is an allelochemical that triggers a reaction from the target species, said reaction being favorable to the species releasing the allomone (the contrary is a kairomone).

Pheromones are substances released by the body of particular species that cause a predictable reaction by another individual of the same species, which may serve, for example, as a specific attractant, social communicator, sexual stimulant, appeasement and effects basic animal behavior. There are different types of pheromones such as aggregation pheromones that function in defense against predators, mate selection and overcoming host resistance by massive attack; alarm pheromones, which are released when attacked by a predator; epideictic pheromones, which are recognized by insects for signaling other insect that they should clutch elsewhere; releaser pheromones, which are attractant pheromones that some organisms use to attract mates from a distant of two miles or more; signal pheromones, which cause short term changes such as releasing a neurotransmitter which activates a response; primer pheromones, which trigger a change of developmental events; territorial pheromones, which mark the boundary of an animal's territory; trail pheromones, prevalent in insects, such as ants that lay down pheromones as they return to their nest with food; information pheromones, which are indicative of an animal's identity or territory; sex pheromones, which indicate the availability of the female for breeding. Pheromones have been described to date in a large amount of animals, including animal used in breeding such as horses, pigs, hens, but also companion animals such as cats and dogs.

Examples of compositions comprising semiochemicals are given in U.S. Patent 5,709,863, which discloses a composition capable of preventing cats from urinating in a marked spot including a compound of vegetal origin that has an attractive effect on cats. Of note, while this composition has been described to have the capability to act in some instances to have a calming effect on cats, it is not a so-called "appeasing pheromone" because its lacks the "appeasing pheromone" signature later discovered in the field. As other examples, U.S. Patents 6,054,481, 6,077,867, 6,169,113, 6,384,252 and 7,723,388 all describe various mammalian and avian appeasing pheromones.

As of now, current semiochemicals for companion animals are distributed in the environment where such animal is present or may be present using an electric diffuser. Electrics diffusers showed limitations as they require electrical outlets and may release liquid on surrounding objects and walls. Plus, they can release toxic volatile compounds when the solvent used is of this category.

It is also known diffuser blocks, which have been used for marketed products such as SecurePig^{®}, SecurePoultry^{®} and SecureRabbit^{®}. They showed effectiveness in releasing pheromones in the air, mostly in a breeding context. However, it has been found that some specific molecules composing some pheromone signature were chemically unstable in such block gels, leading to the disappearance of half the pheromone in a few weeks.

A need therefore remained to design a new system for distributing semiochemicals, in particular pheromones and more particularly pheromones that are appeasing to mammals, especially companion animals (such as cats and dogs, rabbits, rodents, birds) or to the human, which would overcome the limitations shown in the art, and accordingly propose new manners of making semiochemicals available to their target animals, especially mammals, including companion animals, especially as mentioned herein, and the human.

To this end, the invention concerns a method of releasing a semiochemical in an environment by passive diffusion, wherein the method comprises the steps of:
a. Contacting a stick presenting with an alveolar internal structure extending over the longitudinal section of said stick with a composition of semiochemical, especially a liquid composition of semiochemical, in particular a semiochemical that is a pheromone or an allelochemical, where the composition of semiochemical comprises a solvent that is an alcohol or an ester, in particular an alcohol or an ester with a density inferior to 1, a kinematic viscosity inferior or equal to 15 mm²/s at 20°C and/or a dynamic viscosity inferior or equal to 14 mPa/s at 20°C, and which is volatile at room temperature, preferably a solvent which is non-toxic to an animal especially a mammal, in particular is 3-methoxy-3-methyl-1-butanol, and
b. Enabling the stick to be filled by capillary action with the said composition of semiochemical and to release the said composition of semiochemical in the environment in particular in the air over time.

A synonym of "releasing" in the context of the previous paragraph would be "distributing". According to a particular embodiment, the invention intends to release or distribute the content of a semiochemical composition, i.e., a semiochemical signature, in the environment, in an "unaltered" form, which means that release or distribution occurs so that all active ingredients initially present in the semiochemical composition to be distributed, are present and found in the released or distributed signature in the environment, while operating by passive diffusion.

By "enabling" in "enabling the stick to be filled by capillary action with the said composition of semiochemical and to release the said composition of semiochemical in the environment", it is meant that it is sufficient for the method to be carried out to leave the stick, if appropriate under suited conditions, for example by being borne by a holder or container, or by a support with the same function, in the environment in order to obtain the result of release or distribution of the active ingredient of the semiochemical composition. In other words, since the system described herein functions by passive diffusion, there is no other action to be made than letting the stick being filled by capillary action to operate.

By "stick presenting with an alveolar internal structure extending over the longitudinal section of said stick" it is meant that the stick has a structure rendering it suited to assist the release in an environment, especially in the air, of a semiochemical appropriately formulated, especially as a liquid composition according to the disclosure, without any other action than letting capillary action take place when the stick is contacted with a composition of semiochemical, especially a liquid composition of semiochemical. Capillary action is the process of a liquid moving in a space without the assistance of, or even in opposition to, any external forces like gravity. The effect can be seen for example in the drawing up of liquids in a thin tube, in porous materials such as paper and plaster, or in a biological tissue such as a plant stem. According to the invention it enables the drawing up of liquids through the alveolar internal structure extending over the longitudinal section of the stick, from the bottom toward the top and especially up to the top (over the whole length of the stick structure) of said stick while the bottom portion of the stick is immersed in said liquids in a container. It will be understood that an alveolar internal structure within a stick leaves spaces for holding, retaining, a liquid for a time necessary for the device to function, up to the moment of release or distribution in the environment, especially the air. In the present disclosure the stick may also be designated as a rod.

By "density inferior to 1" it is meant a density at is inferior to the density of water. According to particular embodiments, the density of the solvent is inferior to 1 (by reference to the density of water at a temperature of 25°C), in particular inferior to any one of 0.9, 0.8, 0.7, 0.6, 0.5 or any range between these values taken as boundaries. If units are used, g/cm³ can be used, or any unit derived from such a unit. For instance, the density of 3-methoxy-3-methyl-1-butanol is 0.92 g/cm³ as readily retrievable by the skilled person using available chats, tables, common scientific guidance.

According to a particular embodiment, the density is between 0 and 1, in particular is between 0 and 0.5, or between 0 and 0.6, or between 0 and 0.7, or between 0 and 0.8, or between 0 and 0.9, or between any one of the boundaries values disclosed herein, one value being taken as a bottom range value, and another value being taken as an upper range value.

By "kinematic viscosity inferior or equal to 15 mm²/s at 20°C", it can be inferred that the kinematic viscosity is inferior or equal to 1.5 × 10⁻⁵ m²/s at 20°C in International System unit. For instance, the kinematic viscosity of 3-methoxy-3-methyl-1-butanol is 13.59 mm²/s at 20°C, or 1.359 × 10⁻⁵ m²/s at 20°C as readily retrievable by the skilled person using available chats, tables, common scientific guidance.

According to particular embodiments, the kinematic viscosity of the solvent is inferior or equal to 15 mm²/s (or corresponding units per the guidance provided herein) at 20°C, in particular inferior or equal to 10 mm²/s (or corresponding units per the guidance provided herein) at 20°C or inferior or equal to 5 mm²/s (or corresponding units per the guidance provided herein) at 20°C, or between any range taken between these values taken as boundaries.

The kinematic viscosity of the solvent used can be assessed by common methods in the art, readily available to the skilled person per his knowledge, e.g., a gravimetric capillary can be used.

According to a particular embodiment, the kinematic viscosity is between 0 and 15 mm²/s at 20°C (other corresponding units can be substituted, as shown herein), in particular is between 0 and 15, or between 0 and 14, or between 0 and 13, or between 0 and 12, or between 0 and 11, or between 0 and 10, or between 0 and 9, or between 0 and 8, or between 0 and 7, or between 0 and 6, or between 0 and 5, or between 0 and 4, or between 0 and 3, or between 0 and 2, or between 0 and 1, or between any one of the boundaries values disclosed herein, one value being taken as a bottom range value, and another value being taken as an upper range value.

By "dynamic viscosity inferior or equal to 14 mPa/s at 20°C", it can be inferred that the dynamic viscosity is inferior or equal to 0.014 Pa/s or 0.014 kg/m/s at 20°C in International System units. For instance, the dynamic viscosity of 3-methoxy-3-methyl-1-butanol is 12.50 mPa/s at 20°C, or 0.0125 Pa/s or 0.0125 kg/m/s at 20°C as readily retrievable by the skilled person using available chats, tables, common scientific guidance.

According to particular embodiments, the dynamic viscosity of the solvent is inferior or equal to 14 mPa/s (or corresponding units per the guidance provided herein) at 20°C, in particular inferior or equal to 10 mm²/s (or corresponding units per the guidance provided herein) at 20°C or inferior or equal to 5 mm²/s (or corresponding units per the guidance provided herein) at 20°C, or between any range taken between these values taken as boundaries.

The dynamic viscosity of the solvent used can be assessed by common methods in the art, readily available to the skilled person per his knowledge, e.g., a viscometer can be used.

According to a particular embodiment, the dynamic viscosity is between 0 and 14 mPa/s at 20°C (other corresponding units can be substituted, as shown herein), in particular is between 0 and 14, or between 0 and 13, or between 0 and 12, or between 0 and 11, or between 0 and 10, or between 0 and 9, or between 0 and 8, or between 0 and 7, or between 0 and 6, or between 0 and 5, or between 0 and 4, or between 0 and 3, or between 0 and 2, or between 0 and 1, or between any one of the boundaries values disclosed herein, one value being taken as a bottom range value, and another value being taken as an upper range value.

Other possible solvents are, for example, a solvent such as isopentyl acetate (CAS W205508) (otherwise known as acetic acid 3-methylbutyl ester or Isoamyl acetate), or isoamyl alcohol (Cas W205710) (otherwise known as 3-methylbutan-1-ol).

Accordingly, in particular embodiments, the solvent is selected amongst 3-methoxy-3-methyl-1-butanol, isopentyl acetate and isoamyl alcohol (or corresponding other names, as described herein).

Accordingly, in a particular embodiment, the solvent is 3-methoxy-3-methyl-1-butanol.

In another particular embodiment, the solvent is isopentyl acetate (or a compound identified by the corresponding other names mentioned herein).

In another particular embodiment, the solvent is isoamyl alcohol (or a compound identified by the corresponding other names mentioned herein).

By "volatile at room temperature" it is made reference to a temperature that is conventionally a temperature from 15° to 25°C (59° to 77°F), or in a restricted view from 20° to 25°C and by volatile, it is meant a solvent that is liquid at room temperature and easily vaporizes into a gas. Concretely, volatility may be assessed by a measured parameters such vapor pressure, and it can be said that a compound, especially solvent, is volatile if its vapor pressure is 0.01 kPa or more at 20°C, or 0.05 kPa or more at 20°C or 0.10 kPa or more at 25°c, in particular 0.12 kPa or more at 25°C. For instance, the vapor pressure of 3-methoxy-3-methyl-1-butanol is 0.12 kPa at 25°C, 0.07 kPa at 20°C as readily retrievable by the skilled person using available chats, tables, common scientific guidance. In general, the volatility of a solvent is commonly available on technical charts available to the skilled person, and if necessary on technical data sheets for the same (available from the manufacturers/sellers). Vapor pressure can conventionally be measured, an example is the OECD test guideline 104 at the time where present description is written.

According to a particular embodiment, the vapor pressure is between 0 and 14 mPa/s at 20°C (other corresponding units can be substituted, as shown herein), in particular is between 0 and 14, or between 0 and 13, or between 0 and 12, or between 0 and 11, or between 0 and 10, or between 0 and 9, or between 0 and 8, or between 0 and 7, or between 0 and 6, or between 0 and 5, or between 0 and 4, or between 0 and 3, or between 0 and 2, or between 0 and 1, or between any one of the boundaries values disclosed herein, one value being taken as a bottom range value, and another value being taken as an upper range value.

These parameters ensure that a solvent can migrate by capillarity in a stick as defined herein.

Exemplary technical data sheets, especially safety data sheets, which demonstrate the values indicated for the parameters detailed above, are, for example:
- For 3-methoxy-3-methyl-1-butanol, the safety data sheet established on June 01, 2022 for article number 1PKN, CAS number 56539-66-3 by manufacturer ROTH, or the safety data sheet version 6.5 revised on July 07, 26 for product number 408069 manufactured by Sigma-Aldrich (Merck), CAS number 56539-66-3,
- For isopentyl acetate, the safety data sheet established on February 24, 2016 revised August 9, 2022 for article number 7341, CAS number 123-92-2 by manufacturer ROTH, or the safety data sheet version 6.4 revised on October 27, 2023 for product number 79857 manufactured by Sigma-Aldrich (Merck), CAS number 123-92-2, or the safety data sheet version 6.4 revised on August 30, 2023 for product number 306967, CAS number 123-92-2, manufactured by Sigma-Aldrich (Merck),
- For isoamyl alcohol, the safety data sheet established on June 27, 2016 revised August 9, 2022 for article number T870, CAS number 123-51-3 by manufacturer ROTH, or the safety data sheet version 6.8 revised on January 03, 2024 for product number W205702 manufactured by Sigma-Aldrich (Merck), CAS number 123-51-3, or the safety data sheet version 6.8 revised on January 03, 2024 for product number W205710, CAS number 123-51-3, manufactured by Sigma-Aldrich (Merck).

These elements demonstrate that the skilled person can readily determine solvent suited for the purpose described herein, if necessary by ultimately assaying the means intended for the invention especially for the intended method following the guidance provided in the experimental section herein.

Since when inhaled, a gas can cause a state of intoxication, a solvent to be used is preferably non-toxic to the respiratory tract of an animal especially a mammal.

By "non-toxic" it is in particular meant a solvent that fulfils regulation requirements such as illustrated by the REACH Regulation regulating the manufacture, import and use of chemicals on the European Union territory, with respect to hazards associated with the respiratory tract. Nowadays, there is a general tendency to provide pheromones based on natural, non-harmful and environmentally-friendly products. In other words, a solvent preferably falls out the scope of the "REACH regulation", i.e., Regulation (EC) No 1223/2009 of the European Parliament and of the Council of November 30, 2009 on cosmetic products" as in force on the day of filing of present application, i.e., is a solvent with no hazard classification under REACH regulations for the mentioned criteria.

According to a particular embodiment, a solvent to be used both fulfils regulation requirements illustrated by the REACH Regulation and is non toxic to the respiratory tract of an animal especially a mammal, which is the type of toxicity that is to be assessed in the context of present invention, meaning that other types of toxicity may not, in a particular embodiment are not, relevant (and are disclaimed).

According to a particular embodiment, the solvent is 3-methoxy-3-methyl-1-butanol. 3-methoxy-3-methyl-1-butanol has for molecular formula C₆H₁₄O₂ and a molar mass of 118.2 g/mol. The kinematic viscosity, dynamic viscosity and density parameters are as given herein.

According to a particular embodiment of the invention, a solvent of choice for dissolving a semiochemical composition in combination with a "stick presenting with an alveolar internal structure extending over the longitudinal section of said stick" is 3-methoxy-3-methyl-1-butanol. Such a solvent has a further advantage that is has a low toxicity and is biodegradable. Therefore, it can be used in European Ecolabel formulations.

According to a particular aspect a semiochemical composition concerned by a method or used within present invention is any semiochemical which comprises at least methyl palmitate and methyl oleate, in particular any semiochemical of the same which can be solubilized in a solvent as described herein, in particular which can be solubilized in 3-methoxy-3-methyl-1-butanol.

The semiochemicals are handled as "solutions" in the present invention: they (the ingredients making its signature) are dissolved as a solute in a solvent provided in a larger proportion with respect to the solute, in order to obtain a homogeneous liquid: "the solution". The homogeneity of the solution can conventionally be observed visually. It can be verified by quantification through external calibration of the semiochemical in the said solution, by gas phase chromatography with a flame ionization detector (GC/FID). FID is a detector typically used with GC where the gaseous eluent is burnt in a flame, producing gas-phase ions of the analytes that are detected using an electrode. If the mass percentage expected for the active ingredients and signature of the semiochemical is found, then a good dissolution has been obtained.

According to particular embodiments, when reference is made herein to a composition comprising a solvent, in particular where the ingredients described in any embodiment disclosed herein are present in a dissolved form in the said composition, per the above-defintion, then such a composition can be referred to as a "solution", as a synonym. This applies to the whole description mutatis mutandis. A solution can further comprises an antioxidant, as detailed herein for a composition.

In a particular embodiment, the semiochemical composition is a pheromone composition further comprising dimethyl pimelate and dimethyl azelate in addition to the base ingredients mentioned above.

In a particular embodiment, the semiochemical composition is an appeasing pheromone composition comprising at least the following active ingredients: methyl myristate, methyl palmitate, methyl oleate and methyl linoleate, optionally further comprising dimethyl pimelate and dimethyl azelate.

In a particular embodiment, the semiochemical composition is an appeasing pheromone composition comprising at least the following active ingredients: methyl myristate, methyl palmitate, methyl oleate and methyl linoleate, optionally further comprising one or more of an ingredient selected among methyl laurate, methyl pentadecanoate, methyl stearate, dimethyl pimelate and dimethyl azelate, in particulat at least two, three or four of the further listed ingredient, according to any possible embodiment of the possible combinations. Ingredients can be as disclosed in an example provided herein, within ranges as otherwise disclosed herein throughout the text.

In a particular embodiment, the semiochemical composition is an appeasing pheromone composition comprising the following active ingredients: methyl myristate, methyl palmitate, methyl oleate, methyl linoleate, dimethyl pimelate and dimethyl azelate.

In a particular embodiment, the semiochemical composition is an appeasing pheromone composition which further comprises, in addition to the compositions described above, one or more active ingredient(s), selected from the group of: methyl laurate, methyl pentadecanoate and methyl stearate. These active ingredients can more specifically direct the appeasing pheromone composition to a particular species (dog, cat and human, as shown later in the text).

It will be understood that when reference is made in the present text to "a semiochemical" (including when the plural is used) it is meant a reference to the "signature" of active ingredients it comprises. In particular, it makes reference to said "signature" in an unaltered form, i.e., all mentioned active ingredients are present and found.

When it is made reference to "a semiochemical composition" (plural included) it is made the semiochemical dissolved in a liquid or sprayed in the air, i.e., the semiochemical as handled for producing its effects as intended.

According to particular embodiments, the active ingredients of the semiochemical composition are, when present, found in the semiochemical composition:
a. from 2 to 13% (w/w) for methyl myristate,
b. from 12 to 32% (w/w) for methyl palmitate,
c. from 28 to 69% (w/w) for methyl oleate
d. from 4 to 37% (w/w) for methyl linoleate,
e. from 1 to 6% (w/w) for methyl laurate,
f. from 1 to 6% (w/w) for methyl pentadecanoate,
g. from 4 to 15% (w/w) for methyl stearate,
h. from 5 to 15% (w/w) for dimethyl pimelate, and
i. from 5 to 10% (w/w) for dimethyl azelate,
the sum of active ingredients present in said semiochemical composition totaling 100%, being solubilized within the solvent of the semiochemical composition and the semiochemical composition optionally comprising further excipients.

This can be summarized as shown in the below table:

| | Molecular Formula | Lower range | Higher range |
|---|---|---|---|
| methyl palmitate | C17H34O2 | 12 | 32 |
| methyl oleate | C19H36O2 | 28 | 69 |
| methyl myristate | C15H30O2 | 2 | 13 |
| methyl linoleate | C19H34O2 | 4 | 37 |
| methyl laurate | C13H26O2 | 1 | 6 |
| methyl pentadecanoate | C16H32O2 | 1 | 6 |
| methyl stearate | C19H38O2 | 4 | 15 |
| dimethyl pimelate | C9H16O4 | 5 | 15 |
| dimethyl azelate | C11H20O4 | 5 | 10 |

Of note, "excipient" in the above context embeds all type of chemicals that can be commonly found in such semiochemical composition, as now well known by the skilled person in the field. Excipients embed any "acceptable vehicle", in particular any acceptable vehicle, let it be a pharmaceutically or veterinary vehicle that does not interfere with the activity of semiochemical composition and preferably has a low toxicity or is not toxic to animals. They can be solvents, dispersion media, absorption delaying agents and the like. Pharmaceutically acceptable vehicles are for example described in Remington's Pharmaceutical Sciences 21^{st} edition 2005. An excipient can be added to a semiochemical composition during its formulation.

According to a particular embodiment, an excipient enables the composition to keep the semiochemical properties of the composition when released in the environment through the stick.

According particular embodiments, a semiochemical composition concerned by a method or used within present invention is one of the semiochemical compositions describe herein, as summarized in the below table:

| | Core (despecified composition) - % | DAP - % | F3 - % | F3P - % | HAP - % |
|---|---|---|---|---|---|
| methyl palmitate | 23 | 18 | 13,6 | 13,4 | 30 |
| methyl oleate | 31 | 29 | 67,2 | 46,6 | 30,8 |
| methyl myristate | 11 | 5 | | 4,5 | 3,55 |
| methyl linoleate | 35 | 29 | | 6,5 | 28,8 |
| methyl laurate | | 2 | | 4,5 | |
| methyl pentadecanoate | | 4 | | | 1,35 |
| methyl stearate | | 13 | | 4,5 | 5,5 |
| dimethyl pimelate | | | 11,4 | 11 | |
| dimethyl azelate | | | 7,8 | 9 | |
| Total | 100 | 100 | 100 | 100 | 100 |

According to a particular embodiment, the stick is made of any material suited for achieving the capillary action sought by the method of the invention in the face of the technical effect sought by a method of the invention as described herein, which can be readily tested by the skilled person against the said sought effect by following the guidance shown in the Examples section herein.

Such a material associates fiber-like structures in the longitudinal section of material, which surround chambers stacked on top of each other, the longitudinal network of fiber-like structures also being present between the stacks of chambers. The fiber-like structures allow the lipophilic molecules to well up from its surface, while the fiber-like structures at the core of the longitudinal section enable most of the solution to be diffused to move in the empty chambers, thus achieving a progressive filling of the whole structure from the bottom to the top, by capillarity. The lipophilicity of the fibrous material preferably allows the active ingredients of the semiochemical to well up gradually, while the solvent preferably remains in the structure. A material obtained by 3D printing, using a matrix for example based on cellulose or lignin or chitin derivatives, possessing such properties of permeability for lipid active ingredients and carrying out the physical organization described above, is deemed to fulfill the same function as the sticks obtained from rattan described herein. The skilled person can readily carry out tests based on the guidance provided herein.

According to a particular embodiment, a stick can be made of a cellulose material with alveoles or pores, or a 3D printed material with pores, in particular mimicking the interval alveolar structure of a so-called rattan stick.

According to a particular embodiment, a stick used in a method of the invention or as described in any embodiment herein is made of the stem of a palm tree of the *Calamus* genus, wherein the alveolar internal structure extends over the longitudinal section of the stick (in particular over the whole length of the stick structure) and is in particular formed by a mature vascular system in said stem, said vascular system presenting a succession of raphide sacs formed by individual cells during plant growth. Indeed, as described in the Tomlinson et al. articles cited herein, mature vascular system of a palm tree of the *Calamus* genus provides an alveolar internal structure as described herein.

In a particular embodiment, which can be combined with any embodiment described herein, the palm tree is a rattan palm.

In a particular embodiment, which can be combined with any embodiment described herein, a stick used in a method of the invention has a length from 20 to 28 centimeters, in particular 24 centimeters and a diameter from 1 to 5 millimeters, in particular 3 millimeters. The number of alveolus per stick may vary, but preferably have a length inferior or equal to 1 millimeter. Accordingly, in a particular embodiment, there are from 15 to 25 alveolus per stick.

According to a particular embodiment, a semiochemical composition can further comprises an antioxidant, in particular an antioxidant that is Tinogard^{®} TT (Pentaerythrityl Tetra-di-t-butyl Hydroxyhydrocinnamate, Chem/IUPAC name: Benzenepropanoic acid, 3,5-bis(1,1-dimethylethyl)-4-hydroxy-, 2,2-bis[[3-[3,5-bis(1,1-dimethylethyl)-4-hydroxyphenyl]-1-oxopropoxy] methyl]-1,3-propanediyl ester).

It will be understood that any antioxidant conventionally known in the art can be used. In a particular embodiment, the antioxidant is soluble within the solvent used and has protective action for preservation of the active ingredients over time, which is the purpose of an antioxidant.

According to a particular embodiment, the proportion of solvent within the composition of semiochemical is between 80% (w/w) to 99% (w/w), in particular is between 96% to 99% (w/w), more particularly is between 97% (w/w) and 98% (w/w), especially is 97.1% (w/w) or 97.2% (w/w) or 97.3% (w/w) or 97.4% (w/w) or 97.5% (w/w) or 97.6% (w/w) or 97.7% (w/w) or 97.8% (w/w) or 97.9% (w/w), and, if present, the proportion of antioxidant within the composition of semiochemical is between 0.05% (w/w) and 0.3%(w/w), in particular is 0.1% (w/w).

Conversely, it will be understood that according to the above embodiment, the proportion of semiochemical within the composition of semiochemical is between 0.95%(w/w) and 19,95%(w/w), in particular is between 0.1% to 19% (w/w), more particulary is between 1% (w/w) and 15% (w/w), especially is 1.1% (w/w) or 1.2% (w/w) or 1.3% (w/w) or 1.4% (w/w) or 1.5% (w/w) or 1.6% (w/w) or 1.7% (w/w) or 1.8% (w/w) or 1.9% (w/w) or 2% (w/w) or 2.1% (w/w) or 2.2% (w/w) or 2.3% (w/w) or 2.4% (w/w) or 2.5% (w/w) or 2.6% (w/w) or 2.7% (w/w) or 2.8% (w/w) or 2.9% (w/w) or 3%(w/w).

The invention also concerns a kit for passive diffusion of a semiochemical, wherein said kit comprises, in particular consists of:
a. One or more sticks wherein each stick presents with an alveolar internal structure extending over the longitudinal section of said stick, in particular the whole longitudinal section of the stick, in particular a stick as defined in any embodiment described herein, and
b. A composition of semiochemical, especially a liquid composition of semiochemical, in particular a semiochemical that is a pheromone or an allomone, where the composition of semiochemical comprises a solvent as defined herein, in particular a solvent that is 3-methoxy-3-methyl-1-butanol, in particular a composition as defined in any embodiment described herein.

According to a particular embodiment, a kit of the invention further comprises a container for holding the composition of semiochemical and the sticks while used, wherein the container is adapted to enable the sticks to be immersed over a part of their length (i.e., over the so-called bottom portion of the stick) in the composition of semiochemical and to enable release of the semiochemical composition in the environment, especially in the air, by passive diffusion while and/or after migration of the semiochemical throughout the stick.

Such a container can for example be a bottle, in particular a bottle made of inert material, "inert" meaning that there is no detrimental interaction with the active components whose action is required in instant invention, for the purpose sought. Such advent can be readily determined by the skilled person verifying the suitability of the materials used in the design of a system to the end purpose of the same.

According to a particular embodiment, a kit of the invention comprises at least four sticks, in particular comprises or consist of two, three, four, five, six, seven or eight sticks, and the container can hold a volume from 20 mL to 200 mL or form 20 mL to 130 mL of the composition of semiochemical, in particular a volume of 20, 21, 22, 23, 24, 25, 26, 27, 28, 29, 30, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130 mL or any range between any one of these values.

In a particular embodiment, 4 sticks are used with a container of 40 mL.

In a particular embodiment, 4 sticks are used with a container of 50 mL.

In a particular embodiment, 4 sticks are used with a container of 100 mL.

In a particular embodiment, 6 sticks are used with a container of 40 mL.

In a particular embodiment, 6 sticks are used with a container of 50 mL.

In a particular embodiment, 6 sticks are used with a container of 100 mL.

In a particular embodiment, 8 sticks are used with a container of 40 mL.

In a particular embodiment, 8 sticks are used with a container of 50 mL.

In a particular embodiment, 8 sticks are used with a container of 100 mL.

The Invention also relates to a stick or a set or a kit comprising a plurality of sticks wherein the stick presents with a structure with an alveolar internal structure extending over the longitudinal section of said stick, in particular the whole longitudinal section of the stick wherein the stick is filled with a composition of semiochemical, especially a liquid composition of semiochemical, in particular a semiochemical that is a pheromone or an allomone, where the composition of semiochemical comprises a solvent a defined in any embodiment herein, in particular a solvent that is 3-methoxy-3-methyl-1-butanol, in particular a composition as defined in any embodiment described herein.

The invention also relates to the use of a kit as described in any embodiment disclosed herein or of a set or a kit comprising a plurality of sticks as described in any embodiment disclosed herein, for releasing a semiochemical in the environment, in particular wherein all the active ingredients of the semiochemical are released during a period of time of at least 20 days, especially where the active ingredients of the semiochemical with less carbons in their molecular formula are respectively more abundant in the released semiochemical signature than the active ingredients of the semiochemical with more carbons in their molecular formula.

Indeed, it has been surprisingly found that use of the passive diffusion device described herein enabled to advantageously mimic, i.e., in an unaltered manner, the semiochemical especially pheromonal diffusion of semiochemical and pheromone signatures as found in the nature, where it is released from the glands of the emitter animal to their target. It could be shown that diffusion is not that well preserved using in particular blocks, in addition to the fact that the semiochemicals can be altered using blocks, i.e., with a part of the message lacking.

An "environment" according to the invention means a determined physical surroundings which can be suitably used or intended for animals, especially pets or companion animals. An environment can accordingly be an indoor environment such as a building set especially a room, a stable, a barn a vehicle, in particular a vehicle for animals transportation, or any type of enclosed environment, an outdoor environment in particular a delimited outdoor area or space or a semi outdoor and indoor environment and is an environment where animals are susceptible to stay for a period of time or at least pass by.

According to particular embodiments, any method or use disclosed herein or of the invention is a non-therapeutic method or use.

According to particular embodiments, any method or use disclosed herein or of the invention excludes a method for treatment of the human or animal body by surgery or therapy practised on the human or animal body.

The invention is intended to release, to diffuse, semiochemicals as defined in present description in an environment, in an unaltered manner. The invention is in particular intended to passively release, to passively diffuse, semiochemicals as defined in present description in an environment, in an unaltered manner.

In the event that a therapeutic method would be considered, then are disclosed semiochemicals as described in any embodiment herein, compositions or solutions comprising them, for use in a method or use as described in any embodiment disclosed herein, or for the manufacture of a kit as disclosed herein.

Other examples and features of the invention will be apparent when reading the examples and the figures, which illustrate the experiments conducted by the inventors, in complement to the features and definitions given in the present description.

### Legend of the Figures

**Figure 1****.** Block mass loss plotted against time (diffuser blocks study)
**Figure 2****.** Visual appearance of diffuser blocks over time at room temperature (t0 and weeks 1, 2, 3 and 4) (diffuser blocks study)
**Figure 3****.** Evolution of % of Active Ingredient as a function of time (diffuser blocks study)
**Figure 4****.** Diffusion block study system set up
**Figure 5****.** Diffusion curve for methyl myristate
**Figure 6****.** Diffusion curve for methyl palmitate
**Figure 7****.** Direct diffusion chromatogram for the block at T=14 days.
**Figure 8****.** Direct diffusion chromatogram for block, SIM mode for oleate/linoleate
**Figure 9****.** Mass loss of stick diffusers as a function of time
**Figure 10****.** Visual appearance of vials over time at room temperature
**Figure 11****.** Evolution of % of Active Ingredients as a function of time
**Figure 12****.** Diffusion study system for stick diffuser (set-up)
**Figure 13****.** Diffusion curve for methyl myristate
**Figure 14****.** Diffusion curve for methyl palmitate
**Figure 15****.** Diffusion curve for methyl oleate
**Figure 16****.** Diffusion curve for methyl linoleate
**Figure 17****.** Direct diffusion chromatogram for the rod diffuser at T=14 days.
**Figure 18****.** Comparison of changes in % of Active Ingredients
**Figure 19****.** Diffusion curves for active ingredients
**Figure 20****.** Mass loss of PCDS diffuser with isopropyl myristate
**Figure 21****.** Successive chromatograms of an F3 block stability study
**Figure 22****.** Scanning electron microscope view of longitudinal section of a *Calamus* rod before being filled with a pheromone composition
**Figure 23****.** Scanning electron microscope view of longitudinal section of a *Calamus* rod filled at day 15 with a pheromone composition
**Figure 24****.** Direct diffusion system used. The SPME fiber is shown by an arrow. The dimensions of the system are: Aquarium height 43 cm, Length and width 38 cm, F3 feline facial pheromone device: 23 cm height, Distance between fiber and highest part of the device: 10 cm.
**Figure 25****.** Example of chromatogram obtained for the analysis of Acetone (blank)
**Figure 26****.** Example of chromatogram obtained for the analysis of a F3 feline facial pheromone sample
**Figure 27****.** Graph showing the evolution of the quantity of F3 pheromone measured into the liquid over time for both replicas
**Figure 28****.** Mass loss of the two devices over time
**Figure 29****.** Pictures of the device over time. Left: T=0, middle: T=6 days and right: T=22 days
**Figure 30****.** Chromatogram obtained for the analysis of the fiber alone (before any adsorption)
**Figure 31****.** Chromatogram obtained for the analysis of the diffusion of F3 with a SPME fiber
**Figure 32****.** Graph representing the direct diffusion of dimethyl pimelate over time measured for each replica
**Figure 33****.** Graph representing the direct diffusion of dimethyl azelate over time measured for each replica
**Figure 34****.** Graph representing the direct diffusion of methyl palmitate over time measured for each replica
**Figure** 35. Graph representing the direct diffusion of methyl oleate over time measured for each replica
**Figure 36****.** Diffusion of F3 pheromone over time
**Figure 37****.** Chromatogram obtained after extraction and analysis of a rattan stick
**Figure 38****.** Chromatogram obtained for the analysis of the top of a rattan stick during diffusion of F3 (T=6 days)
**Figure 39****.** Quantity of dimethyl pimelate on the top of the stick over time
**Figure 40****.** Quantity of dimethyl azelate on the top of the stick over time
**Figure 41****.** Quantity of methyl palmitate on the top of the stick over time
**Figure 42****.** Quantity of methyl oleate on the top of the stick over time
**Figure 43****.** Picture showing the devices with 120 mL of F3 feline facial pheromone
**Figure 44****.** Curves showing the mass losses of the device over time
**Figure 45****.** Pictures of the devices at T=0 (left) and T=7 days (right)
**Figure 46****.** Curves showing the mass losses of the devices over time when refilled
**Figure 47****.** Chromatogram obtained for the analysis of the fiber alone (before any adsorption)
**Figure 48****.** Chromatogram obtained for the analysis of the diffusion of F3 with a SPME fiber
**Figure 49****.** Graph representing the direct diffusion of dimethyl pimelate over time measured before and after refilled
**Figure 50****.** Graph representing the direct diffusion of dimethyl azelate over time measured before and after refilled
**Figure 51****.** Graph representing the direct diffusion of methyl palmitate over time measured before and after refilled
**Figure 52****.** Graph representing the direct diffusion of methyl oleate over time measured before and after refilled
**Figure 53****.** Diffusion of F3 pheromone over time before and after refilled
**Figure 54****.** comparison of the results obtained for the study of diffusion of F3 through devices containing four and eight sticks
**Figure 55****.** Mass losses of the flasks over time
**Figure 56****.** Visual appearance of the flasks at T=0 (left), T=13j (middle) and T=28j (right)
**Figure 57****.** Curve showing the diffusion of dimethyl pimelate over time
**Figure 58****.** Curve showing the diffusion of dimethyl azelate over time
**Figure 59****.** Curve showing the diffusion of methyl palmitate over time
**Figure 60****.** Curve showing the diffusion of methyl oleate over time
**Figure 61****.** median curve of F3 pheromone
**Figure 62****. comparison of the** diffusion obtained with the device containing 40 mL of F3 feline facial pheromone with 4 sticks, the device containing 40 mL of F3 feline facial pheromone with 8 sticks and the device containing 120 mL of F3 feline facial pheromone with 6 sticks
**Figure 63****.** F3b diffuser placed in the room
**Figure 64****.** Experimental room
**Figure 65****.** Curves showing diffuser mass loss over time
**Figure 66****.** Photo showing the level of composition remaining in the vial.
**Figure 67****.** Chromatogram obtained for analysis of the fiber alone (before any adsorption)
**Figure 68****.** Chromatogram obtained for F3P analysis
**Figure 69****.** Diffusion curve for small molecules
**Figure 70****.** Diffusion curve for large molecules
**Figure 71****.** Photo of devices under study
**Figure 72****.** Mass loss of diffusers in indirect diffusion
**Figure 73****.** Chromatogram obtained for analysis of an analytical blank
**Figure 74****.** Chromatogram obtained by indirect analysis of the composition
**Figure 75****.** Mass of diffusers as a function of time measured during the diffusion study of pheromone released directly into the air
**Figure 76****.** Diffusion curves for methyl laurate and myristate in the DAP/PCDS diffuser
**Figure 77****.** Diffusion curves for methyl pentadecanoate and palmitate in the DAP/PCDS diffuser
**Figure 78****.** Diffusion curves for stearate, oleate and linoleate methyls in the DAP/PCDS diffuser
**Figure 79****.** Direct diffusion curve of the DAP pheromone
**Figure 80****.** Chromatogram obtained for analysis of an analytical blank
**Figure 81****.** Evolution of mass loss over time (HAP)
**Figure 82****.** Visual appearance and integrity of the blocks (HAP)

### Experiments, Material and Methods, Results

### General statement

The semiochemicals which have been used in present studies are as shown in the Table below.

| | Core (despecified composition) - % | DAP - % | F3 - % | F3P - % | HAP-% |
|---|---|---|---|---|---|
| methyl palmitate | 23 | 18 | 13,6 | 13,4 | 30 |
| methyl oleate | 31 | 29 | 67,2 | 46,6 | 30,8 |
| methyl myristate | 11 | 5 | | 4,5 | 3,55 |
| methyl linoleate | 35 | 29 | | 6,5 | 28,8 |
| methyl laurate | | 2 | | 4,5 | |
| methyl pentadecanoate | | 4 | | | 1,35 |
| methyl stearate | | 13 | | 4,5 | 5,5 |
| dimethyl pimelate | | | 11,4 | 11 | |
| dimethyl azelate | | | 7,8 | 9 | |
| Total | 100 | 100 | 100 | 100 | 100 |

| | | | | | |
|---|---|---|---|---|---|
| DAP = dog appeasing pheromone F3 = Feline faciale pheromone F3P = pheromone combining the effects of F3 pheromone with those of cat maternal appeasing pheromone HAP = human appeasing pheromone Percentages are w/w percentages. | | | | | |

IUPAC names of active ingredients are as follows:

| | IUPAC Name | Molecular Formula |
|---|---|---|
| methyl palmitate | methyl hexadecanoate | C17H34O2 |
| methyl oleate | methyl (Z)-octadec-9-enoate | C19H36O2 |
| methyl myristate | methyl tetradecanoate | C15H30O2 |
| methyl linoleate | methyl (9Z,12Z)-octadeca-9,12-dienoate | C19H34O2 |
| methyl laurate | methyl dodecanoate | C13H26O2 |
| methyl pentadecanoate | methyl pentadecanoate | C16H32O2 |
| methyl stearate | methyl octadecanoate | C19H38O2 |
| dimethyl pimelate | dimethyl heptanedioate | C9H16O4 |
| dimethyl azelate | dimethyl nonanedioate | C11H20O4 |

Unless stated differently (for example when used in blocks), the pheromones have been formulated/used as solutions where the pheromone (i.e., all active ingredients of it) is solubilized at 2 % (w/w) in 97,9 % (w/w) solvent, with 0,1 % (w/w) antioxidant.

### A/ Comparison of two passive diffusion devices

Comparison of two passive diffusion devices: the first in the form of a block diffuser which is similar to commercially available devices, and the second in the form of a so-called "rod" or "sticks" diffuser, for the diffusion of a composition of 2% "despecified pheromone". A "despecified pheromone" corresponds to a so-called "common core" of appeasing pheromones. Each pheromone discovered so far possesses what is known as the common core, i.e., a set of molecules present in all soothing (appeasing) maternal pheromones. This is a set of molecules present in all soothing maternal pheromones. Then, each pheromone has other characteristics specific to its species. Known pheromone-based passive diffusion systems include block diffusers, already commercially available as appeasing products for hens, rabbits and pigs. In the present study they are compared to the new capillary diffusion system of present invention. It is shown that the latter are just as, if not more, effective than block diffusers, as well as being more aesthetically pleasant.

### Sample materials

- For the study of diffuser blocks: 3 units will be supplied for the so-called "direct" diffusion study (measurement of the pheromone emanating from the block) and 4 units will be supplied for the "indirect" diffusion study (measurement of the pheromone remaining in the block)
- For the study of rod devices: 3 units will be supplied for the so-called diffusion study. 3 units will be supplied for the "indirect" diffusion study.
- For the verum versus placebo shrinkage comparison study: 4 units will be supplied for Verum block shrinkage and for sticks, and 4 units will be supplied for Placebo block shrinkage and for sticks.

### A.1/ STUDY OF DIFFUSER BLOCKS

### 1.1 PHYSICAL AND ORGANOLEPTIC PROPERTIES

### 1.1.1 Form

Gel integrity was checked at each time of the analysis. Before each analysis, the block was weighed to visualize mass loss over time.

**Specifications:** the gel must lose mass over time.

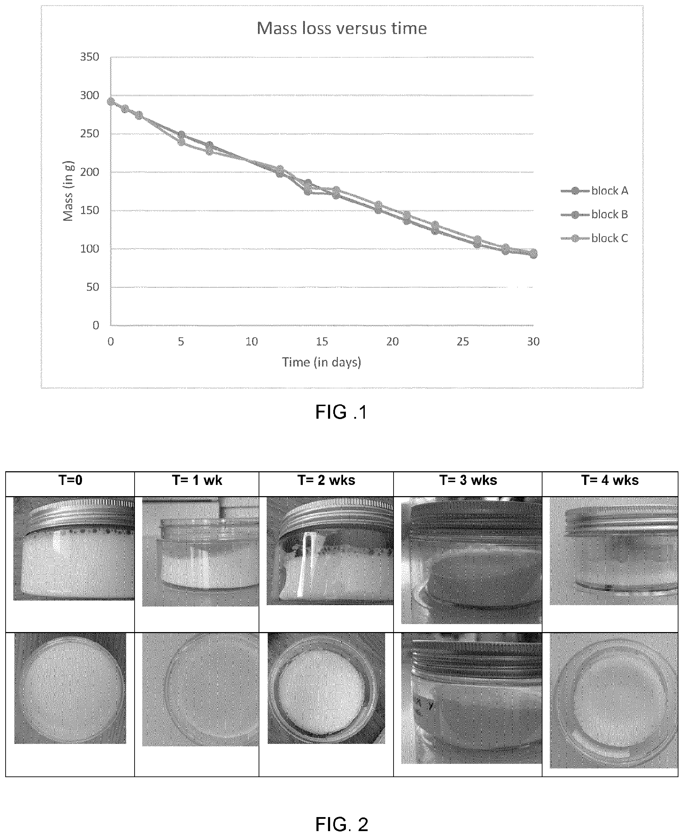

### Result: Compliant - See Figure 1

### 1.1.2 Visual appearance

The visual aspect was pictured at each analysis stage by means of a photographic snapshot. **Specifications:** the gel must visually degrade over time.

### Result: Compliant - See Figure 2

### 1.2 ANALYTICAL PROTOCOL FOR INDIRECT ASSAY

### 1.2.1 Analysis technique

Analyses were carried out using the gas chromatography (GC) technique with a flame ionization detector (FID), commonly known as GC/FID. The instrument used was the Shimadzu GC2025. ^{®}

### Analytical method :

Autosteer
   - **Injection:** Quantity injected: 1 µL, split 50:1, temperature: 230 °C
   - **Separation:** DB-WAX column (Agilent), length: 20 m, diameter: 180 µm, film thickness: 300 µm

Elution program :

**Table 1. Temperature program for elution**

| Temperature increase pace | Temperature | Maintenance |
|---|---|---|
| 0 | 170 °C | / |
| 20 °C/min | 240 °C | 8 min |

Carrier gas: Helium (He)
Analysis time: 11.50 min (not including time to return to equilibrium between each analysis) injection)
• **Detection:** FID, temperature: 250°C, flow rates: H₂: 40 mL/min, Air: 400 mL/min, Nitrogen (make-up): 30 mL/min.

### 1.2.2 Preparation of test solutions

To obtain a representative sample, "cores" were drilled at various positions in the block and then collected. 2.5 g of gel were weighed into a 50 mL volumetric flask and the volume made up to the beginning of the neck of the flask with acetone.

The flask was then placed in an ultrasonic bath for one hour until the block was dissolved (a white precipitate was obtained), then acetone was added to the mark. An aliquot of this solution was placed in a syringe fitted with a syringe filter and filtered to obtain a translucent solution. The resulting solution was transferred to a 1.5 mL GC vial for analysis.

### 1.2.3 Preparing the calibration range

The assays were carried out using a calibration range. The range comprises 5 standard solutions, one of which corresponds exactly to the theoretical concentrations obtained by the test sample (100%), while the other 4 have higher and lower concentrations (50%, 75%, 125%, 150%) to cover a wide range of concentrations.

### 1.2.4 Results of Active ingredient assay

**Specification:** 2.0 ± 0.6 g pheromone in 100 g block (± 30% variation).

**Table 2. Ratio, mass concentrations and acceptable limits of active ingredients**

| **Compound** | **Ratio** | **Mass concentrations** | **Acceptable limits** |
|---|---|---|---|
| **Methyl myristate** | 11 % | 0.22 g/100 g | 7,7 - 14,3 % |
| **Methyl palmitate** | 23 % | 0.46 g/100 g | 16,1 - 29,9 % |
| **Methyl oleate** | 31 % | 0.62 g/100 g | 21,7 - 40,3 % |
| **Methyl linoleate** | 35 % | 0.70 g/100 g | 24,5 - 45,5 % |

### 1.2.5 Raw data obtained

**Table 3. Raw results of block diffusion**

| Time in days | % myristate | % palmitate | % oleate | linoleate | Total % of Active Ingredient |
|---|---|---|---|---|---|
| 0 | 12 | 27,2 | 30,4 | 30,4 | **2,14** |
| 7 | 11,9 | 27,2 | 30,6 | 30,2 | **2,87** |
| 14 | 11,9 | 27,1 | 30,6 | 30,4 | **4,42** |
| 21 | 11,7 | 27,1 | 30,7 | 30,5 | **6,66** |
| 28 | 11,7 | 27,1 | 30,7 | 30,5 | **11,71** |

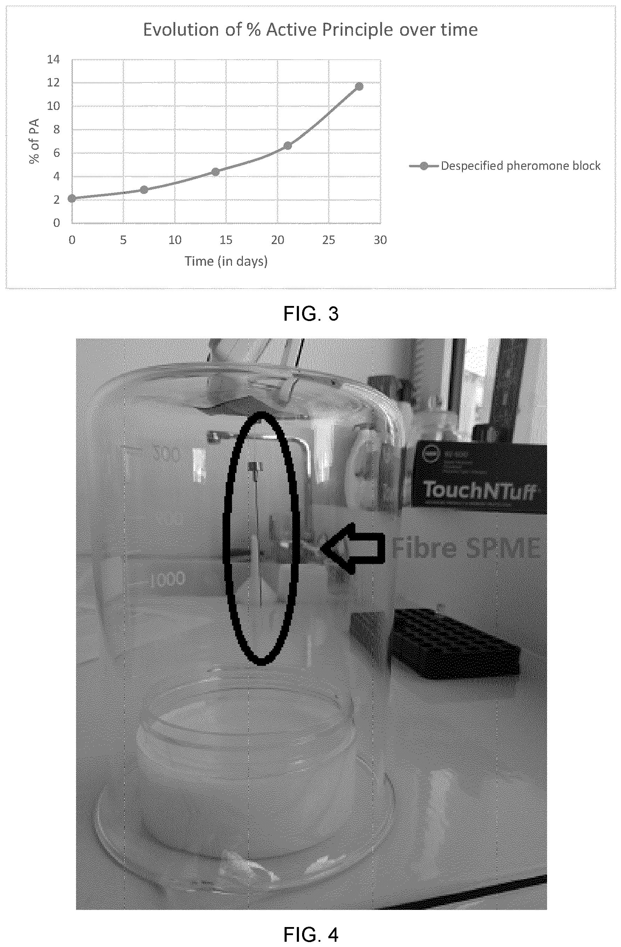

### 1.2.6 Graphical representation - See Figure 3

We observe (Figure 3) an increase in the percentage of active ingredients, which is normal, as the water in the sodium stearate matrix evaporates. More water evaporates than pheromones. This phenomenon of pheromone re-concentration is well known for blocks.

### 1.3. ANALYTICAL PROTOCOL FOR DIRECT DOSAGE

### 1.3.1. Analysis technique

Analyses were carried out using gas chromatography (GC) coupled to a mass spectrometer (MS) detector, a technique commonly referred to as GCMS. The molecules of interest were extracted using the Solid Phase Micro-Extraction (SPME) technique. The instrument used was the following: QP2010SE^{®} from Shimadzu (See Figure 4).

### Analytical method :

AOC 6000^{®} automatic feeder
• **Extraction** / **SPME fiber:** polyacrylate/Fused silica (85 µm), 23 Ga.
Adsorption time: 2 hours (exposure time of fiber above block) (See Figure 4)
Desorption time: 30 minutes (fiber exposure time in injector)
Fiber-block distance: 2 cm
• **Injection:** split/splitless injector
Temperature: 250°C, split 50 mode.
• **Separation:** ZB-FFAP^{®} column (Phenomenex), length: 30 m, diameter: 250 µm, film thickness: 250 µm Elution program :

**Table 4. Temperature program for elution**

| Temperature increase pace | Temperature | Maintenance |
|---|---|---|
| 0 | 120 °C | 1 min |
| 10 °C/min | 200 °C | 3 min |
| 10 °C/min | 250 °C | 1 min |

Carrier gas: Helium (He)
Analysis time: 18 min (not including time to return to equilibrium between each analysis injection
• **Detection:** mass spectrometer with electron impact source / analyzer: quadrupole.
Source temperature: 200°C
interface temperature: 250°C
Scan m/z 50 to m/z 500
SIM with ions 55, 66 and 74.

Analyses were carried out in triplicate to verify reproducibility of results.

### 1.3.2. Results

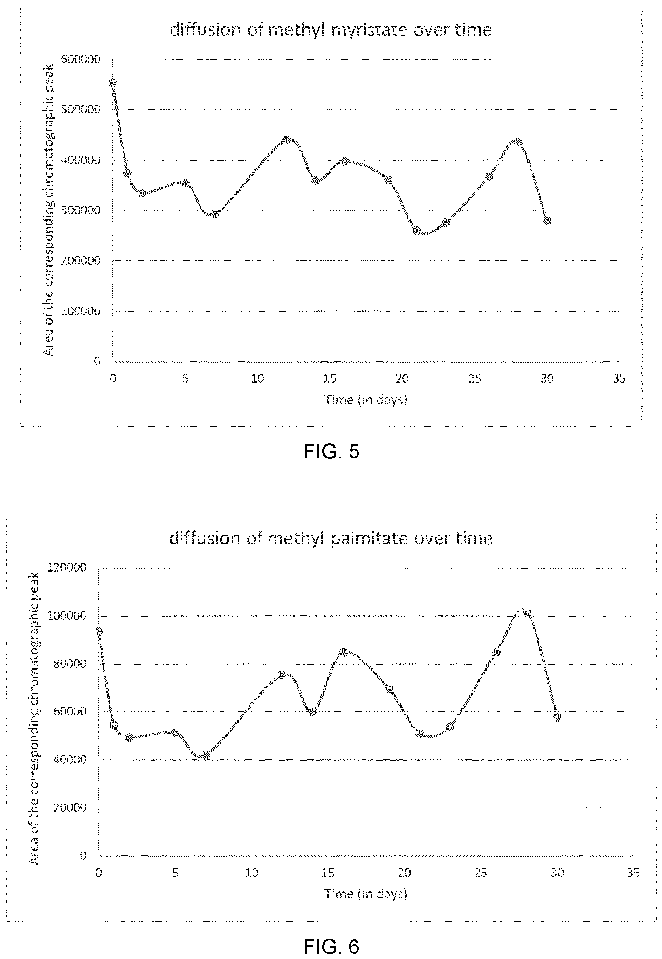

With the SPME method, results are evaluated by measuring the chromatographic peak area. The data have been plotted on diffusion curve (see Figures 5 and 6).

Each active ingredient was studied separately to better visualize diffusion. The small molecules diffuse well, and the two largest diffuse weakly. The diffusion curves are as follows (they could not be plotted for all 4 compounds, as the chromatographic peaks were not always visible for the two largest molecules)

The results of the diffusion study show that diffusion is similar and continuous for the two smallest molecules and very weak for the larger molecules (but still present).

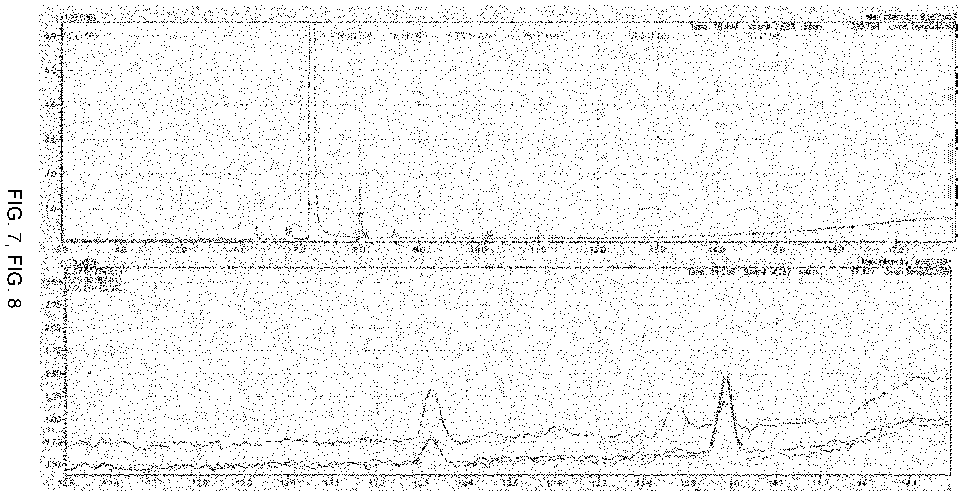

An example of the chromatogram obtained is shown in Figure 7.

The method is used for Figure 7 in SCAN mode which does not allow to visualize all the peaks; methyl oleate and methyl linoleate were detected using the SIM mode, as shown in the chromatogram of Figure 8.

### A.2/ ROD DIFFUSER STUDY

### 1.1 PHYSICAL AND ORGANOLEPTIC PROPERTIES

### 1.1.1 Form

Solution integrity was checked at each analysis time. Before each indirect assay, the vial was weighed to visualize mass loss over time. Each vial contained six sticks.

### Specifications: the solution must lose mass over time.

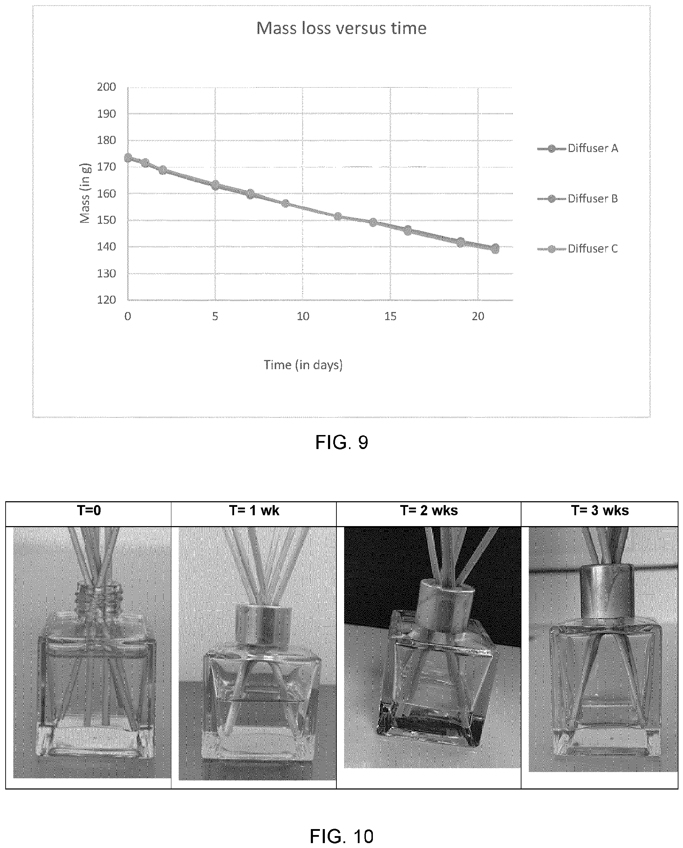

### Result: Compliant - See Figure 9

### 1.1.2 Visual appearance

The visual aspect was pictured at each analysis stage by means of a photographic snapshot. **Specifications:** the solution must visually decrease over time.

### Result: Compliant - See Figure 10

### 1.2 ANALYTICAL PROTOCOL FOR INDIRECT ASSAY

### 1.2.1 Analysis technique

This is the same analytical method as for the diffuser block study, only the sample preparation differs.

### 1.2.2 Preparation of test solutions

1.25 g of solution were weighed into a 25 mL volumetric flask and the volume made up to the mark with acetone. The resulting solution is transferred to a 1.5 mL GC vial for analysis.

### 1.2.3 Preparing the calibration range

This is exactly the same calibration range as for the diffuser block study.

### 1.2.4 Active ingredient assay results

**Specification:** 2.0 ± 0.6 g pheromone in 100 g solution (± 30% variation).

**Table 5. Ratio, mass concentrations and acceptable limits of active ingredients**

| Compound | Ratio | Mass concentrations | Acceptable limits |
|---|---|---|---|
| Methyl myristate | 11 % | 0.22 g/100 g | 7,7 - 14,3% |
| Methyl palmitate | 23 % | 0.46 g/100 g | 16,1 - 29,9 % |
| Methyl oleate | 31 % | 0.62 g/100 g | 21,7 - 40,3 % |
| Methyl linoleate | 35 % | 0.70 g/100 g | 24,5 - 45,5 % |

### 1.2.5 Raw data obtained

**Table 6. Raw results of stick diffuser diffusion**

| Time in days | % myristate | % palmitate | % oleate | linoleate | Total % of Active Ingredient |
|---|---|---|---|---|---|
| 0 | 11,9 | 27,3 | 30,8 | 30,0 | **1,99** |
| 7 | 11,9 | 27,3 | 30,8 | 30,0 | **1,96** |
| 14 | 11,9 | 27,2 | 30,7 | 30,1 | **1,95** |
| 21 | 11,4 | 26,2 | 30,8 | 31,5 | **2,39** |

In the course of this study, we also measured the amount of pheromone migrating on the sticks, to check that the pheromone had migrated to the top of the sticks, helping it to diffuse into the air. To do this, the test is the same as for the diffuser blocks: 2.5g of stick tips are cut off and placed in a 50mL flask, which is then placed in an ultrasonic bath for one hour. The resulting solution is filtered (to avoid injecting particles into the instrument) and placed in a chromatographic vial for analysis. The results obtained are as follows:

**Table 7. Raw results of diffusion on sticks**

| Time in days | % myristate | % palmitate | % oleate | linoleate | Total % of Active Ingredient |
|---|---|---|---|---|---|
| 7 | 9,2 | 29,8 | 31,3 | 29,7 | **14,07** |
| 14 | 8,2 | 30,2 | 31,5 | 30,1 | **11,37** |
| 21 | 6,4 | 32,5 | 32,6 | 28,6 | **13,00** |

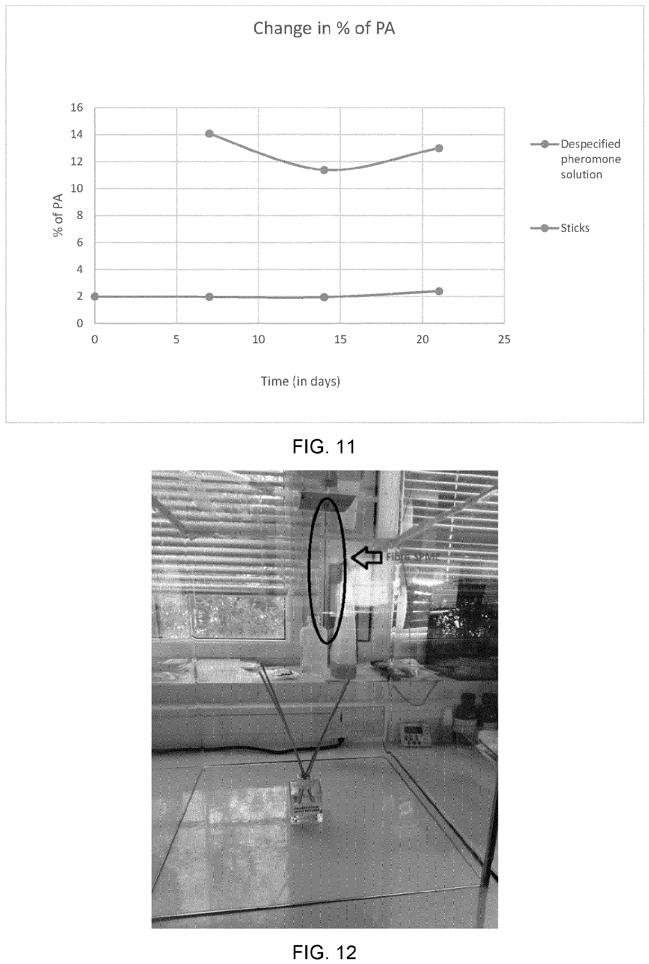

### 1.2.6 Graphical representation - See Figure 11

In contrast to the diffuser block, we observe that the pheromone diffuses evenly over time.

The amount of pheromone measured on the sticks, at the top of the sticks to be precise, clearly shows that the pheromone migrates to the top of the sticks over time, which is a very positive point for pheromone diffusion. At the end of the study, the sticks were almost saturated, as the percentage of pheromone did not exceed 14%.

### 1.3. ANALYTICAL PROTOCOL FOR DIRECT DOSAGE

### 1.3.1. Analysis technique

This is exactly the same analytical method used for the diffuser block study.

The study setup is shown below, also with a two-hour adsorption time - See Figure 12 showing the set-up. Because of the height of the passive diffusion device, the fiber mounting bracket will not be the same for the block and for the rod device. The distance between the fiber and the device is 10 cm.

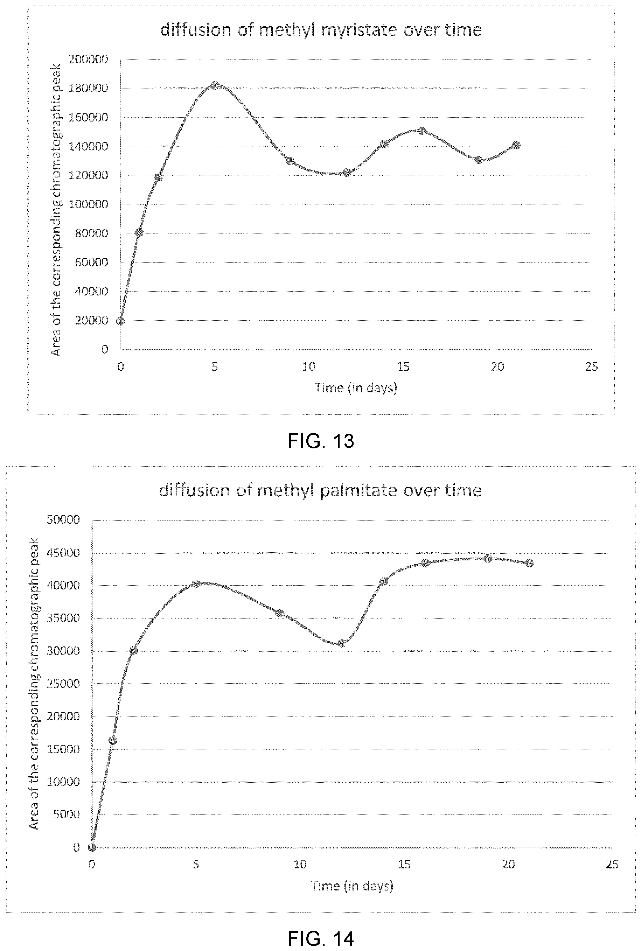

### 1.3.2. Results - Figures 13 and 14.

With the SPME method, results are evaluated by measuring the chromatographic peak area. The data have been plotted to produce a diffusion curve.

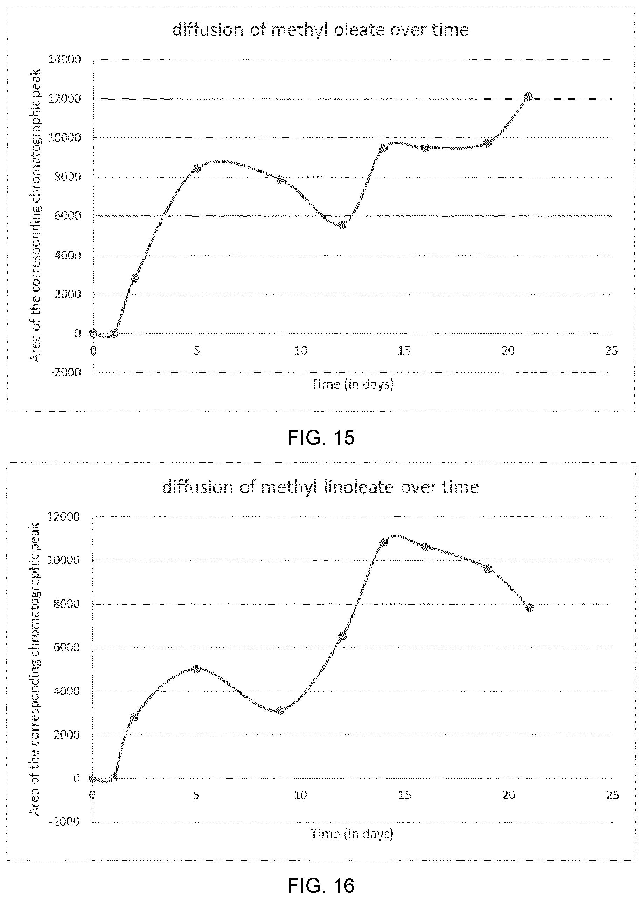

Each active ingredient was studied separately to better visualize diffusion. The diffusion curves are as shown in Figures 13, 14, 15 and 16.

We can see that it takes 5 days for diffusion to "kick in", but that after this time, all the active ingredients are well diffused in the air.

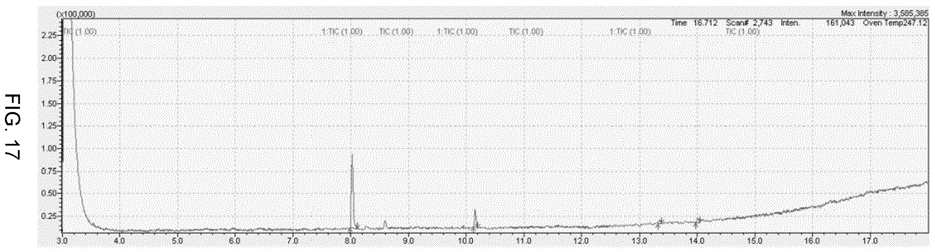

An example of the chromatogram obtained is shown in Figure 17: methyl oleate and methyl linoleate are detected in SCAN mode in this diffusion mode. The fiber is also farther from the detector using this diffusion system, so the conclusion is that there is better diffusion with the stick device than with the diffuser block.

### A.3Z COMPARISON OF RESULTS

A comparison of the results is carried out in order to conclude on the best device.

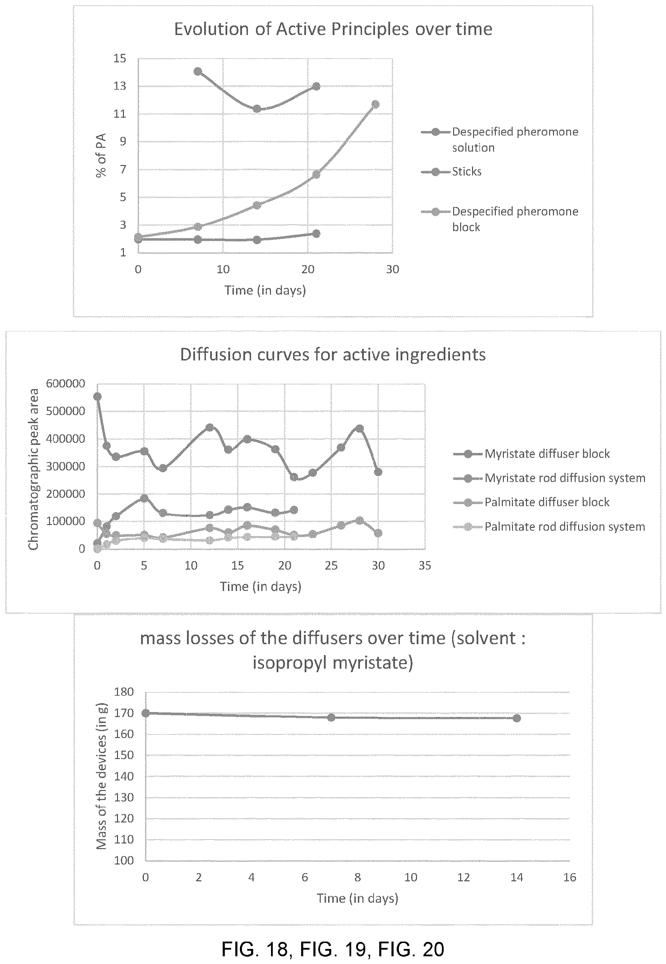

### 1.1 Change in percentage of active ingredients - See Figure 18

### 1.2 Diffusion curves for active ingredients - See Figure 20

Diffusion curves were plotted, in comparison, only for methyl myristate and methyl palmitate.

### A.4/ GENERAL CONCLUSION

One study of despecified pheromone diffusion with block diffusers and another with the rod diffusion system were therefore carried out in the animal experimentation module.

The study carried out with diffuser blocks showed that the block degrades well over time. After 4 weeks, the block is reduced as we are used to seeing. As far as the diffusion of the despecified pheromone is concerned, oleate and linoleate methyls are the two molecules with the lowest intensity, while myristate and palmitate methyls diffuse better, which is explained by their size (molecular weight).

The study with the rod diffuser also showed a reduction in solution volume, with almost one empty bottle at the end of the 21-day study. What's more, all the active ingredients diffuse in the same way: even if diffusion takes a few days to really get going, it remains stable throughout the study, a sign that the pheromone diffuses evenly throughout the product's use. It has also been shown that the pheromone migrates perfectly to the top of the sticks, further enhancing diffusion.

Mass shrinkage between verum and placebo is the same for both devices.

We can see from the curve comparisons that methyl myristate diffusion is better in the blocks than in the rod system. The fiber is closer to the diffuser block.

All active ingredients are visible in direct diffusion with the rod system, but not with the diffuser block.

We conclude, therefore, that the "rod" diffusion system has better diffusion than the block diffuser. The despecified pheromone diffuses better with this new diffusion system.

### B/ Testing of a different solvent for the PCDS method: isopropyl myristate - Figure 20

The first step in solvent validation consists in preparing a device comprising a glass bottle containing a 2% solution of a known pheromone (feline facial pheromone F3) in isopropyl myristate (also termed Myristic acid isopropyl ester, IUPAC name Propan-2-yl tetradecanoate). The initial weight of solution placed in the bottle is 170 grams. Monitoring is carried out over 14 days, with weighing at D0, D7 and D14. Results are shown in Figure 20: the mass loss of the PCDS diffuser containing isopropyl myristate over 14 days is virtually non-existent, making this solvent unsuitable for diffusion.

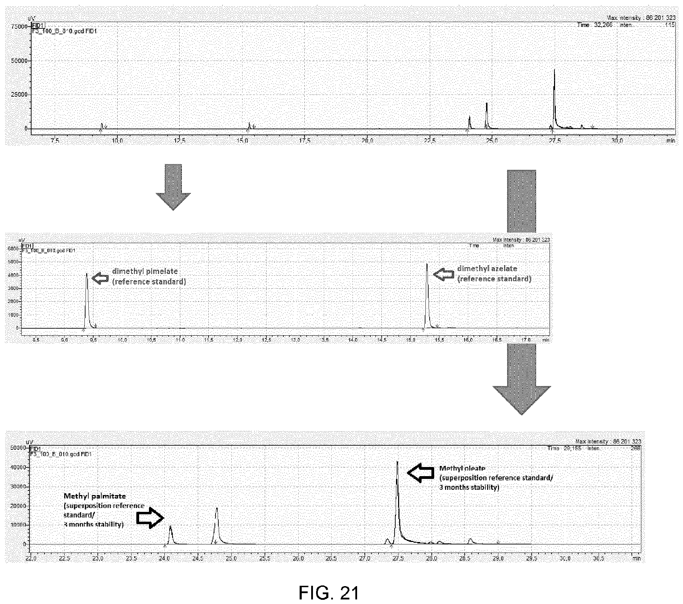

### C/ Evaluation of the passive diffusion method using sodium stearate aqueous gel - Figure 21

Aqueous sodium stearate gel is a method used by SIGNS for several of the pheromones it markets (pork, poultry, rabbit). The sodium stearate matrix is cast at high temperature (60°C) and contains 2% pheromone. In this study, matrix samples are taken by coring, and the active ingredients are extracted by apolar solvent, using the SIGNS-validated quality control method. Extracts are analyzed by GC-MS. Figure 21 shows the successive chromatograms of an F3 block stability study. After 3 months' stability, dimethyls pimelate and azelate disappeared completely from the block, while methyls palmitate and oleate remained stable. Given this observation, formula F3 cannot be used in blocks for passive diffusion, so a change of galenic formulation is necessary.

### D/ Pheromone composition migration and diffusion within rattan rod structure over time

Of note, plant stems have special cells called xylem, which form long thin tubes that run, within the stems, from the roots up to the leaves. Xylem cells carry water upward from the roots to every part of a plant. Water moves up the xylem by a process called capillary action. The stem vascular architecture in the rattan palm of the *Calamus* genus is described in Tomlinson PB, Fisher JB, Spangler RE, Richer RA. Stem vascular architecture in the rattan palm Calamus (Arecaceae-Calamoideae-Calaminae). Am J Bot. 2001 May;88(5):797-809. PMID: 11353705 and Tomlinson PB, Spangler R. Developmental features of the discontinuous stem vascular system in the rattan palm Calamus (Arecaceae-Calamoideae-Calamineae). Am J Bot. 2002 Jul;89(7):1128-41. doi: 10.3732/ajb.89.7.1128. PMID: 21665713. Figures 20-28 at page 1136 of Tomlinson et al., 2002, are incorporated herein by reference.

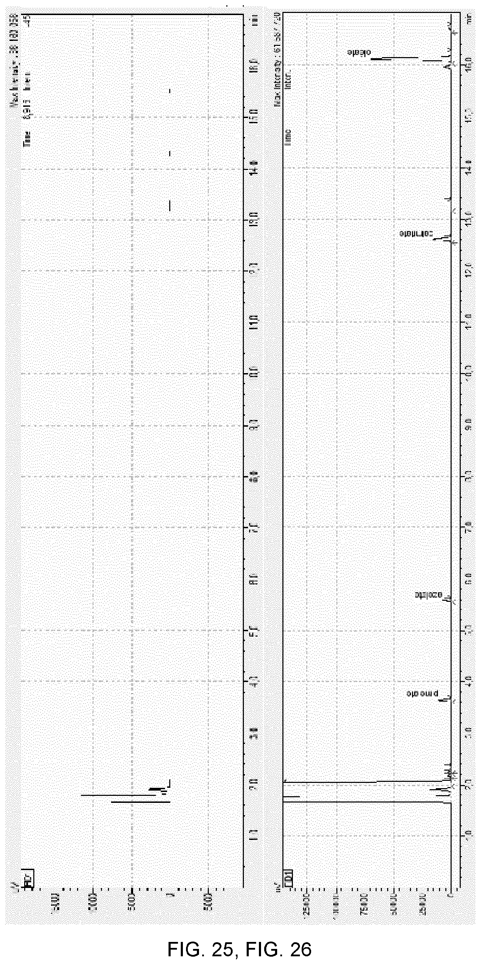

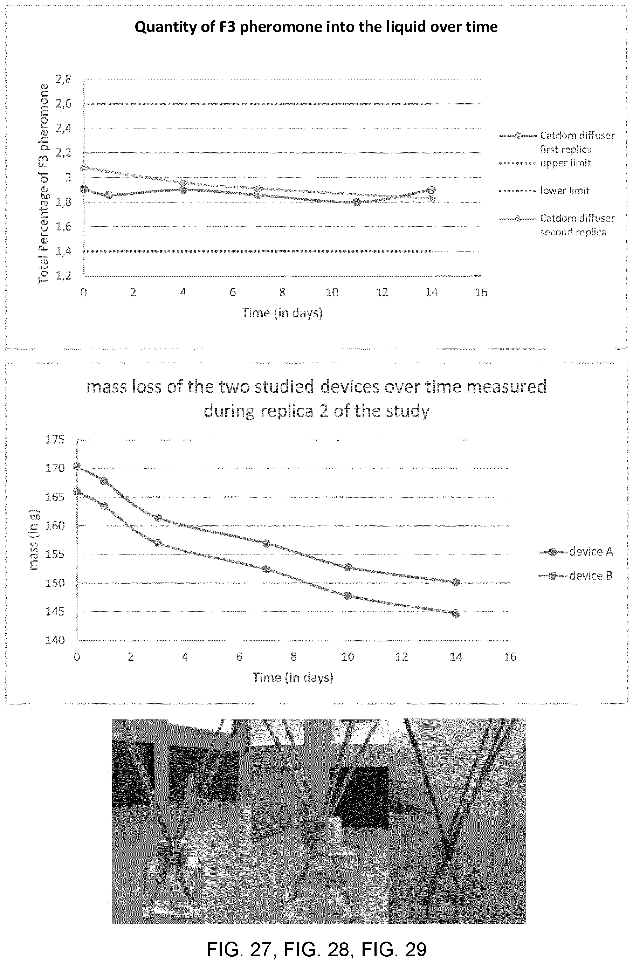

Figures 26 and 27 are more particularly referred to since they show the raphid canals of the stems of the rattan palm of the *Calamus* genus, i.e., a succession of raphide sacs, which can retain liquids in the process of capillary transportation from the roots to the other upper parts of the plant.

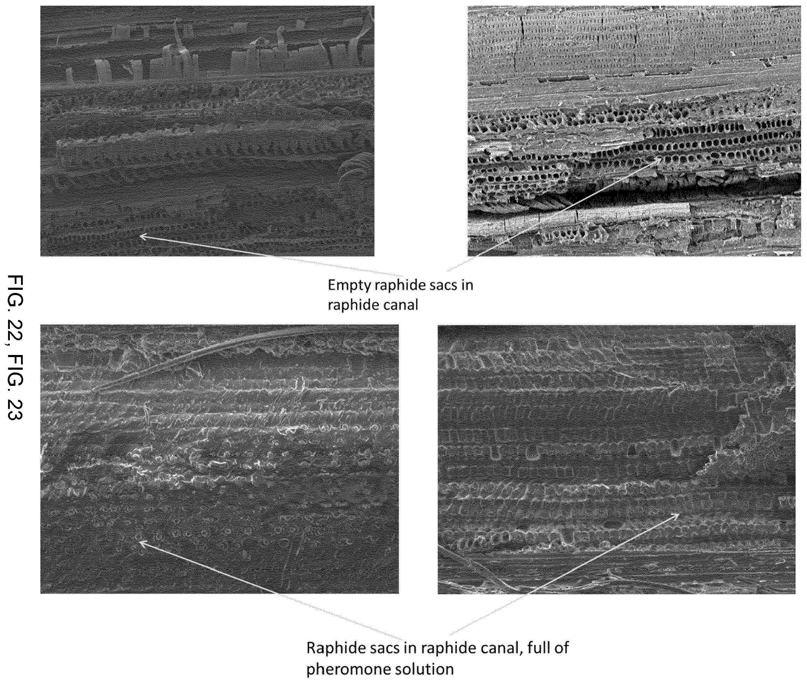

Figure 22 shows a scanning electron microscope view of longitudinal section of a *Calamus* rod before being filled with any pheromone composition as described herein (at t0 time): one can see the empty raphide sacs of the raphide canals.

Figure 23 shows a scanning electron microscope view of longitudinal section of a *Calamus* rod filled at day 15 with a pheromone composition as described herein (at day 15 time): one can see the raphide sacs in the raphide canals, full of pheromone solution.

### E/ Study: diffusion of F3 feline facial pheromone - diffusion with sticks device

### I. AIM OF THE STUDY

The aim of this study was to study the diffusion of F3 feline facial pheromone conditioned in diffusers with rattan sticks. As this galenic form is new, many questions have arisen regarding the behaviour of the pheromone in this system. This study was so intended to get as much information as possible for the development and marketing of the product.

In the first instance, three different experiments were performed:
- The first one was aimed at studying the "indirect" diffusion of the system by measuring, at fixed day, the quantity of pheromone still present into the liquid over time.
- The second was a "direct" diffusion of the system by measuring, at fixed day, the quantity of pheromone spreading in the air over time.
- The last one was aimed at studying the migration of the pheromone along the stick.

All obtained data will allow us to know more about the diffusion of the pheromone throughout the system.

### II. STATE OF THE ART

It is well known now that cats use secretions for different purposes like marking their territory, identifying "friends" or to report a danger. Most studies were conducted by IRSEA on these secretions and, up to now, four different pheromones have been identified: F3, F4, Cat Appeasing Pheromone and Feline scratch marking semiochemicals. This report will be focused on F3 also called cat's facial pheromone. This pheromone, secreted by glands located on cheeks, is used by cats to spot "safe" elements on their path, therefore marking their territory. Studies showed the effectiveness of this secretion to manage stress issues on cats, thus preventing them from urinating in a marked spot and helping to familiarize them to their new environments.

Aware of the commercial interest of this pheromone to help owners managing their cat's anxiety, SIGNS decided to develop a synthetic analog of F3. As most products containing a chemical reproduction of F3 are available as electrics diffusers, SIGNS decided to develop a passive diffusion device in an attempt to distance from the existing products but also because electrics diffusers showed limitations as they require electrical outlets and release liquid on surrounding objects and walls.

In a first instance, the chosen diffusion form was the same diffuser block used for the products SecurePig^{®}, SecurePoultry^{®} and SecureRabbit^{®} which showed it effectiveness in releasing pheromone in air. Unfortunately, the specific molecules composing F3 pheromone were chemically unstable in the block gel leading to the disappearance of half the pheromone in a few weeks.

A new galenic form called "sticks device" was then chosen. such type of device, also used in perfumery field, is composed of a container containing the product in liquid form and several wooden sticks (usually rattan sticks) partially immersed into the liquid. The product then migrates throughout the sticks and spread in air.

### III. SCHEME OF THE STUDY AND EXPERIMENTAL DESIGN

### A. First study: indirect diffusion of the device

Two devices containing 40 mL of F3 feline facial pheromone product and four rattan sticks were prepared and left on diffusion. Twice a week, 1,25 mL of liquid were taken in both devices for a chemical analysis of F3 pheromone by gas chromatography with flame ionization detector (GC/FID) until there is no liquid left.

The stability of the product over time was then checked.

To obtain reliable results, two replicas of this study were performed.

### B. Second study: direct diffusion of the device

Three devices containing 40 mL of F3 feline facial pheromone product and four rattan sticks were prepared and left on diffusion. Every Monday, Wednesday and Friday, the diffusion of the pheromone in air was checked by analysis by gas chromatography coupled with mass spectrometer (GC/MS) and SPME (solid phase microextraction) until there is no liquid left (about 22 days).

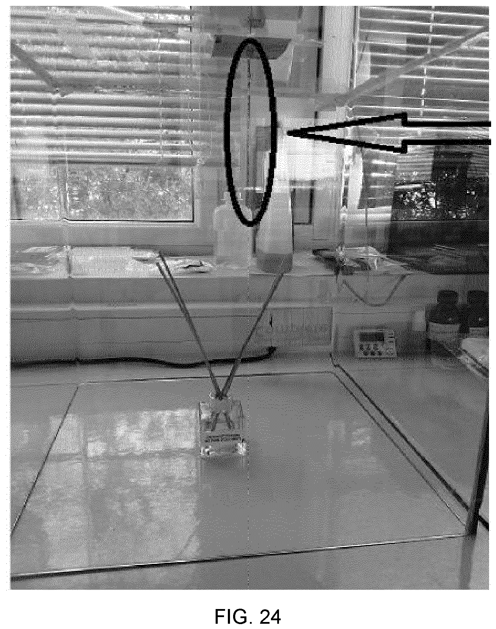

To that purpose, the studied device was taken and placed into a closed space (in our case an aquarium turned over) containing the SPME fiber as shown on Figure 24.

The SPME fiber was left for two hours to give the time for the molecules to adsorb on the fiber, then the fiber was injected into the GC/MS instrument for analysis.

The diffusion of the pheromone over time was then studied. As the first study, two replicas were also performed to obtain reliable results.

### C. Third study: migration of the pheromone along the internal structure of the stick

Three devices containing 40 mL of F3 feline facial pheromone product and five rattan sticks were prepared and left on diffusion. A t=1 day, T=3 days, T=10 days, T=15 days and T=22 days after preparation of the devices, one stick was taken on each device and 1 cm of the top of each stick was cut, then extracted with acetone 1 h in an ultrasonic bath and analysed by gas chromatography coupled with mass spectrometry (GC/MS).

The migration of the pheromone along the internal structure of the stick over time was then studied. Only one replica of this study was performed.

### IV. STUDY COMPOSITION

The studied composition was produced in-house.

The chemical composition is the following:

| **Compound** | **Proportion (m/m)** | **role** |
|---|---|---|
| **Dimethyl pimelate** | 0,228 | Active ingredient |
| **Dimethyl azelate** | 0,156 | Active ingredient |
| **Methyl palmitate** | 0,272 | Active ingredient |
| **Methyl oleate** | 1,344 | Active ingredient |
| **3-Methoxy-3-methyl-1-butanol** | 98 | Solvent |

### V. MATERIAL

### A. Experimental material

Batch of 4 commercially available bottles (50mL) (Ref: B0768VY49Y) and rattan sticks (120 pieces) (Ref: B0774HZTBP) were purchased from Amazon to Trade name of provider (rattan sticks) : Guangzhoushi Jiujiurong Keji Youxian Gongsi, Company registration number: 91440101MA9W1ECR3R, VAT number: FR61901131342, Business address: No.50 Juyuan Street, Shijing Street, Room 2285, Floor 3A, Building 4# Guangzhou Baiyun District Guangdong 510080 CN and Trade name of provider (glass diffuser bottles) : Shenzhenshi youfeng wangluo keji youxiangongsi, Trade register number: 91440300MA5F8AJ52Y, VAT number: FR75851426445, Business address: Shenzhenshi longgangqu bantianjiedao bulonglu 524hao bantianzhongxin dasha 513 Shenzhen longgang Guangdong 518129 CN
All laboratory material (glassware and consumables) was purchased from Dominique Dutscher Weighing scale (1kg-150kg, Model: MW2S1-150GF-L) was purchased from Sartorius
Weighing scale (mg-220g, Model:AX205 DeltaRange) was purchased from Mettler-Toledo SPME Fiber, Acrylate, 85 µm, grey (Ref: 227-35319-03) was purchased from Shimadzu Chromatographic vials (Ref: AR1-3910-12) were purchased from Phenomenex
Acetone (Ref: A/0560/17) was purchased from Fisher Scientific
3-Methoxy-3-methyl-1-butanol (Ref: L15953) and Dimethyl pimelate (Ref: B22026) were purchased from Alfa Aesar
Dimethyl azelate (Ref: A1308) was purchased from TCI
Methyl palmitate (technical grade, Ref: 07006ABPA25) and Methyl oleate (technical grade, Ref: 10123ABPA25) were purchased from Stearinerie Dubois.
Methyl palmitate (standard reference, Ref: P5177) and Methyl oleate (standard reference, Ref: 311111) were purchased from Merck

### B. GC/FID Analysis

Analysis were carried out using gas chromatography with flame ionization detector. The instrument was a GC 2025AF^{®} from Shimadzu equipped with an AOC20i^{®} Autosampler. The separation was performed on a ZB-5MS^{®} column (30 m X 0,25mm X 0,25 µm, stationary phase: 95% Dimethylpolysiloxane, 5% Phenyl-Arylene) from Phenomenex. The GC oven temperature was initially held at 150 °C for 1 minute then increased at a pace of 10 °C/min to 180 °C and left at this temperature for 3 minutes. Finally, the oven temperature was increased at a pace of 5 °C/min to 220 °C and left at this temperature for 2 minutes. The carrier gas was helium at 1 mL/min. Analysis were performed in split mode using a split/splitless injector (Temperature: 220 °C, injected quantity: 1 µL, split: 1: 50).

The molecules were detected using a flame ionisation detector set at 250 °C with Air flow at 400 mL/min, hydrogen flow at 40 mL/min and nitrogen flow (make-up gas) at 30 mL/min.

Data were collected using the Shimadzu LabSolution^{®} software.

Blank analysis was also performed.

Analytical method was optimised and in the process of validation, F3 quantification was achieved by external standard calibration (Preparation of standard solutions and studied sample protocol, and calibration curves not shown but available).

### C. SPME GC/MS Analysis

Analysis were carried out using gas chromatography with mass spectrometer. The instrument was a GCMS QP2010SE^{®} from Shimadzu with an AOC6000^{®} Autosampler. The separation was performed on a ZB-5MS^{®} column (30 m X 0,25 mm X 0,25 µm, stationary phase: 95 % Dimethylpolysiloxane, 5 % Phenyl-Arylene) from Phenomenex. The GC oven temperature was initially held at 100 °C for 1 minute then increased at a pace of 10 °C/min to 120 °C and left at this temperature for 3 minutes. Finally, the oven temperature was increased at a pace of 10 °C/min to 240 °C and left at this temperature for 10 minutes. The carrier gas was helium at 1 mL/min. Analysis were performed in split mode using a split/splitless injector (Temperature: 250 °C, split: 1:20).

The SPME fiber was directly injected into the injector and left for 30 minutes.

Separated molecules were detected using a mass spectrometer which was operated in electron impact ionization (EI) in both full scan (FS) and single ion monitoring (SIM) modes, so called FASST (Fast Automated SCAN/SIM type) mode. The interface temperature was set at 300 °C and electron impact source temperature at 250 °C. The analyser was a quadrupole.

| FASST parameters: | End Time (min) | Acquisition | (m/z) scan |
|---|---|---|---|
| 3 | 8 | Full scan | 50 - 500 |
| 8 | 9 | FASST | 50 - 500 (Full scan) and 74, 115 (SIM) |
| 9 | 11 | Full scan | 50 - 500 |
| 11 | 13 | FASST | 50 - 500 (Full scan) and 111, 152 (SIM) |
| 13 | 16 | Full scan | 50 - 500 |
| 16 | 18 | FASST | 50 -500 (Full scan) and 74, 87 (SIM) |
| 18 | 20 | FASST | 50 - 500 (Full scan) and 55, 69 (SIM) |
| 20 | 25 | Full Scan | 50 - 500 |

Data were collected using the Shimadzu GCMS-Solution Software.

The same analytical parameters were used for the study C with a liquid injection (injected quantity: 1 mL)

Blank analysis and matrix blank analysis were also performed. Analytical method was optimised but not validated.

### VI. STUDY PARAMETERS

**First study:** chemical integrity of F3 pheromone and quantity
**Second study:** presence/absence of F3 pheromone and relative quantity
**Third study:** presence/ absence of F3 pheromone and relative quantity.

### VII. RESULTS

### A. Indirect diffusion of the device

Blank analysis: F3 pheromone was found into Acetone as shown on the chromatogram of Figure 25.

Two replicas of the study were performed. In both cases, the quantity of F3 pheromone still present into the liquid was measured twice a week. An example of obtained chromatogram is shown in Figure 26.

For the two replicas, F3 pheromone was quantified in each device and the results showed that it remained chemically stable over time because the proportion of each active ingredient met the requirements. As far as the total percentage of F3 is concerned (average of the percentages measured in each device), the results were slightly different for each replica but followed the same trend as shown on the graph of Figure 27.

The obtained results showed that the quantity of F3 pheromone was always within the acceptable ranges, thus indicating a stability of this pheromone over time.

In addition, the masses of the diffusers were also measured at each time studied during the second replica and the results showed that the masses decreased constantly over time, as shown on the graph of Figure 28. Visually, the quantity of liquid in the diffusers also decreased as expected (Figure 29).

The fact that the percentage of F3 pheromone remained stable despite the decrease of the mass and volume of the liquid indicates that both the solvent and the pheromone disappeared over time.

### B. Direct diffusion of the device

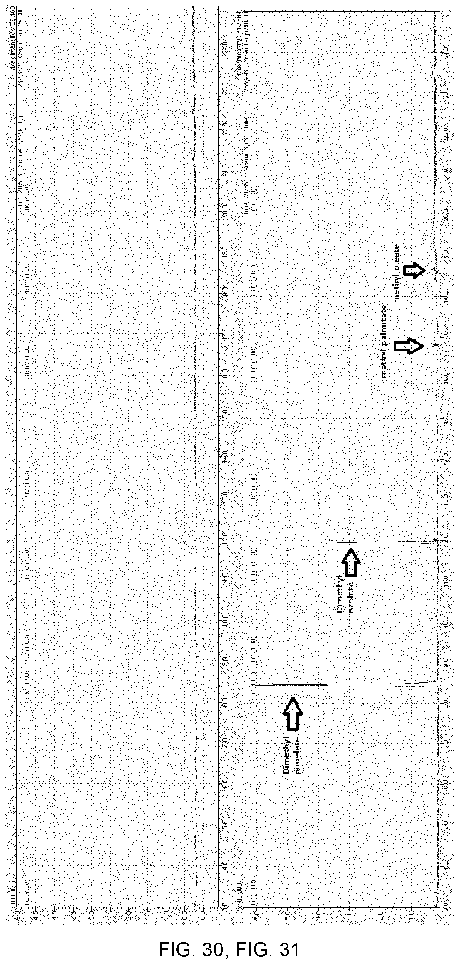

Blank analysis: No F3 pheromone was found on the fiber before adsorption, as shown on the chromatogram of Figure 30.

Studied samples: Two replicas of the study were performed. In both cases, the presence, and the relative quantity of F3 pheromone were measured, three times a week. An example of an obtained chromatogram is shown in Figure 31. The chromatogram showed that the intensities of the chromatographic peaks corresponding to dimethyl pimelate and dimethyl azelate were significantly higher than those corresponding to methyl palmitate and oleate showing a wider diffusion of the smallest molecules over the largest ones.

For the measurement of the relative quantity of active ingredient spreading in air, the area of the chromatographic peak corresponding to the compound was measured using Shimadzu GCMS- Solution software.

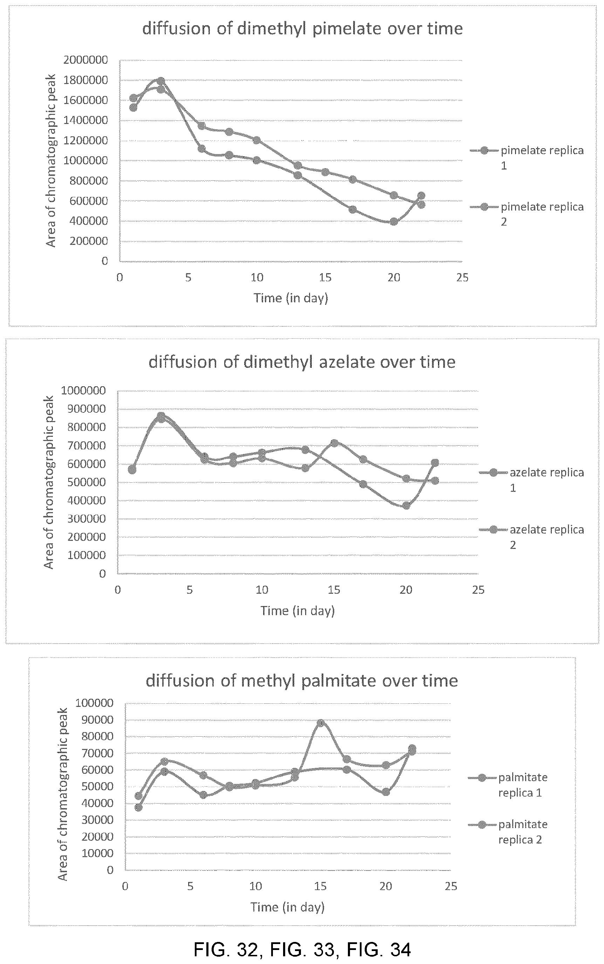

The graphs representing the area of chromatographic peak as a function of time were then plotted for each active ingredient: see figures 32 to 35.

The results showed that the direct diffusion over time was different for each active ingredient. Thus, the diffusion of dimethyl pimelate gradually decreased over time (from a chromatographic area of 1 500 000 to 500 000). Dimethyl azelate appeared to have a constant diffusion cause the areas of the corresponding chromatographic peak measured each time are closed to each other. As far as methyl palmitate and methyl oleate are concerned, the results showed a slight increase of the diffusion over time.

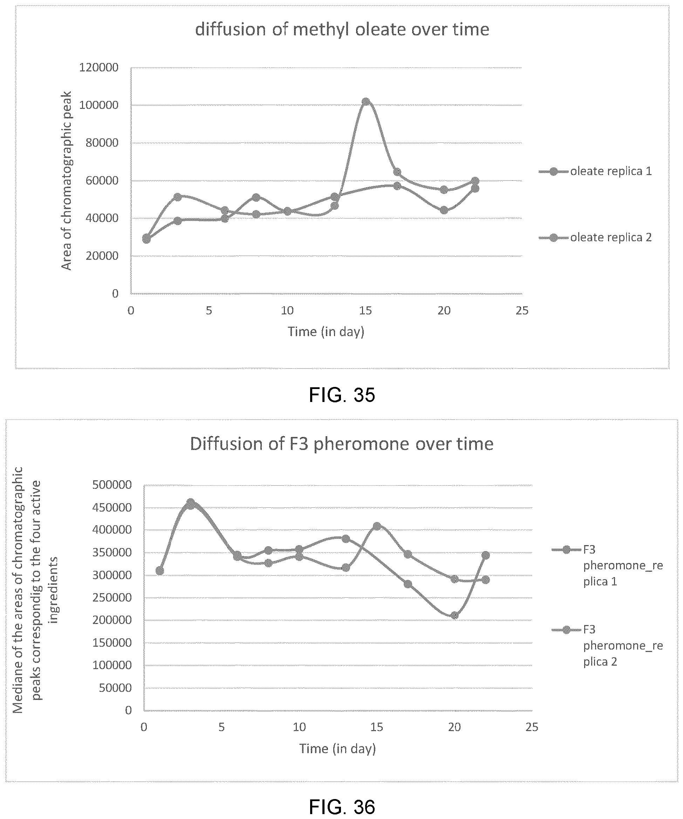

In order to plot the graph representing the diffusion of F3 pheromone over time, an average of the areas of the four chromatographic peaks corresponding to all active ingredient was first considered but the values corresponding to dimethyl pimelate were too high, resulting to a F3-graph similar to the one obtained for dimethyl pimelate. A decision was thus made, to use the median of the areas for a better representation: see Figure 36.

The results showed that the diffusion of F3 pheromone is relatively constant over time.

A measure of the mass losses of the devices over time was also performed and the results were the same than those obtained during study A.

### C. Migration of the pheromone along the internal structure of the stick

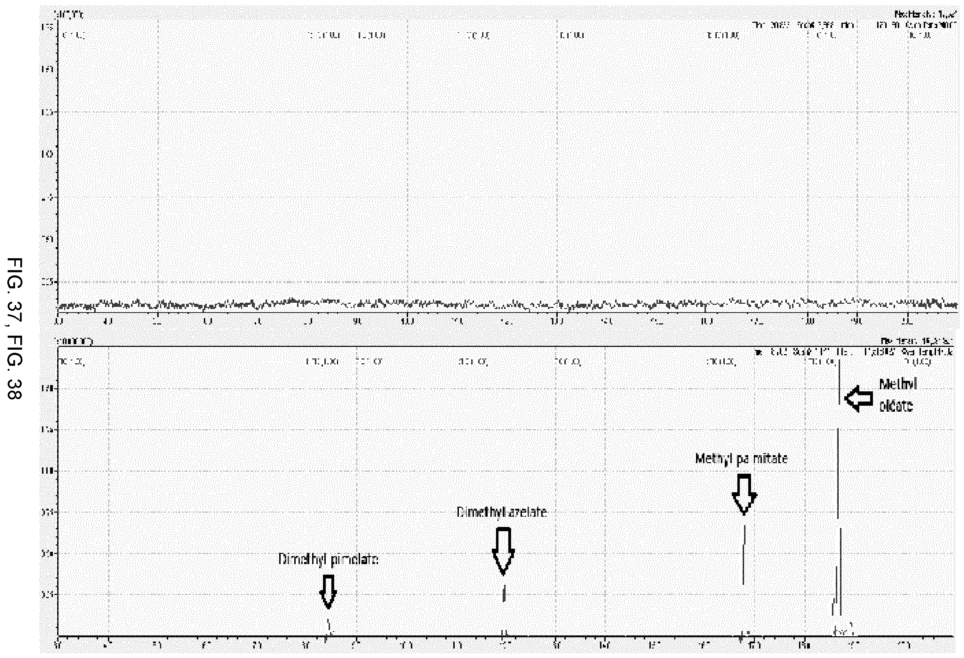

Blank analysis: No F3 pheromone was found on blank rattan stick as shown on the chromatogram of figure 37.Studied sample: Only one replica of the study was performed. For the study, the presence and the relative quantity of F3 pheromone were measured, at T=1, 3, 10, 15 and 22 days. An example of obtained chromatogram is shown on Figure 38.

The results showed that F3 pheromone was fully present showing a proper migration of the pheromone along the internal structure of the stick.

The quantities of active ingredient, in relation to each other, were close to those present into the liquid. Thus, methyl oleate was the major compound found on the top of the stick. On the contrary, dimethyl pimelate and azelate were less present. Those observations are also in accordance with the results obtained during the study of direct diffusion. Dimethyl pimelate being the most volatile compound, it stands to reason that it is less present on the sticks.

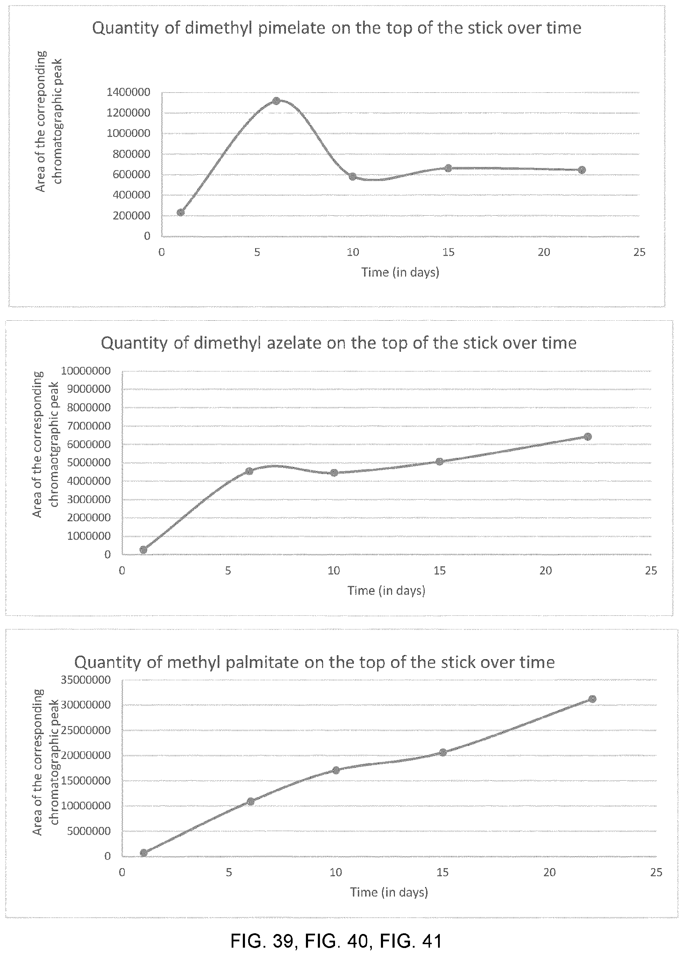

For each molecule, the area of the corresponding chromatographic peak was measured and the graph representing this area as a function of time was plotted: see Figures 39 to 42.

The results showed that the quantity of each active ingredient on the top of the stick increased during the first days, then a difference appeared. Thus, the quantity of dimethyl pimelate decreased significantly between 5 and 10 days before stabilising whereas the quantities of the others active ingredients increased constantly over time even if a slight stabilisation is observed between 5 and 15 days. Methyl palmitate and methyl oleate however, showed a more pronounced increase of their quantities over time.

### VIII. CONCLUSION

A new galenic form was chosen for the product F3 feline facial pheromone and the behaviour of the pheromone in this galenic was studied according to three studies.

The first study consisted in measuring the quantity of pheromone into the liquid over time. The results showed that F3 pheromone was chemically stable into the liquid over time despite the decrease of the liquid showing a dual diffusion of both the solvent and the pheromone. Indeed, if the quantity of pheromone had increased over time, it would have meant that the solvent had evaporated faster than the pheromone. On the contrary, if the quantity of pheromone had decreased over time, the pheromone had evaporated faster than the solvent.

The second study consisted in measuring the quantity of pheromone spreading in the air over time. The results showed that dimethyl pimelate and dimethyl azelate were the two molecules spreading the most in the air, whereas methyl palmitate and methyl oleate had a lowest diffusion. These observations are in accordance with the sizes of the molecules. Dimethyl pimelate being the smallest molecule, it stands to reason that it is also the most volatile one.

The study of the diffusion over time showed that the diffusion of dimethyl pimelate gradually decreased but remained the most intense one. Dimethyl azelate showed a constant diffusion whereas methyl palmitate and methyl oleate diffused slightly more each day.

The last study was aimed at measuring the quantity of pheromone on the top of the sticks over time. The results showed that methyl oleate and methyl palmitate were the molecules found in greater quantities on the top of sticks. These quantities also increased over time. The increase of the quantity of dimethyl azelate is distinct during the first five days before slowing during the next days. As far as dimethyl pimelate is concerned, the quantity found on the top of the sticks increased the first five days before decreasing the tenth day and stabilising afterwards.

The fact that methyl oleate is the molecule found in greatest quantity on the top of sticks is in accordance with the quantity present into the liquid. It also showed that there are, apparently, no differences between the molecules i.e., they all migrated correctly along the internal structure of the sticks. Moreover, the increase of molecule's quantities over time showed that there is never a blocking due to the structure of the sticks.

Combined all these results, we were able to conclude that F3 pheromone migrated in a homogenous way to the top of the sticks (because it remained chemically stable into the liquid over time). Then, dimethyl pimelate and dimethyl azelate to a lesser extent, spread mostly in the air (less present on the top of the sticks) whereas methyl palmitate and methyl oleate had a lower diffusion (quantity of the two molecules increased over time). Moreover, it appeared that the sticks were never saturated.

### F/ Study: diffusion of F3 feline facial pheromone - diffusion with sticks device - study of the impact of the number of sticks, quantity of product, optimized set-up

The observations of section E/ have been furthered by studies aimed at addressing the following questions:
1) What happens if we refill the diffuser with liquid without changing the sticks?
2) Will we obtain the same "diffusion graphs" if we place 8 sticks instead of 4?
3) Does the liquid quantity also have an influence on the diffusion of molecules?

### I. SCHEME OF THE STUDY AND EXPERIMENTAL DESIGN

### A. First study: direct diffusion of the device containing 8 sticks with a refill

This study aimed at answering the following questions:
- Will we obtain the same "diffusion graphs" if we place eight sticks instead of four?
- What happen if we refill the diffuser with liquid without changing the sticks?

To that purpose, three devices containing 40 mL of F3 feline facial pheromone product and eight rattan sticks were prepared and left on diffusion. Every Monday, Wednesday and Friday, the diffusion of the pheromone in air was checked by analysis by gas chromatography coupled with mass spectrometer (GC/MS) and SPME (solid phase microextraction) until there was no liquid left. Then, the solution was refilled and a second study of the diffusion of the pheromone was performed.

Experimentally, the studied device was taken and placed into a closed space under identical conditions than in section E/, and for analyzing the same data.

### B. Second study: direct diffusion of the device containing 120 mL of F3 feline facial pheromone solution

This study aimed at answering the question: does the liquid quantity also have an influence on the diffusion of the molecules?

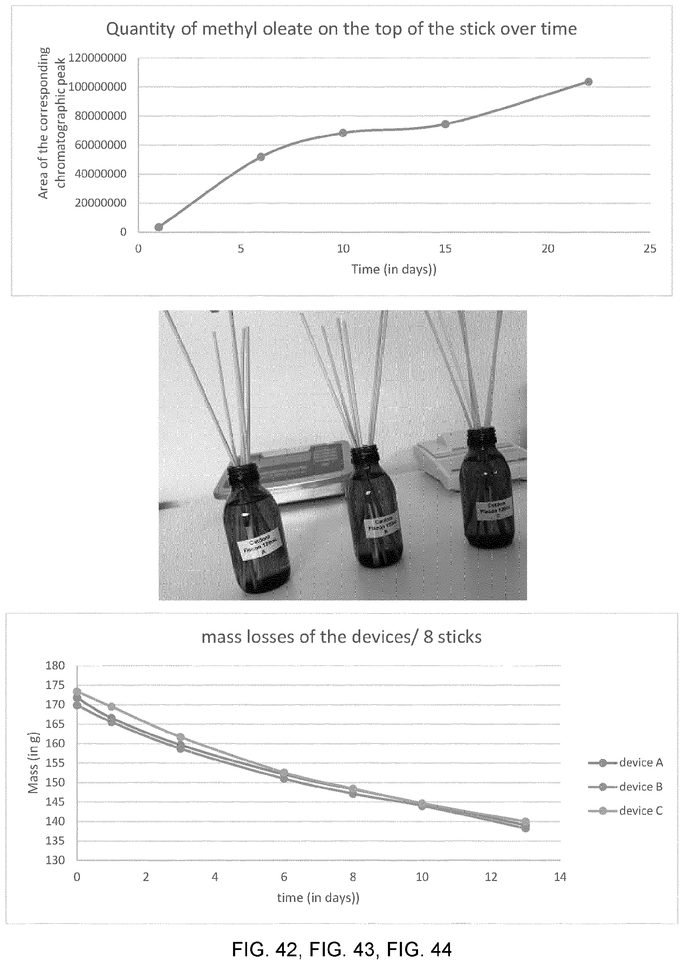

To that purpose, three devices containing 120 mL of F3 feline facial pheromone product and six rattan sticks were prepared and left on diffusion as shown on Figure 43.

The direct diffusion of F3 pheromone was then studied following the same protocol as the protocol of the first study shown in Section E/ herein.

### STUDY COMPOSITION

The studied composition was produced in-house and is the same as the composition shown in Section E/ IV. above.

### II. MATERIAL

### A. Experimental material Experimental material is the same as shown in Section E/ V. above.

### B. SPME GC/MS Analysis

Analyses were carried out using gas chromatography with mass spectrometer. Experimental conditions are the same as shown in Section E/ V. above.

### III. STUDY PARAMETERS

**First study:** presence/absence of F3 pheromone and relative quantity
**Second study:** presence/absence of F3 pheromone and relative quantity

### IV. RESULTS

### A. Direct diffusion of the device containing 8 sticks with a refill

### - Mass losses

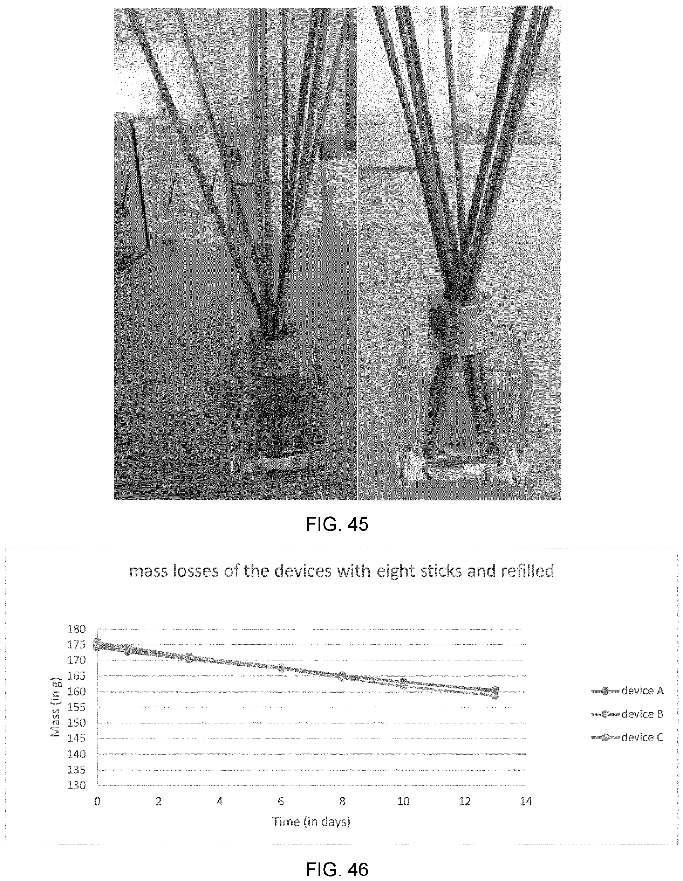

Each measuring day, the devices were weighed and the level of the solution in the flask was controlled. Results are shown in Figures 44 and 45.

These results showed that the diffusion of the solution through the devices was two times faster with eight sticks than the diffusion with four sticks as there was no liquid left after 13 days (22 days with four sticks).

After this study, the devices were refilled, and the masses were measured three times a week similarly to the first study.

Results are shown on Figure 46.

These results showed that the mass losses were considerably slower when the devices were refilled: after 30 days, there was still liquid in the flask. It appeared that the sticks were saturated over time resulting in a lower consumption of the product.

### - Chromatographic analysis

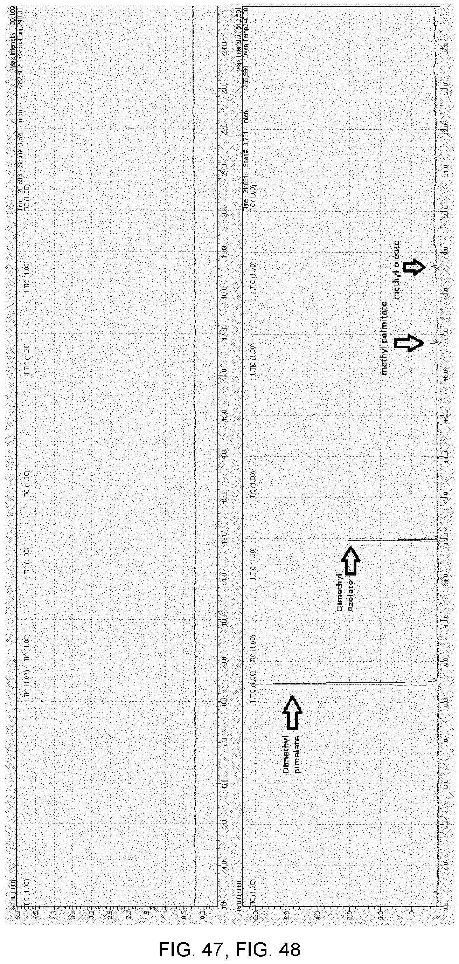

Blank analysis: No F3 pheromone was found on the fiber before adsorption, as shown on the chromatogram of Figure 47.

### Studied samples:

A first replica of the study was performed then, the devices were refill, and the second study began. For each study, the presence and relative quantity of F3 pheromone were measured, three times a week. An example of obtained chromatogram is shown in Figure 48

The chromatogram showed that the intensities of the chromatographic peaks corresponding to dimethyl pimelate and dimethyl azelate were significantly higher than those corresponding to methyl palmitate and oleate showing a wider diffusion of the smallest molecules over the largest ones.

For the measurement of the relative quantity of active ingredient spreading in air, the area of the chromatographic peak corresponding to the compound was measured using Shimadzu GCMS- Solution software.

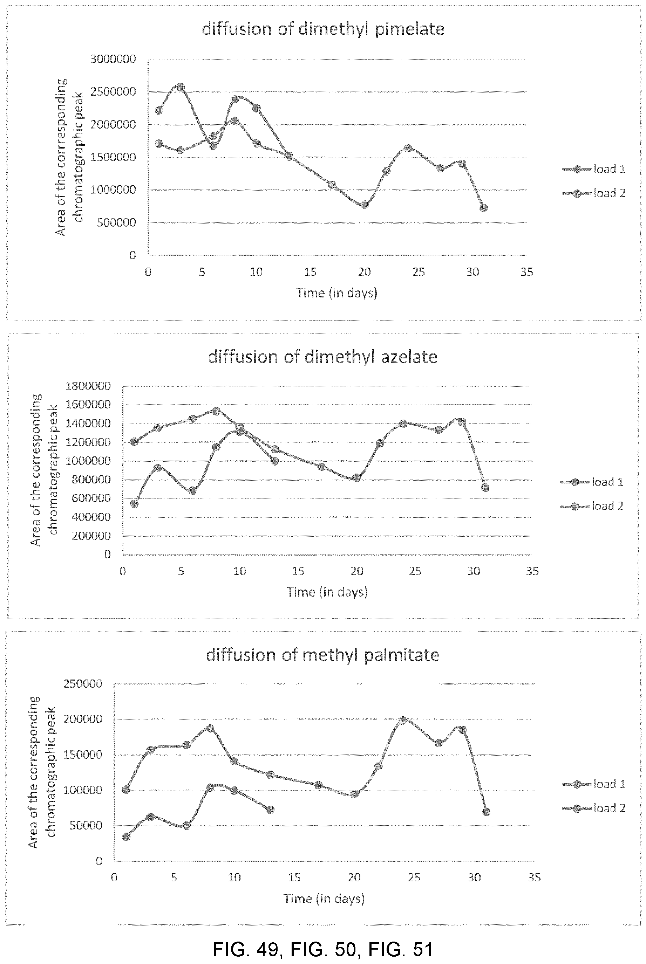

The graphs representing the area of chromatographic peak as a function of time were then plotted for each active ingredient. See Figures 49 to 52.

As seen in the first diffusion study (with four sticks), dimethyl pimelate was the molecule who showed the highest diffusion. Methyl palmitate and oleate diffused with less intensity. If we compared the results obtained before and after refilling of the solution, we saw that, except for dimethyl pimelate, the active ingredients showed a better diffusion after refilling. Moreover, the molecules were still spreading in the air 30 days after refilling even if the sticks appeared to be completely saturated and the mass didn't fall anymore. In general, the diffusion of the active ingredients seemed irregular but perceptible. The study was stopped because the sticks were saturated and the level of liquid in the flask didn't fall anymore.

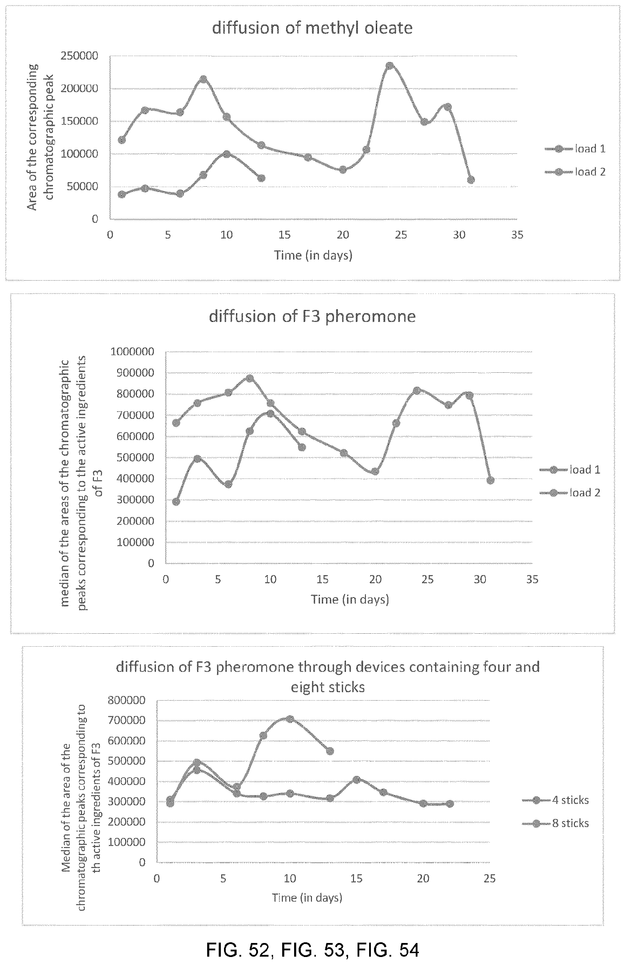

In order to plot the graph representing the diffusion of F3 pheromone over time, an average of the areas of the four chromatographic peaks corresponding to all active ingredient was first considered but the values corresponding to dimethyl pimelate were too high, resulting to a F3-graph similar to the one obtained for dimethyl pimelate. A decision was thus made, to use the median of the areas for a better representation. See Figure 53. The results showed that the diffusion of F3 was faster with the first load than the second, but the second load showed a more intense diffusion over time which can be explained by the gradual saturation of the sticks.

If we compared the results obtained for the diffusion of F3 pheromone with four and eight sticks: see figure 54. As we can see, the diffusion was similar for the first five days then a significant difference appeared. Indeed, the diffusion with eight sticks was intense and short whereas the diffusion with four sticks was longer and less intense but regular.

To conclude this study, we can say that the more sticks there are in the device and the better diffusion of F3 pheromone there is. However, a saturation of the sticks appeared over time thus it is important to regularly change the sticks.

### B. Direct diffusion of the device containing 120 mL of F3 feline facial pheromone solution

### - Mass losses

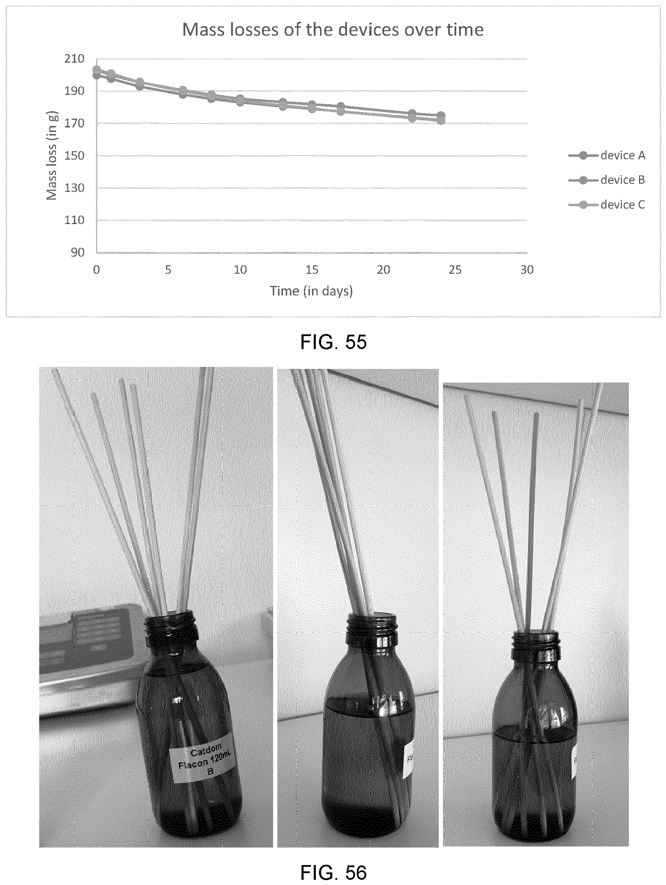

Each measuring day, the flasks were weighed, and the volume of the liquid was checked visually: see Figures 55 and 56.

Those results showed that the masses of the flasks as well as the volume of liquid decreased very slowly because of the gradual saturation of the sticks. This too slow diffusion of the product was, again, not interesting from a commercial point of view. The study was then stopped after 28 days.

### - Chromatographic analysis

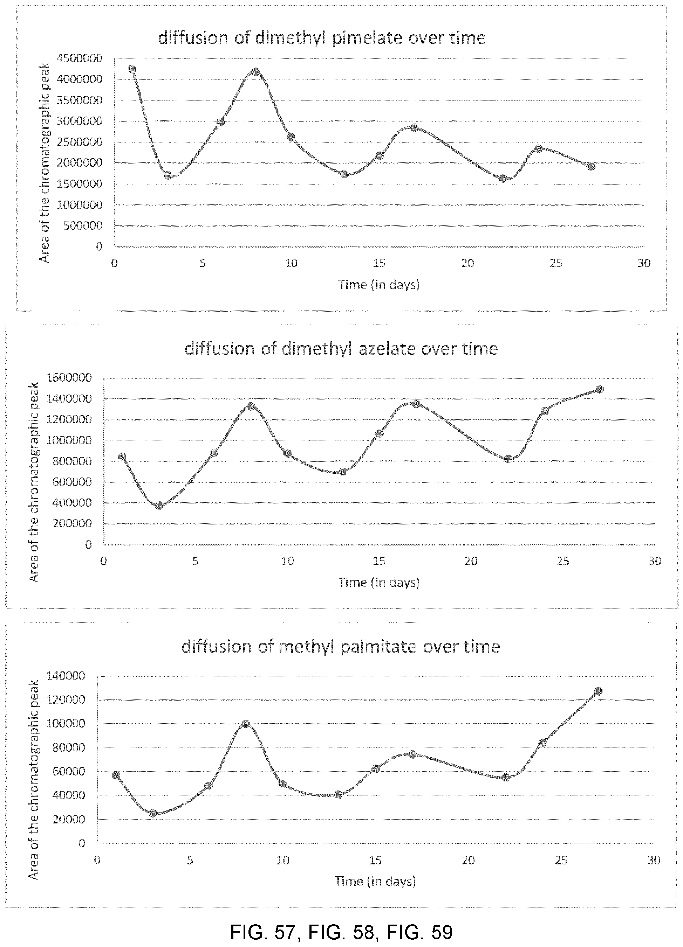

The blank analysis and studied samples showed the same chromatographic profiles for this study than the previous one. Like the previous study, the area of the corresponding chromatographic peak was measured for each active ingredient at each measuring point and the diffusion curves of Figures 57 to 60 were drawn.

Those results showed that the diffusions of active ingredients were very heterogeneous, contrary to what have been observed till now. Thus, the shapes of the diffusion curves were like an accordion. However, in general, the diffusion of dimethyl pimelate decreased over time whereas the diffusion of the others active ingredients slightly increased.

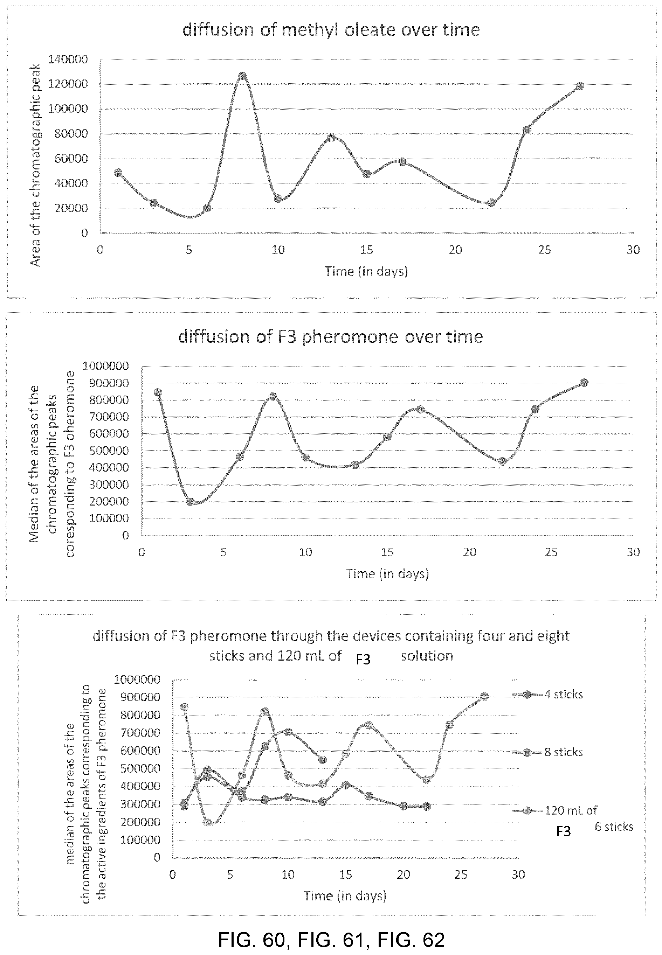

The median curve of F3 pheromone was then drawn: see Figure 61.

The curve showed the same diffusion profile than dimethyl azelate with increasing and decreasing of the diffusion over time.

To conclude, we compared the diffusion obtained with the device containing 40 mL of F3 feline facial pheromone with 4 sticks, the device containing 40 mL of F3 feline facial pheromone with 8 sticks and the device containing 120 mL of F3 feline facial pheromone with 6 sticks: see Figure 62.

Those results showed that the diffusion with 120 mL of F3 feline facial pheromone was the most intense one but also the most fluctuating. The device containing eight sticks also showed a more intense diffusion than the device containing four sticks. However, this diffusion was shorter. Concerning the device containing four sticks, its diffusion was less intense but also more homogeneous. Those results thus showed that, the more sticks and product the devices contained, the more intense and fluctuating diffusion we obtained. This observation can be explained by the fact that the sticks were quickly saturated when we had more sticks and solution because the solution migrated faster.

### V. CONCLUSION

A new galenic form was chosen for the F3 feline facial pheromone product and the behaviour of the pheromone in this galenic was studied according to several studies.

Preliminary studies were performed, and the results allowed us to learn more about the behaviour of the pheromone through the device.

Subsequent studies were then conducted. The first study aimed at determining the importance of the number of sticks placed into the container. The results showed that, the more sticks we have, the better and faster diffusion we obtain. However, the results also showed that the sticks were saturated so that, although feasible, it may not be recommended to use the same sticks with a refill of product.

The second study aimed at determining the appropriate quantity of product to obtain the better diffusion. To that purpose, a device containing 120 mL of F3 feline facial pheromone product was studied. The results showed that the sticks were quickly saturated (slight decreased of the mass over time) and the diffusion was intense but fluctuating.

All those results showed that, in any case, the product diffused well in the air. Devices containing 40 mL of F3 feline facial pheromone product are appropriate for commercial purpose, given the financial perquisites that have been set. The number of sticks will depend on the time use we will set, but four to eight sticks seem to be an appropriate choice. It will be better to change the sticks at each refilling.

After these studies, all the questions regarding the behaviour of F3 pheromone through the devices were answered. The next study will then, be focused on the behaviour of another pheromone through the device.

### G/ Assessment of the effectiveness of a new galenic, i.e., PCDS = Passive Capillar Diffusion System for the F3 fraction (F3 feline facial pheromone) (F3-PCDS)

Aims of the Study:
- To assess the "survival" level of the diffuser (if the cats play with it or destroy it).
- To confirm the effectiveness of the product in this galenic.

State of the art:
The F3 facial-marking pheromone (F3 feline facial pheromone) mainly allows helping cats to be more confident on their environment and to decrease stress-related behaviours. The product is currently commercialized as a spray and electric diffuser. The development of a new galenic could be useful to increase the possibilities of using it and the new galenic would avoid technical and environmental drawbacks relative to the use of electric power of pressurized containers. A Passive Capillary Diffusion System (PCDS) could allow a continuous diffusion of the treatment without the need for an electrical outlet.

### Protocol of the Study

### Scheme of the study (brief description) and experimental design

Cross-over design: cats were placed in an experimental room for 15min and exposed either to the treatment or to the control solution (we will use 2 rooms: 1 room treatment and 1 room control). The rooms were arranged to imitate a living room (armchair, coffee table, shelf...) and the diffuser was be placed on a shelf.

### Animals/Individuals:

### 14 cats participated in the study

Species: Cat (*Felis silvestris catus*)
Breed: European
Sex: males and females
Age: Between 4 and 15 years
Origin: IRSEA centre

### Inclusion criteria:

- Species: cat (*Felis silvestris catus*)*.*
- Gender: male or female, entire and neutered.
- Breed: European
- Inclusion of cats able to show all behaviours related to their behavioural repertoire and without evident organic problems.

### Non-inclusion criteria:

- Individuals showing no interest in the garbage can during the habituation phase.
- Animals whose detention is in contradiction with the legislation of the country.
- Animals that are kept in inappropriate conditions regarding fundamental needs and welfare (recognised situation of abuse and/or husbandry conditions that are objectively unacceptable).
- Animals that could represent a risk to people, according to the clinical chart and the investigators' judgement.
- Every queen that is pregnant or nursing.
- Animals that present a sensory deficit (vision, olfaction or audition).
- Animals with an alteration of the conscious state or a neurologic disorder.
- Animals that present a chronic organic disease related to the digestive system.
- Animals that were treated or are being treated, within the three weeks preceding the trial with corticoids or other hormonal treatment.

### Exclusion criteria:

- Animals that suffer from an illness during the study.
- Animals that show signs of very high stress or extreme emotional distress during testing.

### Material

- 2 Armchairs
- 2 Coffee tables
- 4 shelves
- 1 chronometer
- 2 cameras
- 2 gorilla pods
- 2 Water bowl
- 2 Litters
- Toys
- Diffusers = PCDS: treatment + control

### Detailed unfolding of the study (description of all phases of the test):

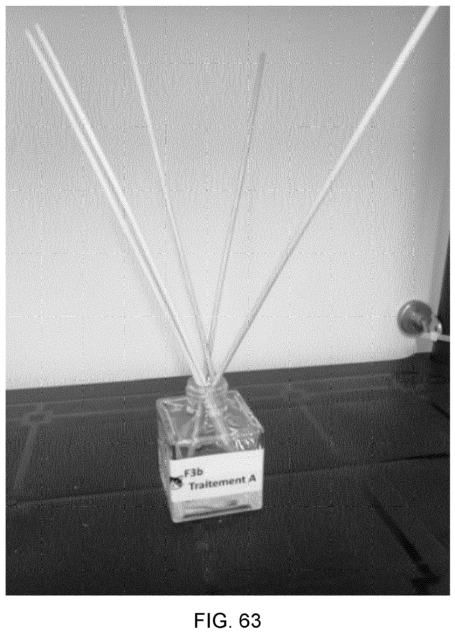

Experimental rooms are well known by cats. They are regularly exposed to a habituation procedure to make sure that they were comfortable staying alone in the experimental room. The diffuser was placed in the room 48h before the beginning of the trial (T0) - See Figure 63

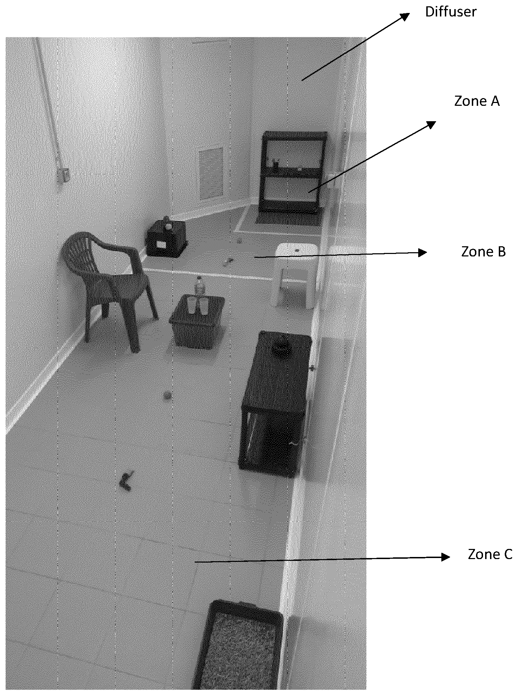

Cross-over design: cats were placed on an experimental room for 15min and were exposed to the treatment or to the control solution the first time, and the other one the second time. The rooms were arranged to imitate a living room (armchair, coffee table, shelf...) and the diffuser was put on a shelf. See Figure 64

### Experimental room

Once the test was finished, the operator opened the test area's door, gently lured the cat back in the cat carrier. The cat was then carefully transported back to its cattery.

All items were removed from the test room and a visual check of the room was performed to double check if any urine spraying happened. Then the test area was thoroughly cleaned by the two operators following a cleaning protocol.

The room was prepared again.

Then another trial could begin.

The estimated duration of one trial is a maximum of 45 minutes allowing the operators to test 4 cats per morning per test room (2 equivalent test rooms were available for the trial) : T0+2 (8 cats), T0+3 (6 cats).

The test was filmed and analysed *a posteriori* (10 min will be analysed).

### Treatment:

The treatment is at 2%
Excipient: 3-methoxy-3-methyl-1-butanol + Tinogard tt.

### Control / Placebo:

A mix of ethanol and water (60% and 40% respectively).

### Administration of the treatment:

The diffuser was placed on a shelf.

### Randomisation:

As the study design is a cross-over, the administration sequence of the two study treatments is randomized. The randomization is stratified on the sex of the cats.

Randomisation is done using SAS 9.4 software copyright ^{©} 2002-2012 by SAS Institute Inc., Cary, NC, USA with the help of the PLAN procedure involved in a SAS macro.

### Management of blinded procedure:

There is a blinded procedure. Only the chemist making the product knows the correspondence/match between treatment and product. The experimenters and the statistical engineer only know the treatments as A and B.

### Parameters:

- **Latency to approach** = time take by the cat to approach the diffuser. If the cat never approaches it, then the maximum time of the test duration will be noted, i.e., 900 seconds. We consider the cat approach when he is in zone a (corresponding to one longer of cat from the diffuser).
- **Interaction with the diffuser** (duration) = sniffing, touching, playing with the diffuser.
- **Level of interaction with the diffuser** (Likert scale: 0. ignore - 1. Look - 2. smell - 3. touch - 4. drop - 5. destroy)
- **Proximity duration** = time spent by cats in each zone (duration)
   ∘ Zone a
   ∘ Zone b
   ∘ Zone c
- **Meowing** (frequency)
- **Rubbing** (frequency)
- **Marking** (frequency)
- **Head shaking** (frequency)
- **Sniffing** (frequency)
- **Lay down** (duration)
   **Sit** (duration)
- **Movement** (duration)
- **Stay** (duration)
- **Play** (duration)
- **Cat not visible** (duration)

Unexpected events/side events: they are registered.

### Management of missing or aberrant data:

Methodology in order to search atypical values (outliers) consists in centering and reduction of data; is considered atypical each centered-reduced value superior to 3 in absolute value.

Once detected, outliers are removed from the database if qualified as absurd in consultation with clinicians. Management of missing data and outliers: deletion.

### Statistical analysis:

The study set up is a 2*2 cross-over with two treatments and two periods performed on a sample of 15 cats. In a cross-over, the subject is his own control, each cat was exposed to the two different treatments over successive two periods.

Before analysing the model, it is necessary in a cross-over to test the carry-over effect. Note that the carry-over effect is the effect of the treatment depending on the order of administration. To test the effect of the treatments on the different periods, and thus to validate the cross-over, it is important that the order of administration and the effect of the treatments are independent. Otherwise, the comparison of the treatments is done simply over the first period. In our statistical analysis, the carry-over effect will be the Sequence factor.

Data analysis was realized thanks to R (version 4.1.2). The significance threshold was classically fixed at 5%. Effects of treatment (A/B), period (1/2) and sequence (AB/BA) were tested. The cat and the cattery were considered as random effects. Data were analysed with different statistical models depending on the nature of variables and the values assigned to them.

For the behaviours expressed as durations, General Linear Mixed Models (GLMM) was performed on raw data when residual normality is verified (graphically and using the Shapiro test). If normality was not verified, Box-Cox transformation was applied to data in order to try to obtain normality.

For the behaviours expressed as frequencies, Generalized Linear Mixed Models (GzLMM) with the Poisson distribution was performed as a first choice. The Pearson Chi-square statistic/DF indicator was regarded in order to evaluate the dispersion of the data. If this statistic is less than 2, no overdispersion is detected and Poisson model is adapted. If it is upper than 2, data is overdispersed and the model is not adequate. In that case, a negative binomial GzLMM was preferred.

### Result

The study set up was a 2*2 cross-over with two treatments and two periods performed on a sample of 14 cats. In a cross-over, the subject is his own control; each cat was exposed to the two different treatments over successive two periods.

Data analysis was realized thanks to R version 4.0.3 software and RStudio version 1.4.1103 Copyright ^{©} 2020. This software is the result of a collaborative effort and is distributed under the terms of the GNU General Public License. The significance threshold is classically fixed at 5%.

Effects of treatment, sex, and treatment*sex were analyzed using mixed models in which the cat was considered as a random effect. More specifically, for continuous data (durations, heart rate), general linear mixed models were performed after the verification of residues normality and homoscedasticity. When the normality was not verified, the Box-Cox transformation was applied to data to try to obtain the normality. For discrete data (frequencies), models for count data were used. The Poisson mixed model was applied on data as first intention. The dispersion was then evaluated thanks to the Pearson/Chi-square indicator. If this indicator is comprised between 0.5 and 2, the dispersion is correct, and the Poisson model can be interpreted. If a phenomenon of underdispersion or overdispersion was detected, the negative binomial model was preferred. For pupil dilatation, which is a qualitative variable, a multinomial model was used.

To valid the study design, which is a crossover, carry over effect was tested by including the sequence of administration of the treatments as an effect to test in addition to the treatment effect. If sequence effect is significant, carry over effect is detected. This mean that the first treatment given in the trial inadvertently affects the subsequent treatment. In that case, only data from the first period will be analysed, leading to a classical analysis of 2 parallel groups, with a strong lack of power.

In all cases, models were simplified by removing non-significant effects while AIC and BIC criteria decreased. The following table summarizes the effect of the treatment for all variables:

| Variable | Trt A | Trt B | Model used | p-value |
|---|---|---|---|---|
| | Mean ± SD | Mean ± SD | | |
| Latency to approach | 122.01 ± 102.83 | 246.11 ± 229.13 | GLMM | 0.0517 |
| Interaction duration | 2.45 ± 3.76 | 2.86 ± 5.91 | GLMM | 0.8213 |
| Zone A duration* | 20.92 ± 25.54 | 29.44 ± 28.22 | GLMM | 0.5672 |
| Zone B duration * | 52.53 ± 43.80 | 139.33 ± 68.47 | GLMM | 0.0180 |
| Zone C duration * | 526.54 ± 63.18 | 431.22 ± 95.25 | GLMM | 0.0519 |
| Lay down duration | 22.25 ± 58.11 | 42.25 ± 92.39 | GLMM | 0.0191 |
| Sit duration * | 287.12 ± 129.32 | 95.17 ± 125.01 | GLMM | 0.0180 |
| Movement duration | 147.56 ± 72.46 | 138.88 ± 89.37 | GLMM | 0.6782 |
| Stay duration | 183.96 ± 101.23 | 173.00 ± 102.17 | GLMM | 0.7166 |
| Play duration * | 8.98 ± 22.24 | 77.56 ± 56.89 | GLMM | 0.0016 |
| Not visible duration | 56.77 ± 50.90 | 59.68 ± 60.17 | GLMM | 0.8903 |
| Meowing frequency* | 96.14 ± 58.04 | 37.43 ± 39.69 | Poisson | 0.5561 |
| Marking frequency | 0.43 ± 1.34 | 0.21 ± 0.80 | Poisson | 0.3269 |
| Rubbing frequency* | 0.14 ± 0.38 | 2.57 t 2.51 | Poisson | 0.0102 |
| Head shaking frequency | 1.00 ± 1.04 | 1.57 ± 1.02 | Poisson | 0.2297 |
| Interaction level | - | - | Multinomial | 0.6512 |

| | | | | |
|---|---|---|---|---|
| * Analysis performed on period 1 only because of a significant carry over effect. | | | | |

In addition, for the frequency of meowing, the effect of the treatment is different according to the sex (p=0.0058): the effect of the treatment is significant in males but not in females

The aim of this study was to evaluate the effectiveness of F3 facial-marking pheromone (F3 feline facial pheromone) in a new galenic, a passive diffuser (PCDS, i.e., Passive Capillar Diffusion System). The F3 feline facial pheromone mainly allows to help cats to be more confident on their environment and to decrease stress-related behaviours. The product is currently commercialized as a spray and electric (active diffusion) diffuser. The development of a new galenic allowing a continuous diffusion of the treatment without the need for an electrical outlet is at stake.

Fourteen cats participated in this randomised controlled trial, with a cross-over design.

We did not observe any cats destroying or playing with the passive diffuser.

Results showed that cats spent more time in "zone B" (which is a zone in proximity with the diffuser), with the treatment than with the control (p=0.0180). Also, cats tended to spend less time in zone C with the treatment (p=0.0519).

Concerning behaviours, cats significantly spent more time laying down (p=0.0191), playing (p=0.0016), and they expressed more rubbing (p=0.0102) with the treatment than with the control.

Also, they were observed longer time in sitting position with the control than the treatment (p=0.0180).

Finally, a trend was observed for the latency to approach. Cats tended to take more time to approach the treatment diffuser than the control (p=0.0517).

For the other parameters, no significant difference was observed.

These results highlight the fact that the treatment increase the behaviours associated with positive emotions (playing), that the cats are more confident with the environment (rubbing, lying down) and that they are interested to be in proximity of the treatment.

To conclude, the study highlighted a significant effect of the treatment on cats' behaviour.

### H/ Study: diffusion of F3p feline pheromone - diffusion with sticks device

Like in section E/ herein, the device of the invention has been studied using a different composition, i.e., the so-called F3p feline pheromone composition.

### I. PURPOSE OF THE STUDY

After carrying out the diffusion study on the F3 feline facial pheromone capillary diffuser product, the good results obtained led us to carry out a new diffusion study on the F3p feline pheromone product.

The question is whether the F3P pheromone is diffused using a passive diffusion system, for which direct and indirect diffusion studies will be carried out.

A field trial was also carried out by a researcher with the F3p feline pheromone product, so the aim of this diffusion study is also to prove that the field trial was carried out correctly.

### II. QUALITY APPROACH

In the spirit of good laboratory practice, all laboratory safety rules were observed, all equipment used was cleaned, and all data were recorded and certified by the study director.

### III. STATE OF THE ART

It is now well known that cats use chemical signals for different purposes, such as marking their territory, identifying friendly cats and reporting danger. Many studies of these signals have been carried out by the IRSEA and four different semiochemicals have, so far, been identified: F3, F4, soothing maternal pheromone and clawing pheromone.

The F3 pheromone is produced by glands in the cheeks of cats, and is used to mark their territory. The synthetic analogue of this pheromone has proven its effectiveness in managing the stress of a new environment.

The soothing maternal pheromone is produced by the cat in the inter-mammary groove during parturition, and contributes to the bond between the cat and her kittens. The synthetic analogue of this pheromone has also been shown to promote bonding between cats in the same household.

In order to combine the two effects of the F3 and CAP pheromones on stress and relationships between cats, IRSEA came up with the F3P pheromone. This pheromone is an F3-CAP hybrid. The currently marketed form of this product comes in the form of an electric dispenser, which diffuses the pheromone into the air, but has the disadvantage of requiring an electrical outlet. To overcome this drawback, SIGNS has developed a new passive diffusion system known as "capillarity". Since the other passive diffusion system developed by SIGNS, the block diffuser, used for products intended for farm animals, does not keep the F3 pheromone intact, as some of the molecules degrade over time, this new system had to be devised. Having successfully diffused the F3 pheromone, we now need to study the diffusion of the F3P pheromone.

### IV. SAMPLES STUDIED

These studies were carried out on the F3p feline pheromone product, prepared in-house in October 2022.

### V. PARAMETERS STUDIED

For the direct diffusion study, the parameter studied is the presence or absence of the F3P pheromone and the relative quantity measured with the chromatographic peak area.

For the indirect diffusion study, the parameter studied is also the presence or absence of the F3P pheromone and the amount of remaining pheromone measured in the solution.

### VI. DIRECT DIFFUSION STUDY OF THE F3p feline pheromone PASSIVE CAPILLARY DIFFUSION SYSTEM

### 1) Study diagram and experimental design

For this study, three diffusers each containing 40mL of product and 6 capillaries were prepared and diffused. Every Monday, Wednesday and Friday, pheromone diffusion in the air was monitored by GC/MS and SPME (Solid Phase Micro Extraction) until no liquid remained.

Experimentally, the device studied was placed in a closed space (in our case an upturned aquarium) containing the SPME fiber. The set-up si the same as the set-up shonw in Section D/ above and in Figure 24. The SPME fiber was left for 2 hours to give the molecules time to absorb onto the fiber, then the fiber was injected into the GC/MS instrument for analysis. Pheromone diffusion over time was then studied.

### 2) Equipment used

- Lot of 3 glass diffusers (50mL) (Ref: B0768VY49Y) rattan sticks (120 pieces) (Ref: B0774HZTBP) were purchased at Amazon.
- All laboratory equipment (glassware and consumables) was purchased from Dominique DUTSCHER.
- Scale (1mg-220g, model AX205 DeltaRange) purchased from Mettler-Toledo.
- SPME fiber, acrylate, 85 µm, grey (Ref: 227-35319-03) was purchased from Shimadzu.
- Acetone (Ref: A/0560/17) was purchased from Fisher Scientific.
- Methyl Laurate (Ref: Radia7118) was purchased at Oléon
- Methyl myristate (Ref: W272205) and methyl stearate (Ref: W504507) were purchased from Merck.
- Methyl palmitate (Ref: 07006), methyl oleate (Ref: 10123) and methyl linoleate (Ref: 11006) were purchased from Stearinerie Dubois.
- Dimethyl pimelate (Ref: B22026) and dimethyl azelate (Ref: L17458) were purchased from Alfa Aesar
- 3-methoxy-3-methyl-1-butanol (Ref: L15953) was purchased from Alfa Aesar
- Tinogard TT (Ref: 56149673) has been purchased from BASF

### 3) GC/MS and SPME analysis

Same elements as in Section E/ V. C. are reproduced in this section.

### 4) Results

### a) Lost weights

On each measurement day, the devices were weighed and the level of solution in the bottle was checked.

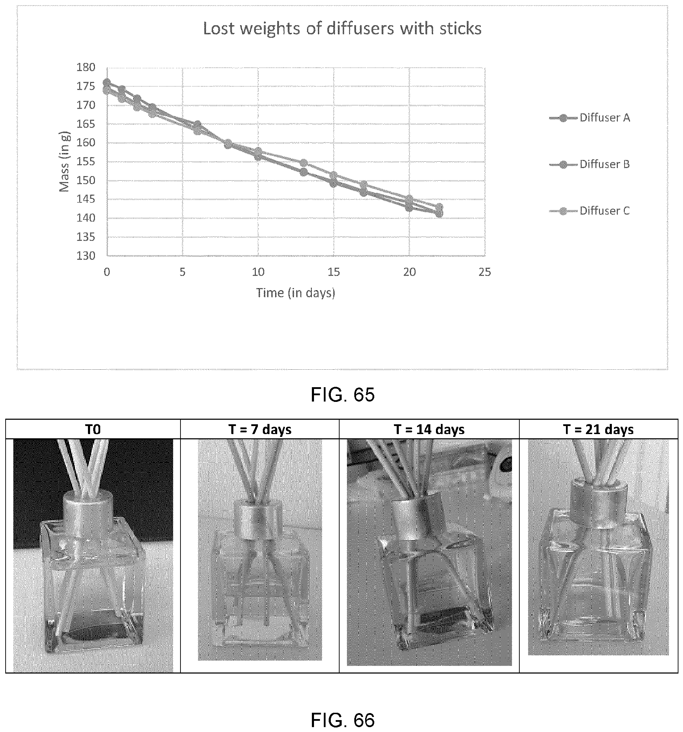

The result is shown in Figure 65.

A photograph was taken before each analysis to better visualize the level of solution remaining in the vial. The photos are shown in Figure 66.

These results show that the solution does indeed decrease over time.

### b) Chromatographic analysis

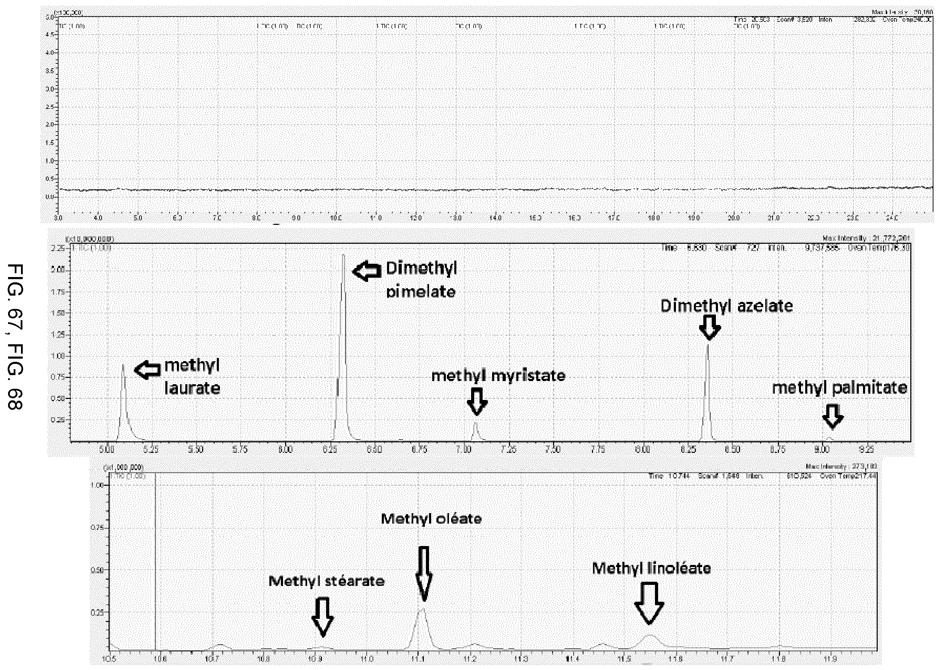

*Analysis of a blank:* No F3P pheromone was found on the fiber prior to adsorption, as shown in the chromatogram of Figure 67.

*Samples studied:* The presence and relative quantity of F3P were measured three times a week.

Examples of chromatograms obtained are shown in Figure 68. The chromatogram obtained showed that small molecules such as methyl laurate, methyl myristate and dimethyls have higher peak intensities than other molecules. To measure the relative amount of active substance diffused in air, the air chromatographic peak corresponding to the compound was measured using Shimadzu GCMS-Solution software.

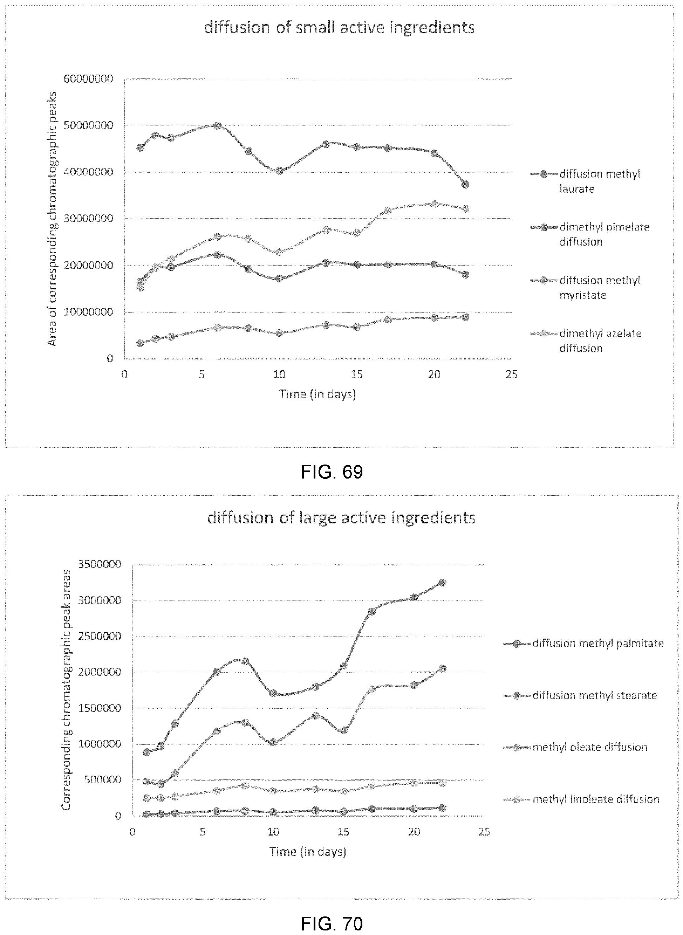

The graphs show the chromatographic peak area as a function of time for each category of active ingredient, small molecules and large molecules, as shown in Figures 69 and 70.

The results show that F3P pheromone diffusion remained intense throughout the study. Diffusion of small molecules was homogeneous over time, beginning to decline after 20 days, while that of methyl palmitate and oleate increased over time.

### VII. INDIRECT DIFFUSION STUDY OF THE F3p feline pheromone CAPILLARY PASSIVE DIFFUSION SYSTEM

### 1) Study diagram and experimental design

For this study, three diffusers each containing 40mL of product and 6 capillaries were prepared and diffused. Once a week, on Wednesdays, the amount of pheromone remaining in the solution was monitored by gas chromatography analysis coupled to a flame ionization detector (GC/FID) until no liquid remained. The percentage of pheromone was measured weekly.

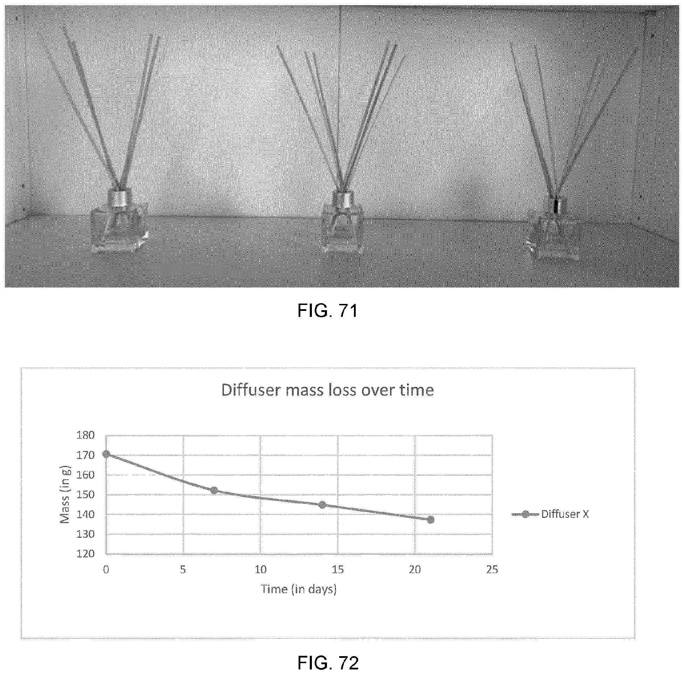

Experimentally, the device studied was diffused as shown in Figure 71.

Next, the percentage of pheromone was checked by external calibration using a GC/FID calibration range.

### 2) Equipment used

Same elements as in Section H/ Vi. 2) are reproduced herein.

### 3) GC/FID analysis

Analyses were carried out by gas chromatography coupled to a flame ionization detector. The instrument was a Shimadzu GC 2025^{®} with an AOC20i^{®} autosampler. Separation was performed on an Agilent DB-FFAP^{®} column (30 m × 0.25 mm × 0.25 µm, stationary phase: nitroterephthalic acid-modified polyethylene glycol). The temperature of the gas chromatography oven was initially maintained at 140°C for 2 minutes, then increased at 10°C/min to 250°C and left at this temperature for 3 minutes. The carrier gas was helium at 1 mL/min. Analyses were performed in split mode using a split/splitless injector (temperature: 250°C, split: 1:50).

The detector used was a flame ionization detector. The detector temperature was 250°C with an air flow rate of 400mL/min, hydrogen 40mL/min and nitrogen 30mL/min.

Data were collected using Shimadzu Lab-Solution software.

An analytical blank analysis (solvent only) was also carried out.

The analytical method has been optimized but not validated.

### 4) Results

### a) Lost weights

Every Wednesday, the devices were weighed and the level of solution in the bottle was checked. The result is shown on Figure 72.

The masses of the diffusers were averaged to obtain a single curve, then the mass loss was noted each week.

### b) Chromatographic analysis

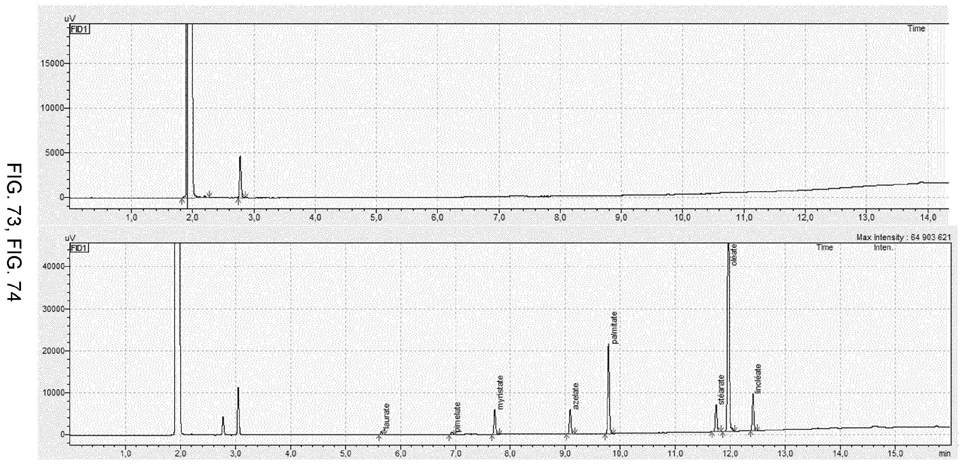

*Analysis of a blank:* No F3P pheromone was found on the chromatograms of the analytical blanks (solvent), as shown in the chromatogram of Figure 73.

*Samples studied:* Pheromone quantification was therefore carried out once a week by external calibration using GC/FID.

For this purpose, a calibration range was prepared for each analysis. The range comprises 5 standard solutions, one of which corresponds exactly to the theoretical concentrations obtained by the test sample (100%), while the other 4 have higher and lower concentrations (50%, 75%, 125%, 150%) to cover a wide range of concentrations. For the test sample, 2.5g was weighed into a 50 mL volumetric flask and the volume made up to the mark with acetone. The resulting solution was transferred to a 1.5 mL GC vial for analysis.

Each week, the percentage of pheromone remaining in the solution was measured and is shown in the following table (Table 9):

| | **T0** | **T=7 days** | **T=14 days** | **T=21 days** |
|---|---|---|---|---|
| **% PA** | 2,08 | 2,06 | 2,05 | / |

At T=21 days, there is no data because the diffuser was empty, with no solution left inside.

We can see that the percentage of pheromone remains constant over time, indicating that diffusion is homogeneous.

The quantities of methyl laurate and dimethyl pimelate found were very low. These are the most volatile molecules. An example of the chromatogram obtained is shown on Figure 74.

To check that the pheromone was migrating at the top of the rods, the latter were analyzed in the same way as for checking the percentage of pheromone in the solution.

The ends of the sticks were then sampled and placed in a 25mL volumetric flask. The solvent acetone was added until the flask began to shrink, then placed in an ultrasonic bath for one hour. The solution was filtered through a syringe filter and placed in a chromatographic vial for analysis.

The results are shown in the following table (Table 10):

| | **T=7 days** | **T=14 days** | **T=21 days** |
|---|---|---|---|
| **% PA** | 14,64 | 23,89 | 16,27 |

With the results obtained, we can conclude that the pheromone has indeed migrated to the top of the sticks. What's more, the percentage rises to 23% before falling back to 16%, a sign that saturation of the sticks has been reached and that the pheromone is diffusing well over time.

### VIII. CONCLUSION

Direct and indirect diffusion studies were therefore carried out on the F3P pheromone product. The results of both studies show very good diffusion of this product using the passive capillary diffusion system. All active ingredients diffuse overtime, even methyl stearate, which tends to diffuse less well in the other passive diffusion system, the diffuser block.

What's more, the bottle is completely empty after 21 days of use, which once again shows how well this product spreads.

### I/ Assessment of the effectiveness of a new galenic, i.e., PCDS = Passive Capillary Diffusion System for the F3P fraction (Potentialized Feliway) (F3P-PCDS)

Like in section G/ herein, the effectiveness of the device of the invention has been studied using a different composition, i.e., the so-called F3P composition, which corresponds to the composition analyzed in section H/ herein.

### Aims of the Study

- To evaluate the effectiveness of the new formula in Passive Capillary Diffusion System (PCDS) form.

### State of the art

The aim of the analogue of F3 facial-marking pheromone (F3 feline facial pheromone) application is mainly allow to help cats to be more confident on their environment and to decrease stress-related behaviors. The product is currently commercialized as a spray and diffuser. A new galenic was tested through a Passive Capillary Diffusion System (PCDS) with a similar result. This galenic allow a continuous diffusion of the treatment without the need for an electrical outlet. This new method of application will be tested with F3P.

### Protocol of the Study

### Scheme of the study (brief description) and experimental design

Cross-over design: cats were placed on an experimental room for 10 min and were exposed either to the treatment or to the control solution (2 rooms were used: 1 room treatment and 1 room control). The rooms were arranged to imitate a living room (chair, coffee table, shelf...) and the PCDS will be put on a shelf.

### Animals/Individuals

14 cats participated in the study. Same characteristics as those mentioned in Section G/ Protocol of the Study are to be reproduced herein.

Inclusion criteria: Same as those mentioned in Section G/ Protocol of the Study.

### Non-inclusion criteria:

- Animals that could represent a risk to people, according to the clinical chart and the investigators' judgement.
- Every queen that is pregnant or nursing.
- Animals that present a sensory deficit (vision, olfaction, or audition).
- Animals with an alteration of the conscious state or a neurologic disorder.
- Animals that present an organic disease.
- Animals that were treated or are being treated, within the three weeks preceding the trial with corticoids or other hormonal treatment.

Exclusion criteria: Same as those mentioned in Section G/ Protocol of the Study.

### Material

• 2 Chairs, 2 Coffee tables, 4 Shelves, 1 Chronometer, 4 Cameras, 2 Gorilla pods, 2 Water bowl, 2 Litters , Toys, PCDS: treatment + control

### Detailed unfolding of the study (description of all phases of the test)

### The PCDS was placed on the room 48h before the beginning of the trial (T0).

Cross-over design: cats were placed on an experimental room for 10min and exposed to the treatment or to the control solution the first time, and the other one the second time. The rooms were arranged to imitate a living room (chair, coffee table, shelf...) and the PCDS was put on a shelf.

Once the test is finished, the operator opened the test area's door, gently lured the cat back in the cat carrier. The cat was then carefully transported back to its cattery.

All items were removed from the test room and a visual check of the room was performed to double check if any urine spraying happened. Then the test area was thoroughly cleaned by the two operators following a cleaning protocol.

The room was prepared again.

Then another trial could begin.

The estimated duration of one trial was a maximum of 45 minutes allowing the operators to test 4 cats per morning per test room (2 equivalent test rooms were available for the trial): T0+2 (8 cats), T0+3 (6 cats).

The test was filmed and analyzed *a posteriori* (10 min will be analyzed).

### Treatment:

The treatment is at 2%
Excipient: 3-methoxy-3-methyl-1-butanol + Tinogard tt.

### Control / Placebo:

A mix of ethanol and water (60% and 40% respectively).

### Administration of the treatment:

It is a diffuser which was put on a shelf.

### Randomization:

Same text as Same as "Randomization" text in Section G/ Protocol of the Study.

### Management of blinded procedure:

There was a blinded procedure. Only the chemist making the product knew the match/correspondence between treatment and product. The video analysis was done without information on the nature of the treatment placed on the shelf, so the observer and the statistical engineer only knew the treatments as A and B.

### Parameters

- **Latency to approach** - Time take by the cat to approach the PCDS. If the cat never approaches it, then the maximum time of the test duration will be noted, i.e., 600 seconds. We consider the cat approach when he is in zone a (corresponding to one longer of cat from the PCDS).
- **Interaction with the PCDS** (duration) - Sniffing, touching, or playing with the PCDS.
- **Level of interaction with the PCDS** - Likert scale: 0. Ignore - 1. Look - 2. Smell - 3. Touch - 4. Drop - 5. Destroy.
- **Proximity duration** - Time spent by cats in each zone (duration). The cat is in the area when half of its body has passed the corresponding line drawn on the ground.
   ∘ Zone *a*
   ∘ Zone *b*
   ∘ Zone *c*
- **Meowing** (frequency) - High-pitched call produced by an open mouth slowly closing, with frequency modulation (Tavernier et al., 2020).
- **Rubbing** (frequency) - The cat rubs any part or entire length of body against an object (Stanton et al., 2015).
- **Marking** (frequency) - While standing with tail raised vertically, the cat releases a jet of urine backwards against a vertical surface or object. The tail may quiver as urine is discharged. (Stanton et al., 2015); the beginning of a sequence may be observed without going as far as the emission of urine.
- **Head shaking** (frequency) - The cat rotates head from side to side (Stanton et al., 2015).
- **Self-scratching** (duration) - The cat scratches an area of the body with one of its hind legs.
- **Lay down** (duration) - The cat's body is on the ground in a horizontal position, including on its side, back, belly, or curled in a circular formation (Stanton et al., 2015).
- **Sit** (duration) - The cat is in an upright position, with the hind legs flexed and resting on the ground, while the front legs are extended and straight (Stanton et al., 2015).
- **Movement** (duration) - The cat is on the move, without distinguishing between gaits. Locomotion and exploration activities (e.g. sniffing) are included into the *movement* behavior.
- **Stay** (duration) - The cat stays still, standing (>2s) or crouching; this behavior assumes a certain level of tension/alert.
- **Play** (duration) - Non-functional behaviors involving physical activity and/or interaction with objects.

Unexpected events/side events : they were registered.

Management of missing or aberrant data: Same text as the corresponding section in Section G/ Protocol of the Study.

### Statistical analysis

The study set up is a 2*2 cross-over with two treatments and two periods performed on a sample of 15 cats. In a cross-over, the subject is his own control, each cat was exposed to the two different treatments over successive two periods.

Before analyzing the model, it is necessary in a cross-over to test the carry-over effect. Note that the carry-over effect is the effect of the treatment depending on the order of administration. To test the effect of the treatments on the different periods, and thus to validate the cross-over, it is important that the order of administration and the effect of the treatments are independent. Otherwise, the comparison of the treatments will be done simply over the first period. In our statistical analysis, the carry-over effect will be the Sequence factor.

Data analysis was realized thanks to R (version 4.1.2). The significance threshold was classically fixed at 5%. Effects of treatment (A/B), period (1/2) and sequence (AB/BA) were tested. The cat and the cattery were considered as random effects. Data will was analyzed with different statistical models depending on the nature of variables and the values assigned to them.

For the behaviors expressed as durations, General Linear Mixed Models (GLMM) was performed on raw data when residual normality was verified (graphically and using the Shapiro test). If normality was not verified, Box-Cox transformation was applied to data to try to obtain normality.

For the behaviors expressed as frequencies, Generalized Linear Mixed Models (GzLMM) with the Poisson distribution was performed as a first choice. The Pearson Chi-square statistic/DF indicator was regarded to evaluate the dispersion of the data. If this statistic is less than 2, no overdispersion was detected and Poisson model was adapted. If it is upper than 2, data is overdispersed and the model was not adequate. In that case, a negative binomial GzLMM was preferred.

### Results

The report presents the statistical analyses performed for the F3P-PCDS-02 trial, whose objective was to evaluate the effect of the new formula in stick form. The study set up was a 2*2 cross-over with two treatments and two periods performed on a sample of 14 cats. In a cross-over, the subject is his own control; each cat was exposed to the two different treatments over successive two periods.

Data analysis was realized thanks to R version 4.1.2 software and RStudio version 1.4.1103 Copyright ^{©} 2020. This software is the result of a collaborative effort and is distributed under the terms of the GNU General Public License. The significance threshold is classically fixed at 5%.

Before interpreting the models, it is necessary in a cross-over to test the carry-over effect. Note that the carry-over is the effect of the treatment depending on the order of administration: the order of administration should not influence the effect of the treatment to valid the cross-over design. If the effect of the treatment is different depending on the order of administration, the comparison of the treatments should be performed on the data of the first period only. In the following statistical analysis, the carry over effect was represented by the sequence factor.

Effects of treatment, sex, sequence and treatment*sex were analysed using mixed models in which the cat and the cattery were considered as random effects.

More specifically, for continuous data (durations), general linear mixed models were performed after the verification of residues normality and homoscedasticity. When the normality was not verified, the Box-Cox transformation was applied to data to try to obtain the normality. For continuous data with a lot of zero values, hurdle mixed model were performed.

For discrete data (frequencies), models for count data were used. The Poisson mixed model was applied on data as first intention. The dispersion was then evaluated thanks to the Pearson/Chi-square indicator. If this indicator is comprised between 0.5 and 2, the dispersion is correct, and the Poisson model can be interpreted. If a phenomenon of underdispersion or overdispersion was detected, the negative binomial model was preferred. For pupil dilatation, which is a qualitative variable, a multinomial model was used.

For the scores, multinomial mixed models were performed.

For the latencies, a frailty Cox model was used after verifying the proportional hazard condition with the Schoenfeld residues.

In all cases, models were simplified by removing non-significant effects while AIC and BIC criteria decreased, and multiple comparisons were computed using the Tukey adjustment.

The following table summarizes all the variable analysed:

| Variable | Model used |
|---|---|
| Latency to approach (seconds) | Cox |
| Interaction duration (seconds) | Hurdle |
| Interaction level (score) | Multinomial |
| Zone A duration (seconds) | GLMM |
| Zone B duration (seconds) | GLMM |
| Zone C duration (seconds) | GLMM |
| Meowing (frequency) | Negative binomial |
| Head shaking (frequency) | Poisson |
| Self-scratching (seconds) | Hurdle |
| Lay down duration (seconds) | Hurdle |
| Sit duration (seconds) | GLMM |
| Movement duration (seconds) | GLMM |
| Stay duration (seconds) | GLMM |
| Play duration (seconds) | Hurdle |

### Conclusion

### 1. Primary effect: treatment effect

The following table summarizes all the results observed for the treatment effect:

| Variable | Mean (SD) or N(%) - treatment A | Mean (SD) or N(%) - treatment B | Model used | Results |
|---|---|---|---|---|
| Latency to approach (seconds) | 116.09 (151.68) | 127.98 (84.38) | Cox | X²=1.8922, DF=1, p=0.1690 |
| Interaction level (score) | 6 (42.8%) | 6 (42.8%) | Multinomial | X²=0.0424, DF=1, p=0.8368 |
| Level=0 | 4 (28.6%) | 5 (35.7%) | | |
| Level=1 | 3 (21.4%) | 2 (14.3%) | | |
| Level=2 | 1 (7.1%) | 1 (7.1%) | | |
| Level=3 | | | | |
| Zone A duration (seconds) | 27.89 (59.47) | 14.07 (19.35) | GLMM | X²=1.0699, DF=1, p=0.3198 |
| Zone B duration (seconds) | 36.29 (33.05) | 32.72 (42.48) | GLMM | X²=0.9791, DF=1, p=0.3405 |
| Zone C duration (seconds) | 534.47 (66.70) | 550.98 (55.03) | GLMM | X²=0.7261, DF=1, p=0.4096 |
| Meowing (frequency) | 56.93 (52.02) | 49.81 (4816) | Negative binomial | X²=1.5499, DF=1, p=0.2132 |
| Head shaking (frequency) | 0.68 (0.77) | 0.61 (0.74) | Poisson | X²=0.0555, DF=1, p=0.8138 |
| Self-scratching (seconds)* | 6.07 (3.06) | 4.39 (1.12) | Hurdle | Z=-1.7824, DF=1, p=0.0747 |
| Lay down duration (seconds)* | 82.15 (87.95) | 129.20 (128.62) | Hurdle | Z=6.8825, DF=1, p<0.0001 |
| Sit duration (seconds) | 224.71 (146.95) | 193.04 (95.10) | GLMM | X²=1.1310, DF=1, p=0.3069 |
| Movement duration (seconds) | 204.32 (128.41) | 212.90 (101.46) | GLMM | X²=0.1312, DF=1, p=0.7230 |
| Stay duration (seconds) | 129.33 (127.99) | 114.06 (136.98) | GLMM | X²=1.2121, DF=1, p=0.2709 |
| Play duration (seconds)* | 21.95 (19.28) | 30.53 (34.98) | Hurdle | Z=-0.7026, DF=1, p=0.4823 |

| | | | | |
|---|---|---|---|---|
| ** Descriptive statistics were computed on cat who performed the behaviour only, to be closer to the statistical analysis used.* | | | | |

### 2. Other effects studied

Concerning the other effects studied, trends were observed for the sex effect for Meowing frequency (X²=3.7747, DF=1, p=0.0520, negative binomial mixed model) and self-scratching duration (Z=1.8131, DF=1, p=0.0698, Hurdle mixed model). Moreover, a significant effect of the sequence was observed for the interaction duration (Z=-6.1482, DF=1, p<0.0001, Hurdle mixed model).

### Discussion - Conclusion:

It seems important to highlight the fact that during the study, cats did not go beyond mere contact (level 3) in their interaction with the PCDS - most simply smelled it (2), looked at it (1) or ignored it (0). Thus, cats appear unlikely to destroy the PCDS, which would confirm that this new galenic of F3P is suitable for such use, even reachable by the animals.

Focusing now on the effects of the treatment on cats using such experimental design, exposure to the semiochemical results in some variations in their behavior compared to a placebo exposure. Therefore, individuals with the pheromonal treatment lied down significantly more (p<0.0001) and tended to scratch less (p=0.0747) than cats with placebo.

The higher occurrence of lying down behavior when exposed to the semiochemical may be indicative of a lower level of vigilance and thus a more relaxed state (Vojtkovska et al., 2020). These results are consistent with the trend that cats scratched less when exposed to pheromonal treatment compared to placebo, as increased self-scratching frequency is indicative of stress (van der Bos 1998; Buffington et al., 2006; Eckstein & Hart 2000). Nevertheless, other behaviors that may provide information on the mental state of the cats according to their exposure to the treatment did not emerge in a significant way or simply could not be analyzed because of their too low occurrence - head-shaking, rubbing. A longer period of study could be organized in the future in order to increase the probability to observe the emission of these behaviours.

This could be explained by the fact that the experimental room was not totally unknown to the cats. Outside of the experiments, they are indeed regularly brought there (once a week for a few years, by periods) via a similar protocol: only the layout of the room and the duration of the stay varied. In addition, a similar experiment (see F3-PCDS-01) had taken place a few months before. So, it may be possible that the animals in the present study have become accustomed to the procedure and the experimental room.

Therefore, it is possible that the environment redesigned for F3P-PCDS-02 trial was not stressful enough to show other differences according to the treatment.

### In a nutshell

- This study validates F3P PCDS galenic, which may be safely placed on a home's furniture by owners within reach of their cat.
- The semiochemical appears to modulate cats' behavior by helping the animals to adapt to the environment even when they are in a neutral situation on not totally unfamiliar ground.

### J/ Study: diffusion of the DAP (Dog appeasing Pheromone) - diffusion with sticks device

Like in sections E/ and H/ herein, the device of the invention has been studied using a different composition, i.e., the so-called DAP composition (Dog Appeasing Pheromone).

### I. Aim of the study

The aim of the study is to investigate the diffusion of the bitch's maternal pheromone (Dog appeasing pheromone: DAP) through a capillary diffusion system (known as PCDS). As this diffusion system has already proved its effectiveness for the diffusion of cat pheromones, the aim is to determine whether it can be adapted to the diffusion of the bitch's soothing pheromone, with a view to the possible commercialization of a passive pheromone diffuser for dogs.

### II. Quality approach

To comply with good laboratory practice, laboratory safety rules were followed, the equipment used was carefully cleaned and the data collected was recorded and certified by the study director.

### III. State of the art

The bitch's maternal soothing pheromone (DAP) is produced by the bitch's sebaceous glands during whelping, and contributes to the bond between bitch and puppy, as well as to stress regulation in puppies and adult dogs.

Electric diffusers allow pheromones to be released into the air, but have the disadvantage of requiring electricity. To overcome this problem, SIGNS has devised a passive capillary diffusion system, which has already proved effective for the diffusion of F3 and F3P cat pheromones. The next step is to study the diffusion of dog pheromone by this system. Since capillary systems are more aesthetically pleasing than the passive block diffuser systems marketed by SIGNS for its livestock range, they would be more suitable for marketing a "pet" range.

### IV. Study diagram

### A. Study of direct diffusion of PCDS diffusers

Three diffusers, each containing 40 mL of solution and 6 capillaries, were prepared and diffused. The first points were measured at T=1d, T=2, and T=3d, then every Monday, Wednesday and Friday of each study week until the diffusers no longer contained any solution. To measure the pheromone released into the air at each study time, the diffuser is first weighed (with the sticks) to measure mass loss, then placed in an enclosed area (in this case, an upside-down aquarium) containing a SPME fiber, as shown in Figure 24.

The fiber is left to diffuse above the diffuser for 2 hours (a time determined in a previous method development as the optimum time for molecules to adsorb to the phase), then analyzed using the gas chromatography/mass spectrometry (GC/MS) technique.

Three diffusers were studied for greater accuracy. The chromatograms obtained are reprocessed using GC/MS Solution software.

For each chromatographic peak, the area is recorded using GC/MS Solution software, then entered into an Excel spreadsheet. Diffusion curves giving the area of the chromatographic peak corresponding to each active ingredient as a function of time are then plotted.

### B. Study of indirect diffusion of PCDS diffusers

For this study, three diffusers containing 40 mL of solution and 6 capillaries were used for diffusion. Each week, a diffuser was weighed and the pheromone contained in the liquid solution and on the top of the capillaries was quantified by gas chromatography with flame ionization detector (GC/FID).

To quantify the pheromone in the solution, 1.25 g of solution is taken and diluted in acetone in a 25 mL volumetric flask. After homogenization, an aliquot of solution is taken for GC/FID analysis. The amount of DAP pheromone in this solution is around 1000 ppm.

To quantify the pheromone at the top of the capillaries, approximately 1 cm of the top of the capillaries is cut off with scissors and 0.1 g of the capillary tops is placed in a 25 mL volumetric flask. Acetone is then added up to the beginning of the neck, and the flask is placed in an ultrasonic bath for one hour. Acetone is then topped up to volume, and an aliquot of solution is taken and filtered through a syringe filter for GC/FID analysis.

DAP is then quantified by external calibration. For this, five solutions with concentrations ranging from 50% to 150% of the target value (100% being the target value) are prepared to cover a wide concentration range *(protocol for preparing the standard range not shown but available).*

### V. PCDS diffusers studied

The study was carried out on batch DAP_PCDS_112022, completed in-house on November 14, 2022.

### Chemical composition of diffusers:

• Active ingredient (2% w/w solution) :

**Table 1. Chemical composition of DAP pheromone**

| **Compound** | **CAS number** | **Proportion (% m/m in 2% pheromone)** | **Role** |
|---|---|---|---|
| **Methyl laurate** | 111-82-0 | 2 | Active substance |
| **Methyl myristate** | 124-10-7 | 5 | Active substance |
| **Methyl pentadecanoate** | 7132-64-1 | 4 | Active substance |
| **Methyl palmitate** | 112-39-0 | 18 | Active substance |
| **Methyl stearate** | 112-61-8 | 13 | Active substance |
| **Methyl oleate** | 112-62-9 | 29 | Active substance |
| **Methyl linoleate** | 112-63-0 | 29 | Active substance |

• Excipients:

**Table 2. Excipients of the PCDS device**

| **Compound** | **CAS number** | **Proportion in formula (% m/m)** | **Role** |
|---|---|---|---|
| **Tinogard TT** | 6683-19-8 | 0,1 | Antioxidant |
| **3-methoxy-3-methylbutan-1-ol** | 56539-66-3 | 97,9 % | Solvent |

### VI. Materials and analytical methods

### A. Experimental equipment

- 40 mL bottles (Order no.: B0768VY49Y) and rattan sticks (Order no.: B0774HZTBP) from Amazon
- All glassware and laboratory consumables supplied by Dominique Dutscher
- Scale (capacity 420 g, accuracy 1mg, model: AX423 OHAUS) supplied by Dominique Dutscher
- Scale (capacity 220g, accuracy 0.1mg, model AX205 DeltaRange) supplied by Mettler-Toledo
- SPME fiber, Acrylate, 85 µm, gray (Ref: 227-35319-03) supplied by Shimadzu
- Chromatographic vials (Ref: AR1-3910-12) supplied by Phenomenex
- Acetone (Ref: A/0560/17) supplied by Fisher Scientific
- Methyl laurate (technical grade, reference: Radia 7118) supplied by Oléon.
- Methyl myristate (technical grade, reference: W272205), Methyl stearate (technical grade, reference: W504807) supplied by Sigma-Aldrich.
- Methyl pentadecanoate (technical grade, reference: P0869) supplied by TCI
- Methyl linoelate (technical grade, reference: 11006), Methyl oleate (technical grade, reference: 10123) and Methyl palmitate (technical grade, reference: 07006) supplied by Stearinerie Dubois.
- Tinogard TT^{®} (reference: 56149673) supplied by CIBA
- 3-Methoxy-3-methyl-1-butanol (Ref: L15953) supplied by Alfa Aesar.
- Methyl laurate (reference standard, Ref: 234591), Methyl myristate (reference standard, Ref: M3378), Methyl pentadecanoate (reference standard, Ref: 76560), Methyl palmitate (reference standard, Ref: P5177), Methyl stearate (reference standard, Ref: S5376), Methyl oleate (reference standard, Ref: 311111) and Methyl linoleate (reference standard, Ref: L1876) supplied by Sigma/aldrich.

### B. Direct diffusion study by SPME-GC/MS

Analyses were carried out by gas chromatography/mass spectrometry (GC/MS). The instrument was a Shimadzu GCMS QP2010SE^{®} equipped with an AOC 6000^{®} autosampler. Separation was carried out on a ZB-FFAP^{®} column (30 m X 0.25 mm X 0.25 µm, stationary phase: nitroterephthalic acid-modified polyethylene glycol) supplied by Phenomenex. The furnace temperature was initially set at 80°C for 1 minute, then increased at 10°C/min to 240°C and maintained at this temperature for 2 minutes. The carrier gas was helium at a flow rate of 1 mL/min. Analysis time is 19 minutes.

The injector is a split/splitless injector used in split mode (temperature: 250°C, split: 50:1). The SPME fiber was injected directly into the injector and left to desorb for 15 minutes.

The separated molecules were detected using a mass spectrometer equipped with an electron impact source (temperature: 200°C). The analyzer is a simple quadrupole. The interface temperature is 250°C. Data were acquired in FASST mode (Fast automated SCAN/SIM type), i.e. part of the analysis was performed by scanning all ions (SCAN) and part by selecting specific ions (SIM). Target molecules were thus analyzed using ion selection.

FASST method parameters:

**Table (Table 11) showing programmed parameters for the FASST method**

| **Start time (in min)** | **End time (in min)** | **Acquisition mode** | **Scan (m/z) or selected ions** |
|---|---|---|---|
| **2** | 4 | FASST | SCAN: 50 - 300 ; SIM: 57, 71, 85 |
| **4** | 9 | SCAN | 50 - 300 |
| **9** | 10,5 | FASST | SCAN: 50 - 300 ; SIM: 45, 57, 75 |
| **10,5** | 13 | SCAN | 50 - 300 |
| **13** | 15 | FASST | SCAN: 50 - 300 ; SIM: 74, 87 |
| **15** | 16 | SCAN | 50 - 300 |
| **16** | 17 | FASST | SCAN: 50 - 300 ; SIM: 55, 67, 69, 81 |
| **17** | 19 | SCAN | 50 - 300 |

Data were collected and processed using GC/MS Solution^{®} software.

An analytical blank analysis (fiber alone) was also carried out to ensure that the chromatographic peaks observed came exclusively from the product.

### C. Quantification of the pheromone present in the solution and at the top of the capillaries by GC/FID

Analyses were carried out using gas chromatography with a flame ionization detector. The instrument was a Shimadzu GC 2025AF^{®} equipped with an AOC20i^{®} autosampler. Separation was carried out on a DB-WAX UI^{®} column (20 m X 0.18 mm X 0.30 µm, polyethylene glycol (PEG) stationary phase) supplied by Agilent. The oven temperature was initially set at 90°C and held for 2 minutes, then increased at 20°C/min to 160°C and held at this temperature for 5 minutes. Finally, the temperature was increased at 20°C/min to 220°C and held at this temperature for 5 minutes. The carrier gas is helium at a flow rate of 1 mL/min. Analysis time was thus 18.5 minutes.

The injector is a split/splitless injector used in split mode (temperature: 230°C, split: 50:1, injected quantity: 1 µL). The detector is a flame ionization detector (FID). Its temperature is 240°C, the hydrogen flow rate is 40 mL/min and the air flow rate is 400 mL/min. A cleaning gas, dinitrogen, is also present at a flow rate of 30 mL/min.

Data were reprocessed using LabSolutions^{®} software.

An analytical blank analysis (solvent analysis only) was also carried out to ensure that chromatographic peaks originated solely from the product.

### VII. Results

### A. Study of direct diffusion of PCDS diffusers by SPME-GC/MS

### • Mass loss of PCDS diffusers over time:

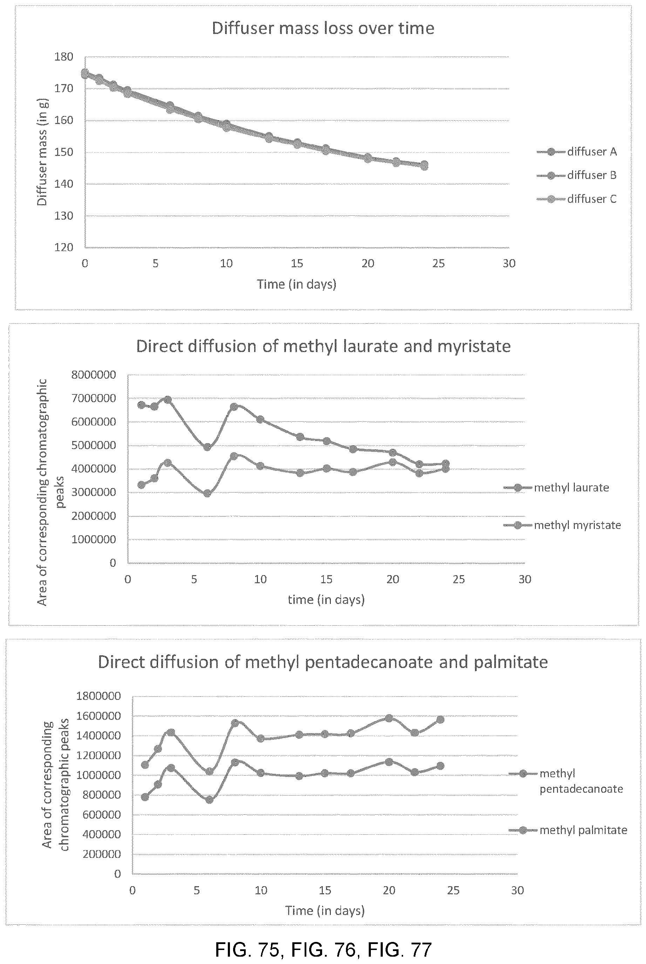

Each diffuser was weighed with the capillaries at each study time, and curves plotting diffuser mass versus time were drawn - See Figure 75.

These curves show that diffuser masses decrease significantly over time, indicating good diffusion of material into the air.

### • SPME-GC/MS analysis results:

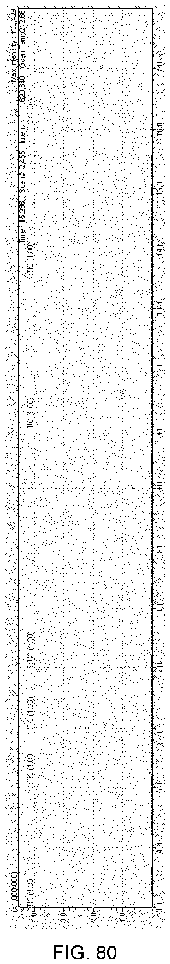

From a chromatogram of fiber blank, it could be shown (Figure 80) that no DAP pheromone active ingredient was found on the fiber prior to the diffusion study.

### Analysis of a PCDS-DAP diffuser:

The presence and relative quantity of DAP pheromone were measured at each time point in the three diffusers from the chromatograms obtained (an example of which is shown in the section on *equipment and analytical methods*)*.* The average of the peak areas measured in the three diffusers was then calculated for each active ingredient at each study point.

Generally speaking, the smallest molecules (methyl laurate, methyl myristate), and therefore the most volatile, have logically higher chromatographic peak intensities than the largest molecules (methyl palmitate, oleate and linoleate).

As mentioned above, diffusion curves were then plotted for each active ingredient, plotting the area of the corresponding chromatographic peak as a function of time. Due to the large differences in the measured areas of the chromatographic peaks of the active ingredients, it is difficult to display all the diffusion curves on the same graph, so we present three graphs: one showing the diffusions of methyl laurate and myristate, the second showing the diffusions of methyl pentadecanoate and palmitate, and the last showing the diffusions of methyl oleate, linoleate and stearate: see Figures 76 to 78.

The first thing we notice is that all the curves show continuous diffusion of the pheromone's active ingredients throughout the study, as the chromatographic peaks are clearly visible throughout (peak areas are never at 0).

If we now look at the active ingredients individually, we can see that the diffusion of methyl laurate, the most intense at the outset, decreases slightly over time, while that of methyl myristate is stable over time. The diffusion curves for methyl pentadecanoate, palmitate, oleate and linoleate show similar profiles, with a slight increase over time. As for methyl stearate, this is the active ingredient that diffuses the least, which is consistent with it being the heaviest of all. Given that it is not visible on a diffuser block diffusion study, the fact that it is visible in this case demonstrates just how effective PCDS diffusers are for passive pheromone diffusion.

For all active ingredients, there was a visible drop in diffusion between 3 and 6 days, before an increase after 8 days.

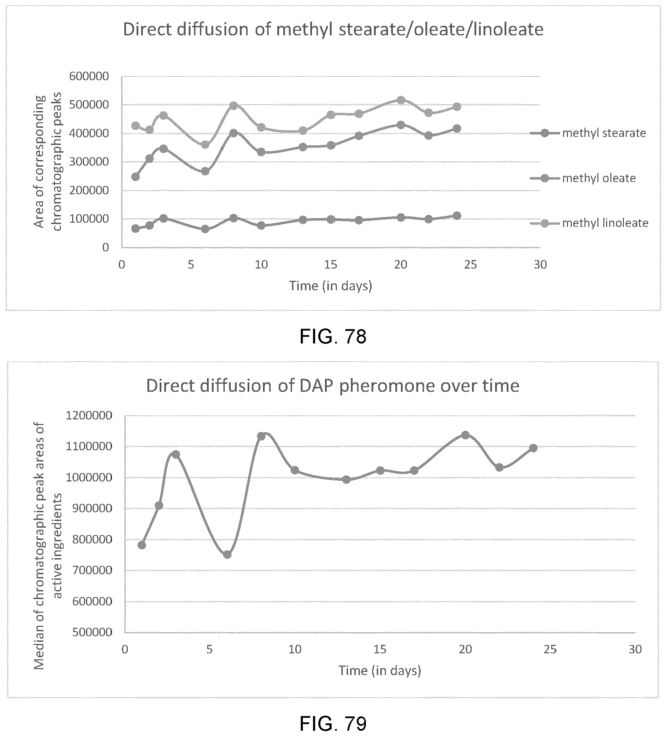

In order to plot the DAP pheromone diffusion curve, the median of the areas of all the active ingredients was calculated, as the difference in areas is such that the mean would be similar to the area of methyl laurate, which would be an inaccurate result. The median was therefore considered more correct. See Figure 79.

This curve shows that the DAP pheromone diffuses steadily through the air over time and even increases slightly. As with the individual actives, we see a visible drop between 4 and 6 days before an increase.

In all cases, these curves show that the capillary diffuser is highly effective in diffusing the DAP pheromone.

### B. Study of indirect diffusion of PCDS diffusers by GC/FID

### • Visual decrease in liquid over time:

The mass loss observed is similar to that measured in the direct diffusion study. Photographies were taken (not shown). These pictures clearly show that the diffusers empty over time, which is obviously expected in the study.

### • Results of DAP pheromone quantification in liquid and at the top of capillaries over time

| **Time** | **T0** | **T=6 j** | **T=13 d** | **T=22 j** |
|---|---|---|---|---|
| **% DAP in liquid solution (m/m)** | 2,0 ± 0,1 % | 2,0 ± 0,1 % | 1,9 ± 0,1 % | 1,9 ± 0,1 % |
| **Unaltered DAP pheromone?** | Yes | Yes | Yes | Yes |

These results show that the correct percentage of total DAP pheromone is found in the solution over time, so there is neither reconcentration nor dilution of the pheromone, which proves that we have simultaneous migration of the pheromone and the solvent along the capillaries over time. Indeed, if we had observed a reconcentration of the pheromone over time, this would have meant that the solvent was migrating faster than the pheromone along the capillaries. Conversely, if the amount of pheromone had decreased over time, this would have meant that the pheromone was migrating faster than the solvent along the capillaries.

### • Quantity of pheromone present at the top of the capillaries over time:

### Table 12. Results of pheromone quantification at the top of the rods over time

| **Time** | **T=6 j** | **T=13 d** | **T=22 j** |
|---|---|---|---|
| **% DAP in liquid solution (m/m)** | 9,8 ± 0,1 % | 14,0 ± 0,1 % | 19,7 ± 0,1 % |
| **Unaltered DAP pheromone?** | Proportion of methyl laurate: 1.2% (instead of 2%) | Proportion of methyl laurate: 0.5% (instead of 2%) | Proportion of methyl laurate: 0.4% (instead of 2%) |

As these results show, the proportion of pheromone at the top of the capillaries increases over time, indicating good migration of the pheromone along the capillaries. The capillaries do not appear to be saturated over the course of the study, as the increase in pheromone appears to be gradual. It can also be seen that the DAP pheromone is not found in the correct proportions, as the methyl laurate decreases overtime, which is in line with the results of the direct diffusion study, which showed that this active ingredient was the one that diffused with the greatest intensity in the air.

**General conclusion:** A study of the diffusion of the pheromone released into the air over time, coupled with a study of the pheromone still present in the liquid solution and at the top of the capillaries, was therefore carried out for the soothing maternal pheromone of the DAP bitch in a "PCDS" capillary diffuser.

The results of the analysis of the diffusion of the pheromone in the air showed a constant and correct diffusion of the pheromone in the air over time. All the active ingredients in the DAP pheromone were diffused with good intensity.

The results of the quantification of the pheromone in the liquid solution and at the top of the capillaries over time show that the pheromone remains stable in the solution, indicating simultaneous migration of the pheromone and the solvent into the capillaries. The progressive reconcentration of the DAP pheromone at the top of the capillaries shows that migration is gradual and that the capillaries never reach saturation over the 22 days of the study.

### K/ STUDY OF RATIOS OF MOLECULES DIFFUSED THROUGH THE STICKS OVERT TIME

Using sticks, it could be surprisingly found that the smallest molecules diffuse more than the largest molecules, while avoiding the pitfall described herein in blocks, for the active ingredients of the F3 composition. Furthermore, as small molecules diffuse more, it happens that they lose intensity over the course of the study, so the ratios are different 24 hours after immersing the sticks in the liquid and 21 days later. Here are the ratios for each pheromone studied at the start of the study and at the end.

### Cat facial pheromone (F3) :

24 h after immersion of sticks: 70 % (w/w) dimethyl pimelate, 25 % (w/w) dimethyl azelate, 3 % (w/w) methyl palmitate and 2 % (w/w) methyl oleate
21 days after immersion of sticks (empty tank): 48% (w/w) dimethyl pimelate, 43% (w/w) dimethyl azelate, 5% (w/w) methyl palmitate and 4% (w/w) methyl oleate

### F3P pheromone (cat) :

24 h after immersion of the sticks: 56 % (w/w) dimethyl pimelate, 18 % (w/w) dimethyl azelate, 20 % (w/w) methyl laurate, 4 % (w/w) methyl myristate, 1 % (w/w) methyl palmitate, 0.1 % (w/w) methyl stearate, 0.6 % (w/w) methyl oleate and 0.3 % (w/w) methyl linoleate.
21 days after immersion of sticks (empty tank): 36.5 % (w/w) dimethyl pimelate, 31.3 % (w/w) dimethyl azelate, 17.5 % (w/w) methyl laurate, 8.7 % (w/w) methyl myristate, 3.4 % (w/w) methyl palmitate, 0.1 % (w/w) methyl stearate, 2 % (w/w) methyl oleate, 0.5 % (w/w) methyl linoleate

### DAP pheromone (dog) :

24 h after immersion of sticks: 51 % (w/w) methyl laurate, 27 % (w/w) methyl myristate, 7 % (w/w) methyl pentadecanoate, 9.5 % (w/w) methyl palmitate, 0.5 % (w/w) methyl stearate, 2 % (w/w) methyl oleate, 3 % (w/w) methyl linoleate
21 days after immersion of sticks (empty tank): 37 % (w/w) methyl laurate, 33.5 % (methyl myristate), 9 % (w/w) methyl pentadecanoate, 12 % (w/w) methyl palmitate, 1 % (w/w) methyl stearate, 3.5 % (w/w) methyl oleate, 4 % (w/w) methyl linoleate.

### Despecified pheromone (core) :

5 days after immersion of the sticks (time required to initiate diffusion): 76% (w/w) methyl myristate, 19% (w/w) methyl palmitate, 3% (w/w) methyl oleate, 2% (w/w) methyl linoleate
21 days after immersion of sticks (empty tank): 70 % (w/w) methyl myristate, 22 % (w/w) methyl palmitate, 4 % (w/w) methyl oleate, 4 % (w/w) methyl linoleate

### L/ ACCELERATED STABILITY REPORT: STUDY OF THE STABILITY OF human appeasing pheromone FORMULATION IN POTS PET 300 mL

### I. Aim of the study

The aim of this study was to monitor the development of a formulation comprising a HAP (human appeasing pheromone) packaged in 300-mL PET jars with aluminium lids, under accelerated ageing conditions (at 40°C and 75% relative humidity).

The study consists of making a quantitative measurement of the human maternal soothing pheromone over time and verifying the physical integrity of the formulation.

The data will enable us to estimate the lifespan of the human appeasing pheromone in PET pots.

### II. Samples studied

The study applies to human appeasing pheromone samples produced in-house.

Nine blocks were identified and stored in a climatic chamber at 40°C and 75% relative humidity.

Three blocks were stored for three months, another three for six months and the last three for nine months.

### III. Quality approach

In accordance with good laboratory practice, safety rules were followed, the equipment used was cleaned and the data were recorded and checked by the study director.

The stability study was carried out in accordance with the ICH (international tripartite guideline) standard entitled "stability testing of new drug substances and products_Q1A(R2)" of February 2003 defining in chapter 2, paragraph 1, subdivision 7.1 "general case", the following storage conditions:

| Study | Storage condition | Minimum time period covered by data at submission |
|---|---|---|
| Long term* | 25°C ± 2°C/60% RH ± 5% RH or 30°C ± 2°C/65% RH ± 5% RH | 12 months |
| Intermediate** | 30°C ± 2°C/65% RH ± 5% RH | 6 months |
| Accelerated | 40°C ± 2°C/75% RH ± 5% RH | 6 months |

| | | |
|---|---|---|
| *lt is up to the applicant to decide whether long term stability studies are performed at 25± 2°C/60% RH± 5% RH or 30°C± 2°C/65% RH± 5% RH. | | |

In accordance with this standard, the products were therefore stored in a climatic chamber at 40°C and 75% relative humidity for the accelerated ageing stability study. If the product is stable for 9 months under these conditions, the expiry date can be set at 3 years.

### IV. Monitoring physical and organoleptic properties

### 1) Product weight

The jars were weighed before the start of the study and before each analysis.

### Results obtained :

| | **ACCELERATED AGEING CONDITIONS** | | | | | |
|---|---|---|---|---|---|---|
| **Study** | **Sample** | **Mass at T=0 (in g)** | **Mass at T=3 months (in g)** | **Mass at T=6 months (in g)** | **Mass at T=9 months (in g)** | **Change in mass (in g)** |
| T=3 months | A | 288,358 | 286,829 | - | - | -1,529 |
| | B | 303,464 | 302,019 | - | - | -1,445 |
| | C | 290,796 | 288,777 | - | - | -2,019 |
| T=6 months | A | 264,568 | - | 261,675 | - | -2,893 |
| | B | 257,422 | - | 254,522 | - | -2,900 |
| | C | 304,389 | - | 301,373 | - | -3,016 |
| T=9 months | A | 288,046 | - | - | 281,787 | -6,259 |
| | B | 284,615 | - | - | 278,793 | -5,822 |
| | C | 260,976 | - | - | 253,889 | -7,087 |

| | | | | | | |
|---|---|---|---|---|---|---|
| **Specifications:** the products must not have gained or lost more than 10% of their weight, in this case 30g. **Results : Compliant** - **see** **Figure 81** | | | | | | |

### 2) Visual appearance

The visual appearance and integrity of the block were checked at each stage of the study.

**Specifications:** the products must not have changed colour and no physical alteration must have occurred.

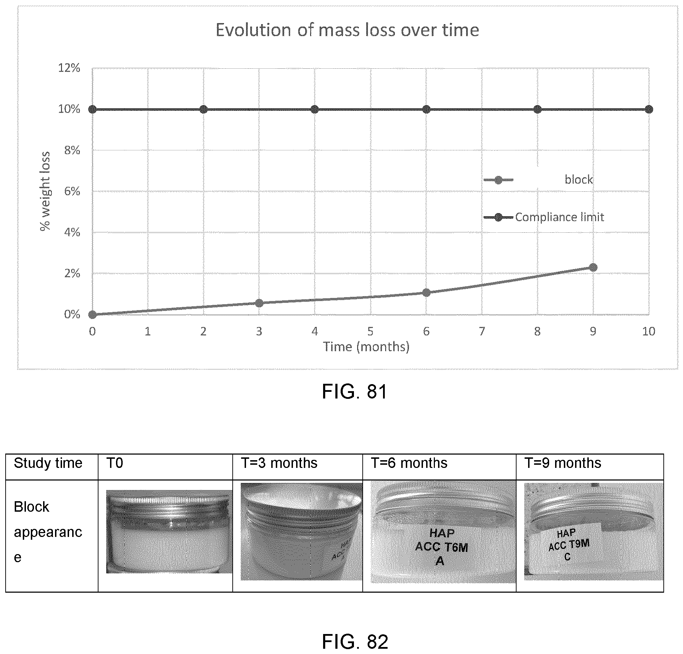

**Results: See** **Figure 82** - The blocks turned yellow and melted in the climatic chamber; these conditions are too harsh for this formulation. Stability in the packaging, on the other hand, was entirely satisfactory. We did not observe any deformation of the plastic or seepage of the product through the packaging.

### V. Chemical assay of the human soothing maternal pheromone in the formulation

### 1) Operating protocol

Analyses of the quantification of the human maternal soothing pheromone were carried out using the gas chromatography technique with a flame ionisation detector, a technique commonly known as GC/FID.

For this analysis, a sample of the product was dissolved in an organic solvent and then extracted using an ultrasonic bath. The resulting solution was then filtered through a syringe filter for analysis.

The following analytical parameters were used:
> **Technique:** Gas chromatography with flame ionisation detector (GC/FID)
> **Instrument:** GC-2025^{®} from Shimadzu
> **Injection:** split/splitless injector
> **Separation:** polar chromatographic column, carrier gas used: helium
> **Detection:** flame ionisation detector

Quantification of the human maternal soothing pheromone was carried out by external calibration.

Analytical blanks (analysis of the solvent alone) were also carried out to ensure that the results obtained came exclusively from the sample studied.

### 2) Results obtained

| **Specifications** | **T0** | **3 months** | **6 months** | **9 months** |
|---|---|---|---|---|
| 1.7% - 2.3% (m/m) | 2,0 ± 0,1 % | 1,8 ± 0,1 % | 1,7 ± 0,1 % | 1,6 ± 0,1 % |
| Proportion of HAP pheromone active ingredients respected? | yes | yes | yes | yes |

The results show that the total proportion of pheromone decreases over time and is no longer within specifications after 9 months. However, this result can be explained by the fact that the blocks melt in the climatic chamber at 40°C/75% relative humidity.

In addition, the PAH pheromone remained chemically intact throughout the study, demonstrating good stability of the active ingredients with this matrix.

### VI. Conclusion

The stability of the human appeasing pheromone formulation, packaged in 300-mL PET jars, was studied for nine months under accelerated ageing conditions at 40°C and 75% relative humidity.

The results show that the mass is stable over time but that the blocks melt under these conditions, allowing us to set the maximum storage temperature for the product at 25°C. The percentage of pheromone decreases over time until it falls below the accepted specifications after 9 months, but this may be due to the partial melting of the blocks.

According to ICH standards, when a formula is not stable under accelerated ageing conditions because of chemical incompatibility with these conditions, it is possible to carry out a stability study under so-called "intermediate" conditions, i.e. at 30°C and 60% relative humidity, for 12 months. Subsequently, stability studies under intermediate and real conditions will be launched.

However, the good results obtained up to 6 months under accelerated conditions mean that a minimum stability of 2 years can be guaranteed under real-life conditions.

## Claims

1. A method of releasing a semiochemical in an environment by passive diffusion, wherein the method comprises the steps of:
a. Contacting a stick presenting with an alveolar internal structure extending over its longitudinal section with a composition of semiochemical, especially a liquid composition of semiochemical, in particular a semiochemical that is a pheromone or an allomone, where the composition of semiochemical comprises a solvent that is an alcohol or an ester, in particular an alcohol or an ester with a density inferior to 1, a kinematic viscosity inferior or equal to 15 mm²/s at 20°C and/or a dynamic viscosity inferior or equal to 14 mPa/s at 20°C, and which is volatile at room temperature, preferably a solvent which is non-toxic to an animal especially a mammal, in particular is 3-methoxy-3-methyl-1-butanol, and
b. Enabling the stick to be filled by capillary action with the said composition of semiochemical and to release the said composition of semiochemical in the environment in particular in the air, over time.

2. The method according to claim 1, wherein the semiochemical composition is a pheromone composition comprising at least methyl palmitate and methyl oleate, optionally further comprising dimethyl pimelate and dimethyl azelate, in particular is an appeasing pheromone composition comprising at least the following active ingredients: methyl myristate, methyl palmitate, methyl oleate and methyl linoleate, optionally further comprising dimethyl pimelate and dimethyl azelate.

3. The method according to any one of claims 1 to 2, wherein the semiochemical composition is an appeasing pheromone composition which further comprises one or more active ingredient(s), selected from the group of: methyl laurate, methyl pentadecanoate and methyl stearate.

4. The method according to any one of claims 1 to 3, wherein the active ingredients of the semiochemical composition are, when present, found in the semiochemical composition:
a. from 2 to 13% (w/w) for methyl myristate,
b. from 12 to 32% (w/w) for methyl palmitate,
c. from 28 to 69% (w/w) for methyl oleate
d. from 4 to 37% (w/w) for methyl linoleate,
e. from 1 to 6% (w/w) for methyl laurate,
f. from 1 to 6% (w/w) for methyl pentadecanoate,
g. from 4 to 15% (w/w) for methyl stearate,
h. from 5 to 15% (w/w) for dimethyl pimelate, and
i. from 5 to 10% (w/w) for dimethyl azelate,
the sum of active ingredients present in said semiochemical composition totaling 100%, being solubilized within the solvent of the semiochemical composition and the semiochemical composition optionally comprising further excipients.

5. The method according to claim 1 to 4, wherein the stick is made of the stem of a palm tree of the *Calamus* genus wherein the alveolar internal structure extends over the longitudinal section of the stick, in particular over the whole longitudinal section of the stick and in particular is formed by a mature vascular system in said stem, said vascular system presenting a succession of raphide sacs formed by individual xylem cells during plant growth, in particular the palm tree is rattan palm.

6. The method according to claim 1 to 5, wherein the semiochemical composition further comprises an antioxidant, in particular an antioxidant that is Pentaerythrityl Tetra-di-t-butyl Hydroxyhydrocinnamate.

7. The method according to claim 1 to 6, wherein the proportion of solvent within the composition of semiochemical is between 80% (w/w) to 99% (w/w), in particular is between 96% to 99% (w/w), more particulary is between 97% (w/w) and 98% (w/w), especially is 97.1% (w/w) or 97.2% (w/w) or 97.3% (w/w) or 97.4% (w/w) or 97.5% (w/w) or 97.6% (w/w) or 97.7% (w/w) or 97.8% (w/w) or 97.9% (w/w), and, if present, the proportion of antioxidant within the composition of semiochemical is between 0.05% (w/w) and 0.3%(w/w), in particular is 0.1% (w/w).

8. A kit for passive diffusion of a semiochemical, wherein said kit comprises, in particular consists of:
a. One or more sticks wherein each stick presents with an alveolar internal structure extending over the longitudinal section of said stick, in particular the whole longitudinal section of the stick, in particular a stick as defined in claim 5, and
b. A composition of semiochemical especially a liquid composition of semiochemical, in particular a semiochemical that is a pheromone, where the composition of semiochemical comprises a solvent as defined in claim 1, in particular a solvent that is 3-methoxy-3-methyl-1-butanol, in particular a composition as defined in any one of claims 1 to 7.

9. The kit according to claim 8, wherein the kit further comprises a container for holding the composition of semiochemical and the sticks while used , wherein the container is adapted to enable the sticks to be immersed over a part of their length in the composition of semiochemical and to enable release of the semiochemical composition in the environment, especially in the air, by passive diffusion after migration of the semiochemical composition throughout the stick.

10. The kit according to any one of claims 8 to 9, which comprises at least four sticks, in particular two, three, four, five, six, seven or eight sticks, and a container for holding a volume from 20 mL to 200 mL or from 20mL to 130 mL of the composition of semiochemical, in particular a volume of 20, 21, 22, 23, 24, 25, 26, 27, 28, 29, 30, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130 mL, or any range between any of these values.

11. A stick or a set or a kit comprising a plurality of sticks wherein the stick presents with a structure with an alveolar internal structure extending over the longitudinal section of said stick, in particular the whole longitudinal section of the stick wherein the stick is filled with a composition of semiochemical, especially a liquid composition of semiochemical, in particular a semiochemical that is a pheromone, where the composition of semiochemical comprises a solvent as defined in claim 1 in particular a solvent that is 3-methoxy-3-methyl-1-butanol, in particular a composition as defined in any one of claims 1 to 7.

12. The stick or the set or the kit comprising a plurality of sticks according to claim 11, wherein the stick is as defined in claim 5.

13. Use of the kit of any one of claims 8 to 10, or of the stick or the set of any one of claims 11 to 12, for releasing a semiochemical in the environment, in particular wherein all the active ingredients of the semiochemical are released during a period of time of at least 20 days, especially where the active ingredients of the semiochemical with less carbons in their molecular formula are respectively more abundant in the released semiochemical signature than the active ingredients of the semiochemical with more carbons in their molecular formula.
